# EUROPÄISCHE PATENTSCHRIFT

(11) **EP 1 781 963 B1**
(45) Veröffentlichungstag und Bekanntmachung des Hinweises auf die Patenterteilung: **19.03.2008**
(21) Anmeldenummer: 05776254.4
(22) Anmeldetag: 08.08.2005
(51) Int. Cl.: F16H 3/66

(54) **MEHRSTUFEN-AUTOMATGETRIEBE**
STEPPED AUTOMATIC TRANSMISSION
BOITE DE VITESSES AUTOMATIQUE A PLUSIEURS ETAGES

(30) Priorität: 06.08.2004 DE 102004038294
(43) Veröffentlichungstag der Anmeldung: 09.05.2007
(73) Patentinhaber: ZF FRIEDRICHSHAFEN AG, 88038 Friedrichshafen (DE)
(72) Erfinder: BAUKNECHT, Gert, 88048 Friedrichshafen (DE); ZIEMER, Peter, 88069 Tettnang (DE); GIERLING, Armin, 88085 Langenargen (DE)
(86) Internationale Anmeldenummer: PCT/EP2005/008589
(87) Internationale Veröffentlichungsnummer: WO 2006/015840

(56) Entgegenhaltungen:
- US-A1- 2002 142 880
- US-A1- 2002 183 154
- US-A1- 2004 116 238
- US-B1- 6 634 980
- PATENT ABSTRACTS OF JAPAN Bd. 2003, Nr. 02, 5. Februar 2003 (2003-02-05) & JP 2002 295609 A (AISIN AW CO LTD), 9. Oktober 2002 (2002-10-09)

## Beschreibung

Die Erfindung betrifft ein Mehrstufen-Automatgetriebe gemäß dem Oberbegriff des Patentanspruchs 1.

Dokument US 2004 0 116 238 wird als nächstliegender Stand der Technik angesehen.

Automatgetriebe mit mehreren, ohne Gruppenschaltung schaltbaren Gängen sind vielfältig bekannt. Aus der US 5,106,352 ist ein 6-Gang-Automatgetriebe bekannt, bei dem ein einfacher Vorschalt-Planetenradsatz koaxial zu einem als Ravigneaux-Planetenradsatz ausgebildeten Zweisteg-Vierwellen-Hauptradsatz angeordnet ist und fünf Schaltelemente vorgesehen sind. Dabei ist der Vorschalt-Planetenradsatz als nicht schaltbare Reduzierstufe mit an einem Getriebegehäuse festgesetztem Sonnenrad ausgeführt, deren Ausgangsdrehzahl kleiner ist als die Drehzahl einer Antriebswelle des Automatgetriebes und über zwei Kupplungen auf zwei unterschiedliche Elemente des Hauptradsatzes übertragbar ist, wobei eines dieser beiden Elemente zusätzlich über eine erste Bremse an dem Getriebegehäuse festsetzbar ist. Dieses Eingangselement des Hauptradsatzes, welches wahlweise mit dem Ausgangselement des Vorschaltradsatzes verbindbar oder am Getriebegehäuse festsetzbar ist, sei im folgenden mit "erstes Eingangselement des Hauptradsatzes" bezeichnet. Entsprechend sei das andere Eingangselement des Hauptradsatzes, das auch mit dem Ausgangselement des Vorschalt-Planetenradsatz verbindbar ist, im folgenden mit "zweites Eingangselement des Hauptradsatzes," bezeichnet. Die Drehzahl der Antriebswelle ist über eine dritte Kupplung auf ein drittes Eingangselement des Hauptradsatzes übertragbar, wobei dieses dritte Element über eine zweite Bremse auch an dem Getriebegehäuse festsetzbar ist. Ein viertes Element des Hauptradsatzes bildet das Ausgangselement des Hauptradsatzes und ist ausschließlich fest mit einer Abtriebswelle des Automatgetriebes verbunden.

Mehrere alternative Bauteilanordnungen zu diesem in der US 5,106,352 beschriebenen Automatgetriebe sind beispielsweise aus der US 6,139,463 und der DE 102 10 348 A1 bekannt.

In der noch nicht veröffentlichten Deutschen Patentanmeldung DE 10221095.0 der Anmelderin ist eine Weiterentwicklung des in der US 5,906,352 bekannten 6-Gang-Automatgetriebes zu einem 7-Gang-Automatgetriebe beschrieben. Gegenüber der US 5,106,352 ist der Vorschalt-Planetenradsatz als einfacher, schaltbarer Plus-Planetenradsatz in Doppelplanetenbauweise ausgeführt und ein zusätzliches sechstes Schaltelement hinzugefügt. Ein Steg des Vorschalt-Planetenradsatzes bildet dabei das fest mit der Antriebswelle des Automatgetriebes verbundene Eingangselement des Vorschalt-Planetenradsatzes. Ein Sonnenrad des Vorschalt-Planetenradsatzes ist über das gegenüber der US 5,106,352 zusätzliche sechste Schaltelement an einem Getriebegehäuse festsetzbar. Entsprechend bildet ein Hohlrad des Vorschalt-Planetenradsatzes das mit zwei unterschiedlichen Elementen des Hauptradsatzes verbindbare Ausgangselement des Vorschalt-Planetenradsatzes und rotiert mit einer Drehzahl kleiner oder gleich der Drehzahl der Antriebswelle. Für diese kinematische Kopplung der einzelnen Radsatzelemente und Schaltelemente offenbart die DE 10221095.0 zahlreiche verschiedene Anordnungsvarianten der Getriebekomponenten relativ zueinander.

In der JP 2001/182785 A ist eine Weiterentwicklung des aus der US 5,106,352 bekannten 6-Gang-Automatgetriebes zu einem 8-Gang-Automatgetriebe beschrieben. Gegenüber der US 5,106,352 ist dabei der Vorschalt-Planetenradsatz als einfacher, nicht schaltbarer Plus-Planetenradsatz in Doppelplanetenbauweise ausgeführt und ein zusätzliches sechstes Schaltelement hinzugefügt. Ein Steg des Vorschalt-Planetenradsatzes bildet dabei das fest mit der Antriebswelle des Automatgetriebes verbundene Eingangselement des Vorschalt-Planetenradsatzes. Ein Sonnenrad des Vorschalt-Planetenradsatzes ist an einem Getriebegehäuse festgesetzt. Entsprechend bildet ein Hohlrad des Vorschalt-Planetenradsatzes das mit zwei unterschiedlichen Elementen des Hauptradsatzes verbindbare Ausgangselement des Vorschalt-Planetenradsatzes und rotiert stets mit einer Drehzahl kleiner der Drehzahl der Antriebswelle. Über das gegenüber der US 5,106,352 zusätzliche sechste Schaltelement ist das - wahlweise mit dem Ausgangselement des Vorschalt-Planetenradsatzes verbindbare oder am Getriebegehäuse festsetzbare - erste Eingangselement des Hauptradsatzes nun wahlweise auch mit der Antriebswelle des Getriebes verbindbar. Hinsichtlich der räumlichen Anordnung der Schaltelemente relativ zueinander und relativ zu den Planetenradsätzen ist in der JP 2001/182785 A vorgeschlagen, die beiden Schaltelemente, über die das erste und zweite Eingangselement des Hauptradsatzes mit dem Hohlrad des Vorschalt-Planetenradsatzes verbindbar sind, zusammen mit dem gegenüber der US 5,106,352 zusätzliche sechsten Schaltelement als eine Baugruppe axial zwischen dem Vorschalt-Planetenradsatz und dem Hauptradsatz anzuordnen. Dabei ist das bereits aus der US 5,106,352 bekannte (fünfte) Schaltelement, über welches die Antriebswelle mit dem dritten Eingangselement des Hauptradsatzes verbindbar ist, auf der dieser Baugruppe gegenüberliegenden Seite des Hauptradsatzes angeordnet, also auch auf der dem Vorschalt-Planetenradsatz abgewandten Seite des Hauptradsatzes. Weiterhin lehrt die JP 2001/182785 A, das gegenüber der US 5,106,352 zusätzliche sechste Schaltelement innerhalb der genannten Baugruppe räumlich gesehen radial über dem Schaltelement anzuordnen, über welches erste Eingangselement des Hauptradsatzes mit dem Hohlrad des Vorschaltradsatzes verbindbar ist.

In der noch nicht veröffentlichten Deutschen Patentanmeldung DE 10338565.8 der Anmelderin wird eine verbesserte Bauteilanordnung des aus der JP 2001/182785 A bekannten 8-Gang-Automatgetriebes beschrieben. Um gegenüber der zugrunde liegenden Basiskonstruktion des 6-Gang-Automatgetriebe gemäß US 5,106,352 nur vergleichsweise wenige konstruktive Änderungen vornehmen zu müssen, wird in der DE 10318565.8 vorgeschlagen, die aus dem 6-Gang-Automatgetriebe bekannte räumliche Lage von Vorschalt-Planetenradsatz, Ravigneaux-Hauptradsatz und den ersten fünf Schaltelementen im Getriebegehäuse relativ zueinander beizubehalten und das gegenüber der US 5,106,352 zusätzliche sechste Schaltelementes in dem Getriebegehäuse auf der Seite des Getriebes anzuordnen, die einem Antriebsmotor zugewandt ist, räumlich gesehen zwischen einer antriebsseitigen Getriebegehäusewand und ersten Schaltelement, über welches das Ausgangselement des Vorschalt-Planeteradsatzes mit dem zweiten Eingangselement des Hauptradsatzes verbindbar ist, räumlich gesehen aber auch zwischen der genannten antriebsseitigen Getriebegehäusewand und dem Vorschalt-Planetenradsatz. Das gegenüber der US 5,106,352 zusätzliche sechste Schaltelement ist also auf der dem Hauptradsatz abgewandten Seite des Vorschalt-Planetenradsatzes angeordnet.

Der vorliegenden Erfindung liegt die Aufgabe zugrunde, das in der JP 2001/182785 A bzw. der DE 10318565.8 angegebene Mehrstufen-Automatgetriebe mit acht Vorwärtsgängen weiterzuentwickeln und alternative Bauteilanordnungen für die Planetenradsätze und die sechs Schaltelemente für zu schaffen.

Diese Aufgabe wird durch ein die Merkmale des Patentanspruchs 1 aufweisendes Mehrstufen-Automatgetriebe gelöst. Vorteilhafte Ausgestaltungen und Weiterbildungen der Erfindung ergeben sich aus den Unteransprüchen.

Die Erfindung geht aus von dem in der JP 2001/182785 A bzw. der noch nicht veröffentlichten Deutschen Patentanmeldung DE 10318565.8 der Anmelderin beschriebenen Getriebeschema für ein Mehrstufen-Automatgetriebe mit zumindest acht Vorwärtsgängen, umfassend eine Antriebswelle, eine Abtriebswelle, einen als Doppelplanetenradsatz ausgebildeten Vorschaltradsatz, einen als gekoppelten Planetenradsatz mit mindestens drei nicht gekoppelten Eingangselementen und einem Ausgangselement ausgebildeten Hauptradsatz, sowie mindestens sechs Schaltelemente. Durch selektives Schließen von jeweils zwei der Schaltelemente ist eine Drehzahl der Antriebswelle derart auf die Abtriebswelle übertragbar, dass zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird. Die gesamte Offenbarung der noch nicht vorveröffentlichten Deutschen Patentanmeldung DE 10318565.8 der Anmelderin soll ausdrücklich auch Teil der Offenbarung der vorliegenden Erfindung sein.

Ein Eingangselement des Vorschaltradsatzes ist ständig mit der Antriebswelle verbunden. Ein Ausgangselement des Vorschaltradsatzes rotiert stets mit einer Drehzahl kleiner der Drehzahl der Antriebswelle. Ein drittes Element des Vorschaltradsatzes ist an einem Getriebegehäuse festgesetzt. Die Ausgangsdrehzahl des Vorschaltradsatzes ist über zwei Schaltelemente auf zwei unterschiedliche Eingangselemente der Hauptradsatzes übertragbar. Die Drehzahl der Antriebswelle ist über zwei andere Schaltelemente ebenfalls auf zwei verschiedene Eingangselemente des Hauptradsatzes übertragbar. Ein Ausgangselement des Hauptradsatzes ist ständig mit der Abtriebswelle verbunden.

In einer bevorzugten Ausgestaltung dieses Getriebeschemas als 8-Gang-Automatgetriebe bildet ein (gekoppelter) Steg des Vorschaltradsatzes dessen stets mit der Antriebswelle verbundenes Eingangselement, ein Hohlrad des Vorschaltradsatzes dessen mit zwei verschiedenen Eingangselementen des Hauptradsatzes verbindbares Ausgangselement, und ein Sonnenrad des Vorschaltradsatzes dessen am Getriebegehäuse festgesetztes drittes Element. Vorschalt- und Hauptradsatz sind koaxial zueinander angeordnet. Der Hauptradsatz kann als-Zweisteg-Vierwellen-Getriebe in Bauform eines "Ravigneaux-Planetenradsatzes" ausgeführt sein, mit einem ersten Sonnenrad als erstes Eingangselement des Hauptradsatzes, welches wahlweise mit dem Hohlrad des Vorschaltradsatzes oder der Antriebswelle verbindbar oder am Getriebegehäuse festsetzbar ist, mit einem zweiten Sonnenrad als zweites Eingangselement des Hauptradsatzes, welches mit dem Hohlrad des Vorschaltradsatzes verbindbar ist, mit einem (gekoppelten) Steg als drittes Eingangselement des Hauptradsatzes, welcher wahlweise mit der Antriebswelle verbindbar oder am Getriebegehäuse festsetzbar ist, sowie mit einem Hohlrad als Ausgangselement des Hauptradsatzes, welches stets mit der Abtriebswelle verbunden ist. In diesem Fall ist
- ein Eingangselement des ersten Schaltelementes mit dem Ausgangselement des Vorschaltradsatzes verbunden,
- ein Ausgangselement des ersten Schaltelementes mit dem zweiten Eingangselement des Hauptradsatzes verbunden,
- ein Eingangselement des zweiten Schaltelementes mit dem Ausgangselement des Vorschaltradsatzes verbunden,
- ein Ausgangselement des zweiten Schaltelementes mit dem ersten Eingangselement des Hauptradsatzes verbunden,
- ein Eingangselement des dritten Schaltelementes mit dem Getriebegehäuse verbunden,
- ein Ausgangselement des dritten Schaltelementes mit dem ersten Eingangselement des Hauptradsatzes verbunden,
- ein Eingangselement des vierten Schaltelementes mit dem Getriebegehäuse verbunden,
- ein Ausgangselement des vierten Schaltelementes mit dem dritten Eingangselement des Hauptradsatzes verbunden,
- ein Eingangselement des fünften Schaltelementes mit der Antriebswelle verbunden,
- ein Ausgangselement des fünften Schaltelementes mit dem dritten Eingangselement des Hauptradsatzes verbunden,
- ein Eingangselement des sechsten Schaltelementes mit der Antriebswelle verbunden,
- ein Ausgangselement des sechsten Schaltelementes mit dem ersten Eingangselement des Hauptradsatzes verbunden, sowie
- das Ausgangselement des Hauptradsatzes ständig mit der Abtriebswelle verbunden.

Der Hauptradsatz kann aber auch als Zweisteg-Vierwellen-Getriebe mit zwei gekoppelten Einsteg-Planetenradsätzen ausgebildet sein, wobei beispielsweise das erstes Eingangselement dieses Hauptradsatzes durch ein mit einem zweiten Steg fest verbundenes erstes Sonnenrad gebildet wird, welches wahlweise mit dem Hohlrad des Vorschaltradsatzes oder der Antriebswelle verbindbar oder am Getriebegehäuse festsetzbar ist, und wobei das zweite Eingangselement dieses Hauptradsatzes durch ein zweites Sonnenrad gebildet wird, welches mit dem Hohlrad des Vorschaltradsatzes verbindbar ist, und wobei ein erster Steg und ein zweites Hohlrad des Hauptradsatzes miteinander gekoppelt sind und als drittes Eingangselement des Hauptradsatzes wahlweise mit der Antriebswelle verbindbar oder an dem Getriebegehäuse festsetzbar ist, und wobei ein erstes Hohlrad des Hauptradsatzes als Ausgangselement dieses Hauptradsatzes stets mit der Abtriebswelle verbunden ist. In diesem Fall entspricht die Anbindung der Ein- und Ausgangselemente der sechs Schaltelemente an die drei Eingangselemente des Hauptradsatzes der zuvor am Beispiel des Ravigneaux-Hauptradsatzes beschriebenen Anbindung.

Der Hauptradsatz kann beispielsweise auch als "Dreisteg-Fünfwellen-Getriebe" mit drei gekoppelten Einsteg-Planetenradsätzen ausgebildet sein, oder auch als "reduziertes Dreisteg-Fünfwellen-Getriebe" mit drei gekoppelten Einsteg-Planetenradsätzen, bei denen zumindest zwei dieser Einzel-Planetenradsätze über einen gemeinsamen Steg und ein weiteres gemeinsames Zentralrad (also entweder über deren Sonnenräder oder über deren Hohlräder) miteinander gekoppelt ("reduziert") sind. Analog dazu kann der Hauptradsatz beispielsweise auch als "reduziertes Viersteg-Sechswellen-Getriebe ausgebildet sein, bei dem die dabei im Prinzip vorhandenen vier miteinander gekoppelten Einzel-Planetenradsätze derart zusammengefasst sind, dass der Hauptradsatz nur noch zwei Stege aufweist. Im Unterschied zu der Anbindung der sechs Schaltelemente an die Eingangselemente eines Hauptradsatzes vom Typ "Zweisteg-Vierwellen-Planetengetriebe bieten sich hinsichtlich der kinematischen Anbindung der Ein- und Ausgangselemente des dritten und sechsten Schaltelementes an die einzelnen Hauptradsatz-Elemente verschiedene Möglichkeiten, wobei dann gilt:
- das Eingangselement des dritten Schaltelementes ist mit dem Getriebegehäuse verbunden,
- das Ausgangselement des dritten Schaltelementes ist mit dem ersten Eingangselement des Hauptradsatzes oder einem in einem Drehzahlplan zu diesem ersten Eingangselement benachbarten Eingangselement des Hauptradsatzes verbunden,
- das Eingangselement des sechsten Schaltelementes ist mit der Antriebswelle verbunden,
- das Ausgangselement des sechsten Schaltelementes ist mit dem ersten Eingangselement des Hauptradsatzes oder einem in dem Drehzahlplan zu diesem ersten Eingangselement benachbarten Eingangselement des Hauptradsatzes verbunden.

In allen genannten Ausführungsvarianten sind im ersten Vorwärtsgang das erste und vierte Schaltelement, im zweiten Vorwärtsgang das erste und dritte Schaltelement, im dritten Vorwärtsgang das erste und zweite Schaltelement, im vierten Vorwärtsgang das erste und sechste Schaltelement, im fünften Vorwärtsgang das erste und fünfte Schaltelement, im sechsten Vorwärtsgang das fünfte und sechste Schaltelement, im siebten Vorwärtsgang das zweite und fünfte Schaltelement und im achten Vorwärtsgang das dritte und fünfte Schaltelement geschlossen. Im Rückwärtsgang sind das vierte Schaltelement und zusätzlich entweder das zweite oder das sechste Schaltelement geschlossen.

Gemäß der Erfindung wird nun vorgeschlagen, das sechste Schaltelement, über welches das erste Eingangselement des Hauptradsatzes mit der Antriebswelle des Getriebes verbindbar ist und das beispielsweise als Lamellenkupplung ausgebildet ist, nunmehr räumlich gesehen zumindest überwiegend auf der dem Vorschaltradsatz gegenüberliegenden Seite des Hauptradsatzes anzuordnen, und das dritte Schaltelement, über welches das Eingangselement des Hauptradsatzes am Getriebegehäuse festsetzbar ist und das beispielsweise als Lamellenbremse oder als Bandbremse ausgebildet ist, zumindest teilweise auf der gleichen Seite des Hauptradsatzes anzuordnen, an der auch das sechste Schaltelement angeordnet ist, wobei Vorschaltradsatz und Hauptradsatz koaxial zueinander angeordnet sind. Alternativ kann das dritte Schaltelement auch räumlich gesehen zumindest teilweise radial über dem Hauptradsatz angeordnet sein. Diese getriebebaulängensparende Alternative ist insbesondere dann günstig, wenn das dritte Schaltelement als Bandbremse ausgebildet ist.

Vorzugsweise ist das sechste Schaltelement dabei nahe einer Stirnseite des Getriebegehäuses angeordnet, die wahlweise einem mit der Antriebswelle des Getriebes wirkverbunden Antriebsmotor zugewandt ist oder auf der diesem Antriebsmotor gegenüberliegenden Getriebeseite liegt. In einer vorteilhaften Ausgestaltung dieser Anordnung ist das dritte Schaltelement als Lamellenbremse ausgebildet mit einem Lamellenpaket, das näher am Hauptradsatz und/oder näher am Vorschaltradsatz angeordnet ist als das Lamellenpaket des als Lamellenkupplung ausgebildeten sechsten Schaltelementes, wobei das Lamellenpaket des sechsten Schaltelementes je nach den vorgegebenen Einbauverhältnissen axial neben oder radial unterhalb des Lamellenpaketes des dritten Schaltelementes angeordnet sein kann.

Aus dieser erfindungsgemäßen Anordnung des dritten und sechsten Schaltelementes ergibt sich, dass der koaxial zum Vorschaltradsatz angeordnete mehrgliedrige Hauptradsatz gegenüber dem Stand der Technik der DE 10318565 innerhalb des Getriebegehäuses relativ zum Vorschaltradsatz gesehen gespiegelt angeordnet ist, nunmehr also das zweite Eingangselement des Hauptradsatzes näher am Vorschaltradsatz angeordnet ist als das zweite Eingangselement des Hauptradsatzes.

Da die mit dem Abtriebselement des Hauptradsatzes wirkverbundene Abtriebswelle des Getriebes in Getriebelängsrichtung gesehen nunmehr in einem mehr oder weniger axial mittigen Abschnitt des Getriebegehäuses axial zwischen dem Vorschaltradsatz und dem dritten bzw. sechsten Schaltelement angebunden ist, eignet sich eine derartige Anordnung in besonders vorteilhafter Weise für einen Antriebsstrang, bei dem der Abtrieb achsparallel oder winklig zum Antrieb angeordnet ist, beispielsweise für ein Kraftfahrzeug mit "Front-Quer-Antrieb" (Frontantrieb mit quer zur Fahrzeuglängsachse angeordnetem Antriebsmotor) oder "Front-Längs-Antrieb" (Frontantrieb mit in Fahrzeuglängsachse angeordnetem Antriebsmotor). Die Antriebswelle des Getriebes durchgreift hierbei zumindest den Hauptradsatz in axialer Richtung zentrisch vollständig. Ist der mit der Antriebswelle des Getriebes wirkverbundene Antriebsmotor des Getriebes auf der Seite des Vorschaltradsatzes angeordnet, die dem Hauptradsatz gegenüber liegt, so durchgreift die Antriebswelle sowohl den Vorschaltradsatz als auch den Hauptradsatz in axialer Richtung zentrisch vollständig.

In einer weiteren vorteilhaften Ausgestaltung der Erfindung ist eine Servoeinrichtung des sechsten Schaltelementes zur Betätigung dessen Lamellenpaketes nahe an der genannten Stirnseite des Getriebegehäuses bzw. nahe an einem stirnseitigen, mit dem Getriebegehäuse verdrehfest verbundenen Gehäusedeckel angeordnet und betätigt das Lamellenpaket des sechsten Schaltelementes beim Schließen axial in Richtung Vorschaltradsatz bzw. axial in Richtung Hauptradsatz. In einer vorteilhaften konstruktiven Ausbildung ist diese Servoeinrichtung räumlich gesehen innerhalb eines als Lamellenträger ausgebildeten Eingangselement des sechsten Schaltelementes angeordnet und rotiert stets mit der Drehzahl der Antriebswelle des Getriebes. Eine Druckmittel-Zuführung zu einem Druckraum der Servoeinrichtung des sechsten Schaltelementes und eine Schmiermittel-Zuführung zu einem Druckausgleichsraum eines dynamischen Druckausgleichs des rotierenden Druckraums der Servoeinrichtung des sechsten Schaltelementes kann konstruktiv vergleichsweise einfach realisiert werden, indem das Eingangselement des sechsten Schaltelementes an einer getriebegehäusefesten Nabe, die sich ausgehend von der genannten Stirnseite des Getriebegehäuses bzw. ausgehend von dem genannten stirnseitigen Gehäusedeckel im Innenraum des Getriebegehäuses axial in Richtung des Hauptradsatzes erstreckt, verdrehbar gelagert ist und die Druckmittel- und Schmiermittel-Zuführung abschnittsweise innerhalb dieser Nabe verlaufen. Selbstverständlich können die genannte Nabe und das Getriebegehäuse bzw. der Gehäusedeckel einstückig ausgeführt sein. Zur Vormontage einer Baugruppe, die alle wesentliche Elemente des sechsten Schaltelementes enthält, ist es günstig, wenn das die genannte Servoeinrichtung des sechsten Schaltelementes aufnehmende Eingangselement des sechsten Schaltelementes als Außenlamellenträger ausgebildet ist.

In einer weiteren Ausgestaltung der Erfindung wird hinsichtlich der räumlichen Anordnung des vierten Schaltelementes, über welches das dritte Eingangselement des Hauptradsatzes am Getriebegehäuse festsetzbar ist und das beispielsweise als Lamellenbremse oder als Bandbremse ausgebildet ist, vorgeschlagen, dieses vierte Schaltelement zumindest teilweise auf der dem Vorschaltradsatz abgewandten Seite des Hauptradsatzes anzuordnen, insbesondere unmittelbar angrenzend an den Hauptradsatz. Somit ist das vierte Schaltelement näher am Vorschaltradsatz angeordnet als das dritte (und sechste) Schaltelement.

Hinsichtlich der räumlichen Anordnung und Betätigungsrichtung des fünften Schaltelementes, über welches das dritte Eingangselement des Hauptradsatzes mit der Antriebswelle des Getriebes verbindbar ist und das beispielsweise als Lamellenkupplung ausgebildet ist, wird vorgeschlagen, dieses fünfte Schaltelement entweder auch auf der Seite des Hauptradsatzes anzuordnen, an der auch das sechste Schaltelement angeordnet ist, oder aber auf der dem sechsten Schaltelement gegenüberliegenden Seite des Hauptradsatzes. In beiden Fällen betätigt eine Servoeinrichtung des fünften Schaltelementes ein ihr zugeordnetes Lamellenpaket beim Schließen axial in Richtung Hauptradsatz.

Ist das fünfte Schaltelement auf der Seite des Hauptradsatzes angeordnet, auf der auch das sechsten Schaltelement angeordnet ist, also auf der dem Vorschaltradsatz abgewandten Seite des Hauptradsatzes, so bilden das fünfte und sechste Schaltelement zweckmäßigerweise eine vormontierbare Baugruppe, umfassend einen gemeinsamen Lamellenträger, der mit der Antriebswelle des Getriebes verbunden ist, die Lamellenpakete dieser beiden Kupplungen, sowie die Servoeinrichtungen dieser beiden Kupplungen. Dabei kann das Lamellenpaket dieses fünften Schaltelementes räumlich gesehen wahlweise radial über oder radial unter dem Lamellenpaket des sechsten Schaltelementes angeordnet sein. Entsprechend ist der für das fünfte und sechste Schaltelement gemeinsame Lamellenträger entweder als Innenlamellenträger für das fünfte Schaltelement und gleichzeitig als Außenlamellenträger für das sechste Schaltelement ausgebildet, oder aber als Innenlamellenträger für das sechste Schaltelement und gleichzeitig als Außenlamellenträger für das fünfte Schaltelement. In beiden Fällen sind die Servoeinrichtungen des fünften und sechsten Schaltelementes nur durch eine Mantelfläche dieses gemeinsamen Lamellenträgers voneinander getrennt. Vorzugsweise sind auch die Betätigungsrichtungen dieser beiden Servoeinrichtungen beim Schließen der jeweils zugeordneten Kupplung gleich, nämlich axial in Richtung Hauptradsatz. Eine Druckmittel-Zuführung zu den Druckräumen dieser beiden Servoeinrichtungen und eine Schmiermittel-Zuführung zu den Druckausgleichräumen zum dynamischen Druckausgleich der rotierenden Druckräume beider Servoeinrichtung können konstruktiv vergleichsweise einfach realisiert werden, indem der für das fünfte und sechste Schaltelement gemeinsame Lamellenträger an oder in der angrenzenden Getriebegehäusewand verdrehbar gelagert ist und die Druckmittel- und Schmiermittel-Zuführungen abschnittsweise innerhalb dieser Getriebegehäusewand verlaufen.

Ist das fünfte Schaltelement hingegen auf der Seite des Hauptradsatzes angeordnet, die dem sechsten Schaltelement gegenüber liegt, so das Lamellenpaket dieses fünften Schaltelementes räumlich gesehen vorzugsweise in einem Bereich axial zwischen Vorschalt- und Hauptradsatz angeordnet. Die Servoeinrichtung des fünften Schaltelementes zum Betätigen dieses Lamellenpaketes kann dabei wahlweise ebenfalls in einem Bereich axial zwischen Vorschalt- und Hauptradsatz angeordnet sein, oder aber zumindest überwiegend auf der dem Hauptradsatz abgewandten Seite des Vorschaltradsatzes, dann umfassend einen auf das genannte Lamellenpaket wirkenden Kolben, der den Vorschaltradsatz in axialer Richtung radial übergreift. Selbstverständlich kann an dieser Stelle auch ein den Vorschaltradsatz in axialer Richtung radial übergreifender Betätigungsstempel oder umfangsverteilt mehrere Betätigungsfinger als Wirkverbindung zwischen dem Kolben der Servoeinrichtung des fünften Schaltelementes und dem ihm zugeordneten Lamellenpaket vorgesehen sein. Sind sowohl das Lamellenpaket als auch die Servoeinrichtung des fünften Schaltelementes räumlich gesehen axial zwischen Vorschalt- und Hauptradsatz angeordnet, so ist es zur Erzielung eins kompakten Getriebeaufbaus zweckmäßig, wenn das fünfte Schaltelement dann unmittelbar an den Vorschaltradsatz angrenzt und ein Lamellenpaket des ersten und/oder ein Lamellenpaket des zweiten Schaltelementes räumlich gesehen in einem Bereich radial über dem fünften Schaltelement angeordnet sind.

Die Erfindung wird im folgenden anhand der Figuren näher erläutert, wobei die Bezugszeichen vergleichbarer Bauelemente in allen Figuren auch gleichartig bezeichnet sind. Es zeigen:
- Fig. 1A ein Getriebeschema gemäß dem gattungsgemäßen Stand der Technik;
- Fig. 1B ein Schaltschema des Getriebes gemäß Fig. 1A;
- Fig. 1C ein Drehzahlplan des Getriebes gemäß Fig. 1A;
- Fig. 2 ein beispielhaftes erstes erfindungsgemäßes Getriebeschema, mit nicht koaxialer Anordnung von An- und Abtrieb des Getriebes;
- Fig. 3 ein beispielhaftes zweites erfindungsgemäßes Getriebeschema mit einem gegenüber Fig. 2 modifizierten Hauptradsatz;
- Fig. 4 ein beispielhaftes drittes erfindungsgemäßes Getriebeschema mit einem gegenüber Fig. 2 modifizierten Hauptradsatz und einer modifizierten Schaltelement-Anordnung ;
- Fig. 5A ein beispielhaftes viertes erfindungsgemäßes Getriebeschema mit einer gegenüber Fig. 4 modifizierten Ausgestaltung des Hauptradsatzes Schaltelement-Anordnung;
- Fig. 5B ein Drehzahlplan des Getriebes gemäß Fig. 5A;
- Fig. 5C ein Drehzahlplan eines Getriebe mit gegenüber Fig. 5A modifiziertem Hauptradsatz;
- Fig. 6 ein beispielhaftes fünftes erfindungsgemäßes Getriebeschema mit einer gegenüber Fig. 4 modifizierten Schaltelement-Anordnung;
- Fig. 7 ein beispielhaftes sechstes erfindungsgemäßes Getriebeschema mit einem gegenüber Fig. 6 modifizierten Hauptradsatz;
- Fig. 8 ein beispielhaftes siebtes erfindungsgemäßes Getriebeschema mit einer gegenüber Fig. 6 modifizierten Schaltelement-Anordnung und
- Fig. 9 ein beispielhaftes achtes erfindungsgemäßes Getriebeschema mit einem gegenüber Fig. 8 modifizierten Hauptradsatz.

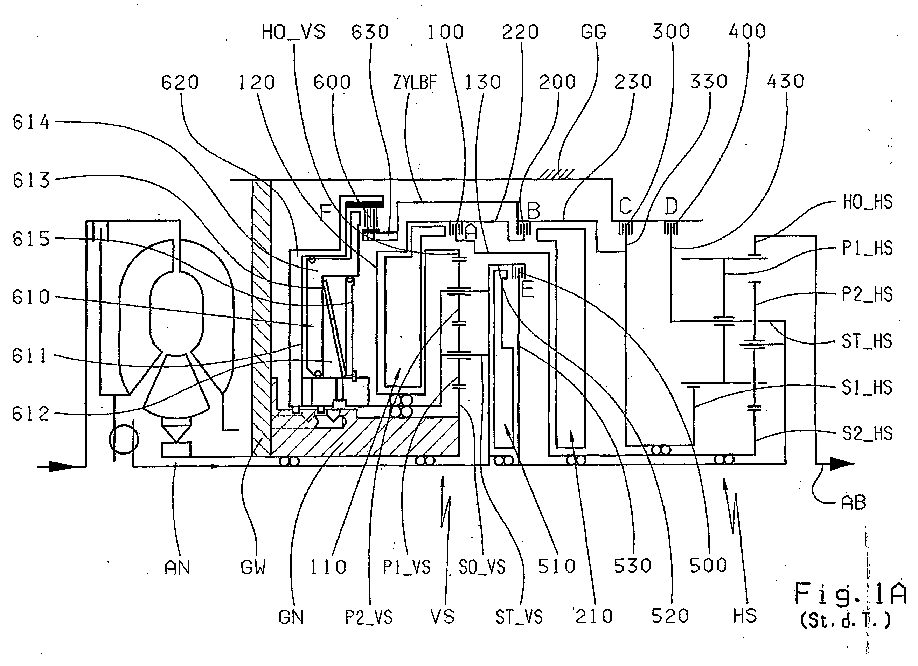

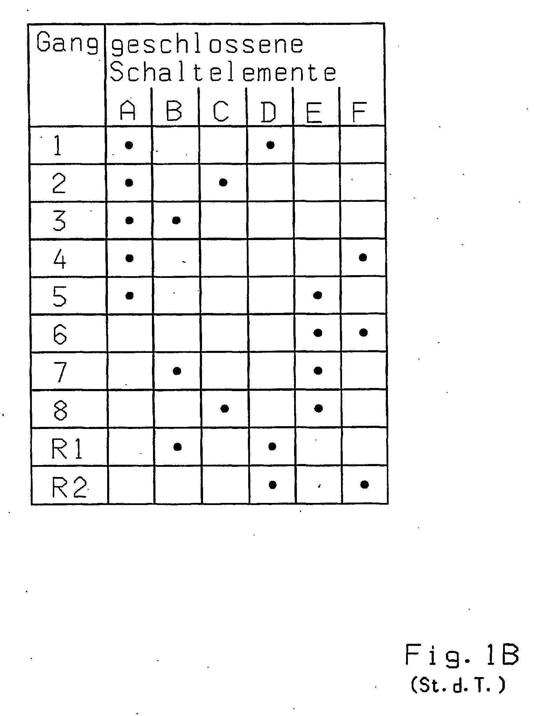

Zum besseren Verständnis wird zunächst der der Erfindung zugrundeliegende Stand der Technik erläutert. Fig. 1A zeigt dabei das Getriebeschema des gattungsgemäßen Standes der Technik gemäß DE 10318565.8, Fig. 1B das entsprechende Schaltschema. In Fig. 1A ist mit AN eine Antriebswelle des Automatgetriebes bezeichnet, die mit einem (nicht dargestellten) Antriebsmotor des Automatgetriebes wirkverbunden ist, im dargestellten Beispiel über einen Drehmomentwandler mit Torsionsdämpfer und Wandlerüberbrückungskupplung. Mit AB ist eine koaxial zur Antriebswelle AN angeordnete Abtriebswelle des Automatgetriebes bezeichnet, die mit mindestens einer Antriebsachse des Kraftfahrzeugs wirkverbunden ist. Selbstverständlich könnte anstelle des Drehmomentwandlers auch eine Reibkupplung als Anfahrelement des Automatgetriebes zwischen Antriebsmotor und Automatgetriebe angeordnet sein. Auch könnte der Antriebsmotor nur über einen einfachen Torsionsdämpfer oder ein Zweimassenschwungrad oder eine starre Welle mit der Antriebswelle AN des Getriebes verbunden sein, wobei in diesem Fall ein innerhalb des Automatgetriebes angeordnetes Reibschaltelement als Anfahrelement des Getriebes ausgebildet sein muß.

Das Automatgetriebe weist einen Vorschaltradsatz VS und einen koaxial neben (aber nicht unmittelbar neben) diesem Vorschaltradsatz VS angeordneten Hauptradsatz HS auf. Der Vorschaltradsatz VS ist als Plus-Planetenradsatz in Doppelplanetenbauweise ausgeführt, mit einem Hohlrad HO_VS, mit einem Sonnenrad SO_VS, sowie mit einem aus zwei Einzelstegen gebildeten Steg ST_VS, an dem innere Planetenräder P1_VS, die mit dem Sonnenrad SO_VS kämmen, und äußere Planetenräder P2_VS, die mit den inneren Planetenrädern P1_VS und dem Hohlrad HO_VS kämmen, verdrehbar gelagert sind. Dabei arbeitet dieser Vorschaltradsatz VS als nicht schaltbare Reduzierstufe und erzeugt eine Ausgangsdrehzahl, die vom Betrag her kleiner ist als eine Eingangsdrehzahl der Antriebswelle AN des Automatgetriebes. Hierzu ist das Sonnenrad SO_VS des Vorschaltradsatzes VS an einem Getriebegehäuse GG festgesetzt und der Steg ST_VS ständig mit der Antriebswelle AN verbunden. Das Hohlrad HO_VS bildet also das Ausgangselement des Vorschaltradsatzes VS und ist über zwei Schaltelemente A, B mit einzelnen Eingangselementen des Hauptradsatzes HS verbindbar.

Der Hauptradsatz HS ist als gekoppeltes Zweisteg-Vierwellen-Planetengetriebe ausgebildet, mit drei nicht miteinander gekoppelten Eingangselementen und einem Ausgangselement, in Bauform eines Ravigneaux-Radsatzes mit zwei Sonnenrädern S1_HS und S2_HS, einem Hohlrad HO_HS sowie einem gekoppelten Steg ST_HS, an dem lange Planetenräder P1_HS, die mit dem ersten Sonnenrad S1_HS und dem Hohlrad HO_HS kämmen, und kurze Planetenräder P2_HS, die mit dem zweiten Sonnenrad S2_HS und den langen Planetenrädern P1_HS kämmen, verdrehbar gelagert sind. Dabei bildet das erste Sonnenrad S1_HS das erste Eingangselement des Hauptradsatzes HS, das zweite Sonnenrad S2_HS das zweite Eingangselement des Hauptradsatzes HS, der gekoppelte Steg ST_HS das dritte Eingangselement des Hauptradsatzes HS und das Hohlrad HO_HS das Ausgangselement des Hauptradsatzes HS.

Das Automatgetriebe weist insgesamt sechs Schaltelemente A bis F auf. Die Schaltelemente A, B, E und F sind als Kupplung ausgebildet, die Schaltelemente C und D als Bremse. Hierzu ist das zweite Sonnenrad S2_HS des Hauptradsatzes HS über das erste Schaltelement A mit dem Hohlrad HO_VS des Vorschaltradsatzes VS verbindbar. Weiterhin ist hierzu das erste Sonnenrad S1_HS des Hauptradsatzes HS über das zweite Schaltelement B mit dem Hohlrad HO_VS des Vorschaltradsatzes VS verbindbar, über das dritte Schaltelement C an dem Getriebegehäuse GG festsetzbar und über das sechste Schaltelement F mit der Antriebswelle AN verbindbar. Weiterhin ist hierzu der Steg ST_HS des Hauptradsatzes HS über das vierte Schaltelement D an dem Getriebegehäuse GG festsetzbar und über das fünfte Schaltelement E mit der Antriebswelle AN verbindbar. Infolge dieser Anbindung der einzelnen Elemente des Hauptradsatzes HS an die einzelnen Schaltelemente ist der Steg ST_HS des Hautradsatzes HS also durch ein gleichzeitige Schließen des fünften und sechsten Schaltelementes E, F auch mit dem ersten Sonnenrad S1_HS des Hauptradsatzes HS verbindbar. Das Hohlrad HO_HS des Hauptradsatzes HS ist ständig und ausschließlich mit der Abtriebswelle AB verbunden.

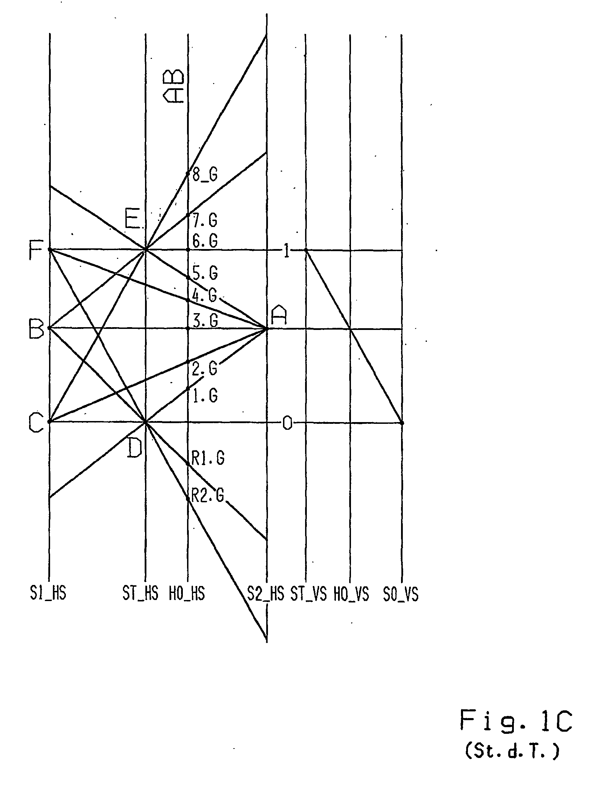

Fig. 1B zeigt ein Schaltschema des in Fig. 1A dargestellten Mehrstufen-Automatgetriebes. Es sind insgesamt acht Vorwärtsgänge gruppenschaltungsfrei schaltbar, also derart, daß zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird. Im ersten Gang "1" sind Kupplung A und Bremse D geschlossen, im zweiten Gang "2" Kupplung A und Bremse C, im dritten Gang "3" die Kupplungen A und B, im vierten Gang "4" die Kupplungen A und F, im fünften Gang "5" die Kupplungen A und E, im sechsten Gang "6" die Kupplungen E und F, im siebten Gang "7" die Kupplungen B und E, und im achten Gang "8" Bremse C und Kupplung E. In einem ersten Rückwärtsgang "R1" sind Kupplung B und Bremse D geschlossen. Es kann auch ein zweiter Rückwärtsgang "R2" vorgesehen sein, in dem Kupplung F und Bremse D geschlossen sind. Fig. 1C zeigt einen Drehzahlplan des in Fig. 1 A dargestellten Mehrstufen-Automatgetriebes.

Zurückkommend auf Fig. 1A, sind die Lamellenpakete sowie die Ein- und Ausgangselemente der Schaltelemente einheitlich bezeichnet. So ist das Lamellenpaket des ersten Schaltelementes A mit 100 bezeichnet, das Eingangselement des ersten Schaltelementes A mit 120, das Ausgangselement des ersten Schaltelementes A mit 130, sowie eine Servoeinrichtung zur Betätigung des Lamellenpaketes 100 des ersten Schaltelementes A mit 110. Entsprechend sind die Lamellenpakete der anderen Schaltelemente B, C, D, E und F mit 200, 300, 400, 500 und 600 bezeichnet, die Eingangselemente der anderen Schaltelemente B, E und F mit 220, 520 und 620. Entsprechend sind auch die Ausgangselemente der anderen Schaltelemente B, C, D, E und F mit 230, 330, 430, 530 und 630 bezeichnet, sowie die Servoeinrichtungen der anderen Kupplungen B, E und F zum Betätigen deren jeweiligen Lamellenpakete 200 bzw. 500 bzw. 600 mit 210, 510 und 610.

Hinsichtlich der räumlichen Anordnung der Schaltelemente und Radsätze relativ zueinander innerhalb des mit GG bezeichneten Getriebegehäuses lehrt die DE 10318565.8 folgendes: Das als Kupplung ausgebildete fünfte Schaltelement E ist räumlich gesehen axial zwischen Vorschaltradsatz VS und Hauptradsatz HS angeordnet, axial unmittelbar angrenzend an den Vorschaltradsatz VS. Das ebenfalls als Kupplung ausgebildete zweite Schaltelement B ist ebenfalls axial zwischen Vorschaltradsatz VS und Hauptradsatz HS angeordnet; wobei das Lamellenpaket 200 dieser Kupplung B räumlich gesehen in etwa radial über dem Lamellenpaket 500 der Kupplung E angeordnet ist und die Servoeinrichtung 210 der Kupplung B axial an die Kupplung E auf deren dem Vorschaltradsatz VS abgewandten Seite angrenzt. Axial in Richtung Hauptradsatz HS gesehen schließen sich an die Kupplung B zuerst das als Bremse ausgebildete dritte Schaltelement C, dann das ebenfalls als Bremse ausgebildete vierte Schaltelement D und dann der Hauptradsatz HS an. Das Lamellenpaket 100 des als Kupplung ausgebildeten ersten Schaltelementes A ist räumlich gesehen in etwa über dem Vorschaltradsatz VS angeordnet. Die Servoeinrichtung 110 dieser Kupplung A ist zumindest überwiegend auf der dem Hauptradsatz HS abgewandten Seite des Vorschaltradsatzes VS angeordnet. Auf der dem Vorschaltradsatz VS abgewandten Seite der Servoeinrichtung 110 der Kupplung A, räumlich gesehen axial zwischen der Kupplung A und einer antriebsseitigen getriebegehäusefesten Gehäusewand GW, also auf der dem Hauptradsatz HS abgewandten Seite von Kupplung A und Vorschaltradsatz VS, ist das als Kupplung ausgebildete sechste Schaltelement F angeordnet.

Als Ausführungsbeispiel für eine Servoeinrichtung eines Schaltelementes ist in Fig. 1A die Servoeinrichtung 610 des sechsten Schaltelementes F näher detailliert. So ist diese Servoeinrichtung 610 innerhalb eines zylinderförmigen Lamellenträgers angeordnet, der das Eingangselement 620 der Kupplung F bildet und entsprechend stets mit Drehzahl der Antriebswelle AN des Getriebes rotiert. Die Servoeinrichtung 610 weist einen Druckraum 611 auf, der durch einen Mantelflächenabschnitt des Lamellenträgers der Kupplung F und einen Kolben 614 der Servoeinrichtung 610 gebildet wird. Bei einer Druckbeaufschlagung dieses Druckraums 611 bewegt sich der Kolben 614 gegen die Kraft eines hier beispielhaft als Tellerfeder ausgebildeten Rückstellelementes 613 der Servoeinrichtung 610 axial in Richtung des Vorschaltradsatzes VS und betätigt bzw. schließt das Lamellenpaket 600 der Kupplung F. Zur vorzugsweise vollständigen Kompensation eines dynamischen Druckes des rotierenden Druckraumes 611 weist die Servoeinrichtung 610 zusätzlich einen mit Schmiermittel drucklos befüllbaren Druckausgleichsraum 612 auf, der durch eine Fläche des Kolbens 614 und eine Stauscheibe 615 gebildet wird. Das Eingangselement 620 ist auf einer getriebegehäusefesten Nabe GN verdrehbar gelagert, die sich ausgehend von der getriebegehäusefesten Gehäusewand GW im Innenraum des Getriebegehäuses GG axial in Richtung des Vorschaltradsatzes VS bis zum Sonnenrad SO_VS des Vorschaltradsatzes VS erstreckt und mit diesem Sonnenrad SO_VS verdrehfest verbunden ist. Entsprechend weist diese getriebegehäusefeste Nabe GN auch Kanäle zur Druck- und Schmiermittelzuführung zum Druckraum bzw. Druckausgleichsraum der Kupplung F auf.

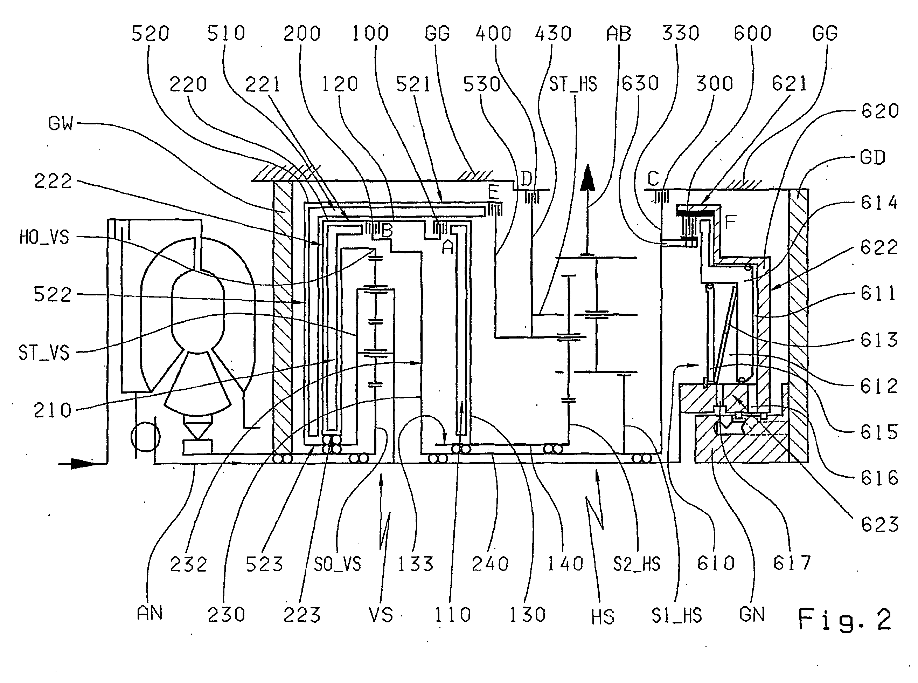

Anhand Fig. 2 wird nun ein erstes beispielhaftes Getriebeschema gemäß der vorliegenden Erfindung erläutert. Im Unterschied zu Fig. 1 sind Antriebswelle AN und Abtriebswelle AB nunmehr nicht koaxial zueinander angeordnet, das in Fig. 2 dargestellte Getriebeschema eignet sich insbesondere für ein Kraftfahrzeug mit sogenannntem "Front-Quer-Antrieb" bzw. "Heck-Quer-Antrieb" mit quer zur Fahrzeuglängsachse eingebautem Antriebsmotor oder für ein Kraftfahrzeug mit sogenannten "Front-Längs-Antrieb" mit in Fahrzeuglängsrichtung eingebautem Frontmotor und Frontantrieb bzw. "Heck-Längs-Antrieb" mit in Fahrzeuglängsrichtung eingebautem Heckmotor und Heckantrieb. Die Anordnung der Schaltelemente relativ zueinander und relativ zu den Radsätzen innerhalb des erfindungsgemäßen Getriebes gemäß Fig. 2 unterscheidet sich fundamental von der Anordnung der Schaltelemente des Getriebes gemäß dem in Fig. 1 dargestellten gattungsgemäßen Stand der Technik, bei allerdings unveränderten kinematischen Kopplung von Radsätzen und Schaltelementen.

Die Ausführung von Vorschaltradsatz VS als Einfach-Planetenradsatz in Bauweise eines Plus-Planetenradsatzes und Hauptradsatz HS als Ravigneaux-Radsatz und deren koaxiale Anordnung relativ zueinander ist gegenüber dem Stand der Technik unverändert. Im Unterschied zum Stand der Technik ist der Hauptradsatz HS relativ zum Vorschaltradsatz VS gespiegelt angeordnet, d.h. das zweite Eingangselement des Hauptradsatzes HS ist nun näher am Vorschaltradsatz VS angeordnet als das erste Eingangselement des Hauptradsatzes HS, das zweite Sonnenrad S2_HS des Hauptradsatzes HS ist nun also näher am Vorschaltradsatz VS angeordnet als das erste Sonnerad S1_HS.

Erfindungsgemäß ist das als Kupplung ausgebildete sechste Schaltelement F auf der Seite das Hauptradsatzes HS angeordnet, die dem Vorschaltradsatz VS gegenüber liegt. In dem in Fig. 2 dargestellten Beispiel grenzt die Kupplung F an einem mit dem Getriebegehäuse GG verdrehfest verbundenen Gehäusedeckel GD an. Dieser Gehäusedeckel GD bildet eine Stirnseite des Getriebes, hier beispielsweise die Stirnseite des Getriebes, die einem mit der Antriebswelle AN wirkverbundenen und in Fig. 2 nicht näher dargestellten Antriebsmotor des Getriebes gegenüber liegt. Dabei ist dieser Gehäusedeckel GD verdrehfest mit einer Gehäusenabe GN verbunden, die sich ausgehend von dem Gehäusedeckel im Innenraum des Getriebegehäuses GG axial in Richtung Hauptradsatz HS erstreckt. An dieser Gehäusenabe GN ist das mit der Antriebswelle AN verbundene Eingangselement 620 der Kupplung F verdrehbar gelagert. Entsprechend durchdringt die Antriebswelle AN das Getriebe axial bis zu der - hier dem Antrieb gegenüberliegenden - Kupplung F. Entsprechend ist auch dem Fachmann klar, dass der Antriebsmotor des Getriebes auch auf der Getriebeseite angeordnet sein könnte, an der auch die Kupplung F angeordnet ist, der Antriebsmotor also näher am Hauptradsatz angeordnet sein könnte als am Vorschaltradsatz, wobei danrr die Antriebswelle den Gehäusedeckel und die Gehäusenabe und damit das Eingangselement der Kupplung F zentrisch durchdringen würde. Selbstverständlich können Gehäusedeckel und Getriebegehäuse bzw. Gehäusenabe und Gehäusedeckel bzw. Gehäusedeckel und Getriebegehäuse und Gehäusenabe auch einstückig ausgeführt sein.

Wie aus Fig. 2 weiterhin ersichtlich, ist das Eingangselement 620 der Kupplung F hier beispielhaft als Außenlamellenträger ausgebildet, in Form eines in Richtung des Hauptradsatz HS hin geöffneten zylinderförmigen Topfes, mit einer Nabe 623, die an der getriebegehäusefesten Gehäusenabe GN verdrehbar gelagert ist, mit einem zumindest teilweise scheibenförmigen Abschnitt 622, der sich ausgehend von dieser Nabe 623 axial angrenzend an den Gehäusedeckel GD radial nach außen erstreckt, sowie mit einem zumindest teileweise zylindrischen Abschnitt 621, der sich ausgehend von diesem scheibenförmigen Abschnitt 622 axial in Richtung Hauptradsatz HS erstreckt und an seinem Innendurchmesser die Außenlamellen des Lamellenpaketes 600 der Kupplung F aufnimmt. Entsprechend ist das Ausgangselement 630 der Kupplung F als Innenlamellenträger ausgebildet, der an seinem Außendurchmesser die Innenlamellen des Lamellenpaketes 600 aufnimmt und sowohl mit dem ersten Eingangselement des Hauptradsatzes HS, also mit dem ersten Sonnenrad S1_HS verbunden ist als auch mit dem Ausgangselement 330 des dritten Schaltelementes C. Außenlamellenträger, Servoeinrichtung 610 und Lamellenpaket 600 der Kupplung F bilden also eine einfach vormontierbare Baugruppe.

In dem in Fig. 2 dargestellten Ausführungsbeispiel ist das dritte Schaltelement C als Lamellenbremse ausgebildet. Entsprechend ist das Ausgangselement 330 der Bremse C als Innenlamellenträger zur Aufnahme der Innenlamellen des Lamellenpaketes 300 der Bremse C ausgebildet. Entsprechend ist das Eingangselement der Bremse C ein Außenlamellenträger zur Aufnahme der Außenlamellen des Lamellenpaketes 300, hier beispielhaft direkt integriert in das Getriebegehäuse GG. Dabei ist dieses Lamellenpaket 300 der Bremse C näher am Hauptradsatz HS angeordnet als das Lamellenpaket 600 der Kupplung F, könnte in einer anderen Ausgestaltung aber beispielsweise auch räumlich gesehen radial über diesem Lamellenpaket 600 angeordnet sein. Zur Vereinfachung ist eine Servoeinrichtung zur Betätigung der Bremse C in Fig. 2 nicht dargestellt, kann beidseits des Lamellenpaketes 300 angeordnet und beispielsweise in das Getriebegehäuse integriert sein. Selbstverständlich kann der Außenlamellenträger der Bremse C auch als separates Bauteil ausgeführt sein, weiches dann über geeignete Mittel verdrehfest mit dem Getriebegehäuse verbunden ist.

Selbstverständlich könnte die Bremse C auch als Bandbremse ausgeführt sein, entsprechend wäre das Eingangselement der Bremse C dann als Zylinder mit einer Bremsband-Lauffläche am Außendurchmesser ausgebildet. Zur Einsparung axialer Getriebebaulänge ist es günstig, dieses Bremsband dann räumlich gesehen radial über dem Lamellenpaket 600 der Kupplung F anzuordnen. In diesem Fall kann auch vorgesehen sein, dass das Eingangselement der Kupplung F dabei als Innenlamellenträger ausgebildet ist und das Ausgangselement der Kupplung F entsprechend als Außenlamellenträger, an dessen Außendurchmesser vorzugsweise gleichzeitig eine Bremsband-Lauffläche vorgesehen ist.

Die Servoeinrichtung 610 zur Betätigung dieses Lamellenpaketes 600 ist vollständig innerhalb des Zylinderraumes angeordnet, der durch den Außenlamellenträger (Eingangselement 620) der Kupplung F gebildet wird. Dabei ist diese Servoeinrichtung 610 auf der Nabe 623 dieses Außenlamellenträgers (620) der Kupplung F axial verschiebbar gelagert und umfasst - wie beim Stand der Technik - einen Kolben 614, einen Druckraum 611, der durch einen Mantelflächenabschnitt des Außenlamellenträgers (620) der Kupplung F und diesen Kolben 614 gebildet wird, ein hier beispielhaft als Tellerfeder ausgeführtes Rückstellelement 613 zur Rückstellung des Kolbens 614, wenn dieser Druckraum 611 nicht druckbeaufschlagt ist, sowie eine Stauscheibe 615 und einen durch diese Stauscheibe und eine Fläche des Kolbens 614 gebildeten, mit Schmiermittel drucklos befüllbaren Druckausgleichsraum 612 zur Kompensation eines dynamischen Druckes des rotierenden Druckraumes 611. Bei einer Druckbeaufschlagung des Druckraums 611 bewegt sich der Kolben 614 gegen die Kraft des Rückstellelementes 613 axial in Richtung des Hauptradsatzes HS und betätigt bzw. schließt das Lamellenpaket 600 der Kupplung F.

Die drei als Kupplung ausgebildeten Schaltelemente A, B und E sind alle auf der Seite des Hautradsatzes HS angeordnet, die der Kupplung F gegenüber liegt. Das andere als Bremse ausgebildete Schaltelement D ist zumindest teilweise auf der der Kupplung F gegenüberliegenden Seite des Hauptradsatzes HS angeordnet.

In dem in Fig. 2 dargestellten Ausführungsbeispiel ist das Lamellenpaket 500 der Kupplung E räumlich gesehen in einem Bereich axial zwischen Vorschaltradsatz VS und Hauptradsatz HS angeordnet. Das Eingangselement 520 der Kupplung E ist dabei als Außenlamellenträger ausgebildet, geometrisch in Form eines in Richtung des Hauptradsatzes HS hin geöffneten zylinderförmigen Topfes. Eine Nabe 523 dieses Eingangselementes 520 ist räumlich gesehen auf der dem Hauptradsatz HS abgewandten Seite des Vorschaltradsatzes VS angeordnet, auf einer getriebegehäusefesten Nabe verdrehbar gelagert und eingangsseitig über den axial durch den Vorschaltradsatz VS hindurchgreifenden gekoppelten Steg ST_VS des Vorschaltradsatzes VS ständig mit der Antriebswelle AN verbunden. In Fig. 2 ist diese getriebegehäusefeste Nabe beispielhaft eine mit dem Getriebegehäuse GG verdrehfest verbundene Leitradwelle des Drehmomentwandlers, an der auch das Sonnenrad SO_VS des Vorschaltradsatzes festgesetzt ist. Ein scheibenförmiger Abschnitt 522 dieses Eingangselementes 520 erstreckt sich ausgehend von dieser Nabe 523, angrenzend an die hier antriebsseitige Gehäusewand GW, radial nach außen bis zu einem Durchmesser knapp unterhalb des Innendurchmessers des Getriebegehäuses GG. Ein zylindrischen Abschnitt 521 dieses Eingangselementes 520 schließt sich an den Außendurchmesser dieses scheibenförmigen Abschnitts 522 an und erstreckt sich axial in Richtung Hauptradsatz und übergreift dabei sowohl den Vorschaltradsatz VS als auch die beiden Kupplungen B und A in axialer Richtung vollständig. An seinem hauptradsatznahen Ende nimmt dieser zylindrische Abschnitt 521 die Außenlamellen des Lamellenpaketes 500 der Kupplung E auf. Der Vorschaltradsatz VS und die beiden Kupplungen B und A sind also vollständig innerhalb des Zylinderraums angeordnet, der durch das Eingangselement 520 (hier den Außenlamellenträger) der Kupplung E gebildet wird. Das Ausgangselement 530 der Kupplung E ist entsprechend als Innenlamellenträger ausgebildet und ausgangsseitig mit dem dritten Eingangselement - also dem gekoppelten Steg ST_HS - des Hauptradsatzes HS verbunden.

Auch die Servoeinrichtung 510 zur Betätigung des Lamellenpaketes 500 der Kupplung E ist innerhalb des durch das Eingangselement 520 (hier den Außenlamellenträger) der Kupplung E gebildeten Zylinderraums angeordnet und auf der Nabe 523 dieses Eingangselementes 520 axial verschiebbar gelagert. In Fig. 2 ist die Servoeinrichtung 510 zur Vereinfachung nur schematisch dargestellt und räumlich gesehen im wesentlichen nahe dem scheibenförmigen Abschnitt 522 des Eingangselementes 520 angeordnet, wobei ein Betätigungsfinger dieser Servoeinrichtung 510 den Vorschaltradsatz VS und die Kupplungen B und A in axialer Richtung übergreift und das Lamellenpaket 500 beim Schließen der Kupplung E axial in Richtung des Hauptradsatzes HS hin betätigt. Zweckmäßigerweise weist die Servoeinrichtung 510 auch einen dynamischen Druckausgleich auf, da sie ständig mit Drehzahl der Antriebswelle AN rotiert.

In dem in Fig. 2 dargestellten Ausführungsbeispiel ist das Lamellenpaket 200 der Kupplung B räumlich gesehen zumindest teilweise in einem Bereich radial über dem Vorschaltradsatz VS angeordnet. Das Eingangselement 220 der Kupplung B ist dabei als Außenlamellenträger ausgebildet, geometrisch in Form eines in Richtung des Hauptradsatzes HS hin geöffneten zylinderförmigen Topfes. Eine Nabe 223 dieses Eingangselementes 220 ist räumlich gesehen auf der dem Hauptradsatz HS abgewandten Seite des Vorschaltradsatzes VS angeordnet, an der Nabe 523 des Eingangselementes 520 der Kupplung E verdrehbar gelagert und eingangsseitig mit dem Hohlrad HO_VS des Vorschaltradsatzes VS verbunden. Ein scheibenförmiger Abschnitt 222 dieses Eingangselementes 220 erstreckt sich ausgehend von dieser Nabe 223 angrenzend an die Servoeinrichtung 510 der Kupplung E radial nach außen bis zu einem Durchmesser knapp unterhalb des Betätigungsfingers der Servoeinrichtung 510. Ein zylindrischer Abschnitt 221 dieses Eingangselementes 220 schließt sich am Außendurchmesser dieses scheibenförmigen Abschnitts 222 an und erstreckt sich axial in Richtung des Hauptradsatzes HS und übergreift dabei den Vorschaltradsatz VS in axialer Richtung. An seinem hauptradsatznahen Ende nimmt dieser zylindrische Abschnitt 221 die Außenlamellen des Lamellenpaketes 200 der Kupplung B auf. Der Vorschaltradsatz VS ist also innerhalb des Zylinderraums angeordnet, der durch das Eingangselement 220 (hier den Außenlamellenträger) der Kupplung B gebildet wird. Das Ausgangselement 230 der Kupplung B ist entsprechend als Innenlamellenträger ausgebildet und ausgangsseitig mit dem ersten Eingangselement - also dem ersten Sonnenrad S1_HS - des Hauptradsatzes HS verbunden. Hierzu erstreckt sich die zylinderförmige Mantelfläche des Ausgangselementes 230 der Kupplung B im wesentlichen entlang des Vorschaltradsatzes VS, wobei ein scheibenförmiger Abschnitt 232 dieses Ausgangselementes 230 zumindest weitgehend parallel zum gekoppelten Steg ST_VS des Vorschaltradsatzes VS verläuft und an seinem Innendurchmesser mit einer ersten Sonnenwelle 240 verdrehfest verbunden ist. Diese erste Sonnenwelle 240 ist auf der Antriebswelle AN gelagert, erstreckt sich axial in Richtung Kupplung F zumindest bis zum ersten Sonnenrad S1_HS des Hauptradsatzes HS und durchgreift dabei das zweite Sonnenrad S2_HS des Hauptradsatzes HS in axialer Richtung zentrisch, und ist mit dem ersten Sonnenrad S1_HS des Hauptradsatzes HS verbunden. Selbstverständlich können Sonnenwelle 240 und Sonnenrad S1_HS einstückig ausgeführt sein. Erwähnt werden soll an dieser Stelle noch, dass der gekoppelte Steg ST_VS des Vorschaltradsatzes VS auf seiner dem Hauptradsatz HS zugewandten Seite mit der Antriebswelle AN verdrehfest verbunden ist.

Auch die Servoeinrichtung 210 zur Betätigung des Lamellenpaketes 200 der Kupplung B ist innerhalb des durch das Eingangselement 220 (hier den Außenlamellenträger) der Kupplung B gebildeten Zylinderraums angeordnet. In Fig. 2 ist diese Servoeinrichtung 210 zur Vereinfachung nur schematisch dargestellt. Wie in Fig. 2 ersichtlich, sind die Servoeinrichtungen 210 und 510 der Kupplungen B und E räumlich gesehen benachbart zueinander angeordnet, räumlich getrennt voneinander im wesentlichen nur durch die Mantelfläche des Eingangselementes 220 bzw. Außenlamellenträgers der Kupplung B. Dabei ist Servoeinrichtung 210 auf der Nabe 223 des Eingangselementes 220 axial verschiebbar gelagert. Beim Schließen der Kupplung B betätigt die Servoeinrichtung 210 das Lamellenpaket 200 der Kupplung B axial in Richtung des Hauptradsatzes HS. Zweckmäßigerweise weist auch die Servoeinrichtung 210 einen dynamischen Druckausgleich auf, da sie ständig mit Drehzahl des Ausgangselementes des Vorschaltradsatzes VS, also ständig mit Drehzahl des Hohlrades HO_VS rotiert.

Die Kupplung A ist räumlich gesehen in einem Bereich axial zwischen Vorschaltradsatz VS und Hauptradsatz HS angeordnet. Das Eingangselement 120 der Kupplung A ist beispielhaft als ringförmiger Innenlamellenträger ausgebildet und über das Eingangselement 220 der Kupplung B ständig mit der Antriebswelle AN verbunden. Entsprechend ist das Ausgangselement 130 der Kupplung A als Außenlamellenträger ausgebildet, geometrisch in Form eines in Richtung des Vorschaltradsatzes VS hin geöffneten Topfes, dessen Nabe 133 auf der ersten Sonnenwelle 240 verdrehbar gelagert und an seiner hauptradsatznahen Seite mit einer zweiten Sonnenwelle 140 verdrehfest verbunden ist. Diese zweite Sonnenwelle 140 stellt die kinematische Verbindung zwischen dem Ausgangselement 130 des Kupplung A und dem zweiten Eingangselement - dem zweiten Sonnenrad S2_HS - des Hauptradsatzes HS her. Beispielsweise können die Sonnenwelle 240 und Sonnenrad S2_HS einstückig ausgeführt sein. Entsprechend der zu übertragenden Drehmomente weisen die Lamellenpakete 100 und 200 der Kupplungen A und B einen zumindest ähnlichen Durchmesser auf. In einer anderen konstruktiven Ausbildung der Lamellenträger dieser beiden Kupplungen A, B kann beispielsweise auch ein für beide Kupplungen A, B gemeinsamer Lamellenträger vorgesehen sein, beispielsweise ein gemeinsamer Außenlamellenträger.

Die in Fig. 2 zur Vereinfachung nur schematisch dargestellte Servoeinrichtung 110 der Kupplung A ist vollständig innerhalb des Zylinderraums angeordnet, der durch den Außenlamellenträger (bzw. das Ausgangselement 130) der Kupplung A gebildet wird, ist auf der Nabe 133 dieses Außenlamellenträgers (bzw. dieses Ausgangselementes 130) axial verschiebbar gelagert und betätigt das Lamellenpaket 100 der Kupplung A bei derem Schließen axial in Richtung des Vorschaltradsatzes VS. Dabei rotiert diese Servoeinrichtung 110 stets mit der Drehzahl des zweiten Eingangselementes des Hauptradsatzes HS, also mit Drehzahl des zweiten Sonnenrades S2_HS. Zweckmäßigerweise weist die Servoeinrichtung 110 der Kupplung A also auch einen dynamischen Druckausgleich auf.

Die Bremse D ist unmittelbar benachbart zum Hauptradsatz HS angeordnet. In dem in Fig. 2 dargestellten Ausführungsbeispiel ist das vierte Schaltelement D als Lamellenbremse ausgebildet, entsprechend ist deren mit dem dritten Eingangselement des Hauptradsatzes HS, also mit dem gekoppelten Steg ST_HS des Hauptradsatzes HS verbundene Ausgangselement 430 als Innenlamellenträger zur Aufnahme der Innenlamellen des Lamellenpaketes 400 der Bremse D ausgebildet. Entsprechend ist das Eingangselement der Bremse D ein Außenlamellenträger zur Aufnahme der Außenlamellen des Lamellenpaketes 400, hier beispielhaft direkt integriert in das Getriebegehäuse GG. Zur Vereinfachung ist eine Servoeinrichtung zur Betätigung des Lamellenpaketes 400 der Bremse D in Fig. 2 nicht dargestellt, kann beidseits dieses Lamellenpaketes 400 angeordnet und beispielsweise in das Getriebegehäuse integriert sein. Selbstverständlich kann der Außenlamellenträger der Bremse D auch als separates Bauteil ausgeführt sein, welches dann über geeignete Mittel verdrehfest mit dem Getriebegehäuse verbunden ist.

Selbstverständlich könnte die Bremse D auch als Bandbremse ausgeführt sein, entsprechend wäre das Ausgangselement der Bremse D dann als Zylinder mit einer Bremsband-Lauffläche am Außendurchmesser ausgebildet. Zur Einsparung axialer Getriebebaulänge ist es günstig, dieses Bremsband dann räumlich gesehen radial über dem Lamellenpaket 500 der Kupplung E anzuordnen. In diesem Fall kann auch vorgesehen sein, dass das Ausgangselement der Kupplung E dabei als Außenlamellenträger ausgeführt ist, an dessen Außendurchmesser gleichzeitig eine Bremsband-Lauffläche vorgesehen ist.

Dem Fachmann ist klar, dass sich die in Fig. 2 dargestellten erfindungsgemäßen Bauteilanordnungen auch auf andere konstruktive Ausgestaltungen des Hauptradsatzes HS problemlos übertragen lassen. Voraussetzung dabei ist stets die Beibehaltung der kinematischen Kopplung des Ausgangselementes des Hauptradsatzes HS an die Abtriebswelle AB und die Beibehaltung der kinematischen Kopplung der mindestens drei Eingangselemente des Hauptradsatzes HS an die sechs Schaltelemente A bis F (und damit die Beibehaltung der kinematischen Kopplung der mindestens drei Eingangselemente des Hauptradsatzes HS über diese sechs Schaltelemente A bis F an die Antriebswelle AN und den Vorschaltradsatz VS). Auch sollte der "neue" Hauptradsatz in Verbindung mit dem Vorschaltradsatz VS und den sechs Schaltelementen A bis F eine sinnvolle und verwertbare Gangabstufung ermöglichen. Insofern ist die in Fig. 2 dargestellte Ausbildung des Hauptradsatzes HS als Ravigneaux-Planetenradsatz als beispielhaft anzusehen.

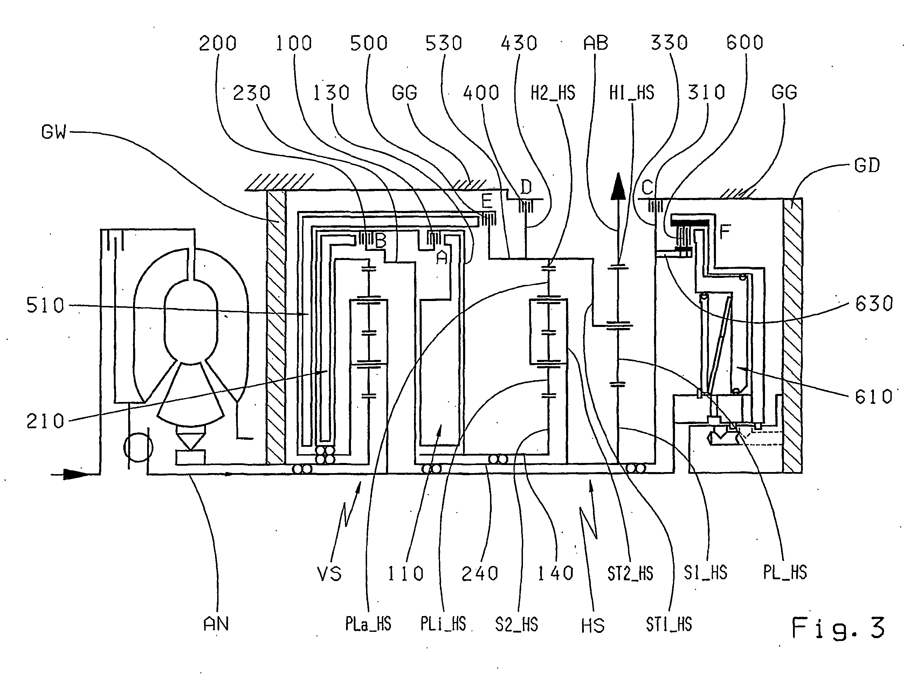

So wird nun nachfolgend anhand Fig. 3 ein zweites beispielhaftes Getriebeschema gemäß der vorliegenden Erfindung erläutert. Gegenüber dem in Fig. 2 dargestellten ersten erfindungsgemäßen Getriebe ist bei diesem vorgeschlagenen zweiten erfindungsgemäßen Getriebe im wesentlichen nur die Ausgestaltung des Hauptradsatzes HS geändert. Die räumliche Anordnung von Vorschaltradsatz VS, Hauptradsatz HS und der sechs Schaltelemente A bis F mit ihren jeweiligen Lamellenpaketen 100, 200, 300, 400, 500, 600 und Servoeinrichtungen (in Fig. 3 sind vereinfacht nur die Servoeinrichtungen 110, 210, 510 und 610 der vier Kupplungen A, Z, E und F eingezeichnet) innerhalb des durch die Gehäusewand GW und den Gehäusedeckel GD stirnseitig begrenzten Getriebegehäuses GG relativ zueinander ist gegenüber Fig. 2 unverändert; insofern kann an dieser Stelle auf deren nochmalige verbale Beschreibung verzichtet werden.

Wie in Fig. 3 ersichtlich, ist der Hauptradsatz HS nunmehr als Zweisteg-Vierwellen-Getriebe ausgebildet, welches durch zwei miteinander gekoppelte Einzel-Planetenradsätze gebildet wird. Dabei ist der erste Einzel-Planetenradsatz des Hauptradsatzes HS als "Minus-Planetenradsatz" in Einfachplanetenbauweiseausgeführt, umfassend ein Sonnenrad S1_HS, ein Hohlrad H1_HS, sowie einen Steg ST1_HS, an dem Planetenräder PL_HS verdrehbar gelagert sind, welche mit dem genannten Sonnenrad S1_HS und dem genannten Hohlrad H1_HS kämmen. Der zweite Einzel-Planetenradsatz des Hauptradsatzes HS ist als "Plus-Planetenradsatz" in Doppelplanetenbauweise ausgeführt, umfassend ein Sonnenrad S2_HS, ein Hohlrad H2_HS, sowie einen gekoppelten Steg ST2_HS, an dem innere Planetenräder PLi_HS und äußere Planetenräder PLa_HS gelagert sind, wobei diese inneren Planetenräder PLi_HS mit diesen äußeren Planetenrädern PLa_HS und dem Sonnenrad S2_HS kämmen, und wobei die äußeren Planetenräder PLa_HS mit den inneren Planetenrädern PLi_HS und dem Hohlrad H2_HS kämmen.

Das (erste) Sonnenrad S1_HS und der gekoppelte (zweite) Steg ST2_HS des Hauptradsatzes HS sind ständig miteinander verbunden und bilden das erste Eingangselement des Hauptradsatzes HS, welches einerseits auf der dem Vorschaltradsatz VS abgewandten Seite des Hauptradsatzes HS mit dem Ausgangselement 630 der Kupplung F und dem Ausgangselement 330 der Bremse C verbunden ist und andererseits über die erste Sonnenwelle 240 mit dem Ausgangselement 230 der Kupplung B verbunden ist. Das (zweite) Sonnenrad S2_HS des Hauptradsatzes HS ist dem Vorschaltradsatz VS zugewandt und bildet das zweite Eingangselement des Hauptradsatzes HS, welches über die zweite Sonnenwelle 140 mit dem Ausgangselement 130 der Kupplung A verbunden ist. Der (erste) Steg ST1_HS und das (zweite) Hohlrad H2_HS des Hauptradsatzes HS sind ständig miteinander verbunden und bilden das dritte Eingangselement des Hauptradsatzes HS, welches mit dem Ausgangselement 530 der Kupplung E und dem Ausgangselement 430 der Bremse D verbunden ist. Das (erste) Hohlrad H1_HS des Hauptradsatzes HS bildet das Ausgangselement des Hauptradsatzes HS und ist ständig mit der Abtriebswelle AB des Getriebes verbunden.

Auch durch einen derart aufgebauten Hauptradsatz HS sind in Verbindung mit dem als Plus-Planetenradsatz in Doppelplanetenbauweise ausgeführten Vorschaltradsatz VS und der gegenüber Fig. 2 unveränderten kinematischen Kopplung der einzelnen Eingangs- und Ausgangselemente von Haupt- und Vorschaltradsatz VS, HS an die sechs Schaltelemente A bis F und die Antriebs- und Abtriebswelle AN, AB insgesamt acht Vorwärtsgänge gruppenschaltungsfrei schaltbar, mit gleicher Schaltlogik wie in Fig. 1B dargestellt.

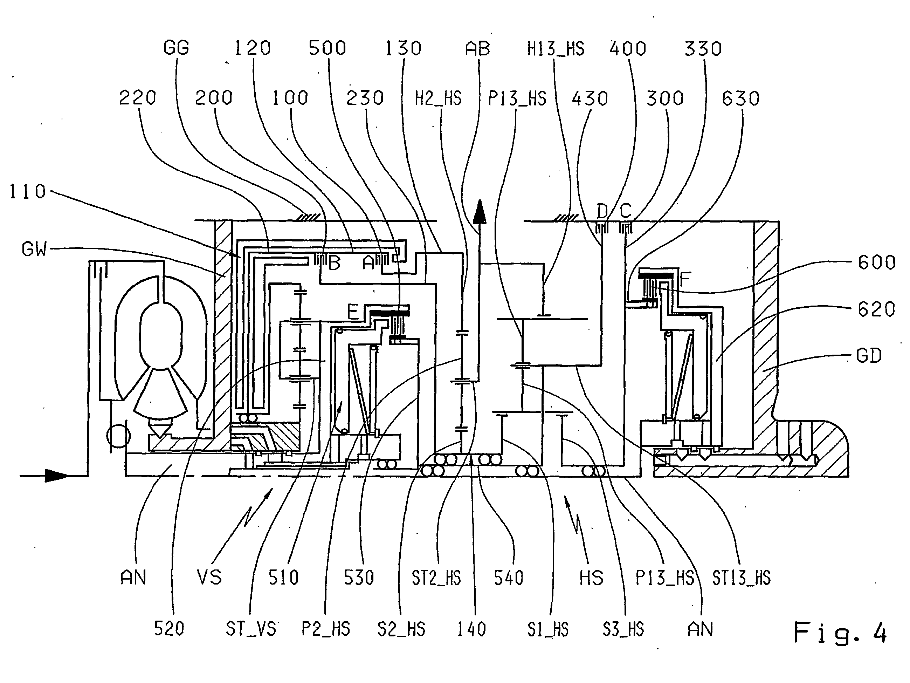

Nachfolgend wird nun anhand Fig. 4 ein drittes beispielhaftes Getriebeschema gemäß der vorliegenden Erfindung erläutert, basierend auf dem zuvor beschriebenen Getriebeschema gemäß Fig. 2, wiederum speziell für ein Getriebe mit nicht koaxialer Anordnung von Antriebs- und Abtriebswelle AN, AB. Die Änderungen gegenüber dem in Fig. 2 dargestellten ersten erfindungsgemäßen Getriebe betreffen im wesentlichen die Ausgestaltung des Hauptradsatzes HS, die räumliche Anordnung von Kupplung E und Bremse D, sowie die räumliche Anordnung und konstruktive Ausgestaltung der Servoeinrichtung 110 der Kupplung A. Die räumliche Anordnung von Vorschaltradsatz VS, Hauptradsatz HS, Lamellenpaket 100 der Kupplung A, sowie der anderen drei Schaltelemente B, C, F (mit ihren jeweiligen Lamellenpaketen 200, 300, 600 und Servoeinrichtungen) innerhalb des durch die Gehäusewand GW und den Gehäusedeckel GD stirnseitig begrenzten Getriebegehäuses GG relativ zueinander ist gegenüber Fig. 2 unverändert.

Wie in Fig. 4 ersichtlich, sind der als einfacher Plus-Planetenradsatz ausgeführte Vorschaltradsatz VS und der mehrgliedrige Hauptradsatz HS koaxial nebeneinander und koaxial zur Antriebswelle AN angeordnet. Der Hauptradsatz HS ist nunmehr als "reduziertes Dreisteg-Fünfwellen-Planetengetriebe" mit drei miteinander gekoppelten Einzel-Planetenradsätzen ausgeführt. Zwei dieser beiden Einzel-Planetenradsätze sind dabei derart zusammengefasst, dass sie ein gemeinsames Hohlrad und einen gemeinsamen Steg, aber getrennte Sonnenräder aufweisen. Im Prinzip können diese beiden derart zusammengefasste Einzel-Planetenradsätze des Hauptradsatzes auch als ein "Planetenradsatz mit geteiltem Sonnenrad" verstanden werden. Entsprechend umfasst der Hauptradsatz HS drei Sonnenräder S1_HS, S2_HS und S3_HS, zwei Hohlräder H13_HS und H2_HS, sowie zwei Stege ST13_HS, ST2_HS mit daran verdrehbar gelagerten Planetenrädern P13_HS, P2_HS.

Korrespondierend zur vorherigen Nomenklatur, dass das Ausgangselement 130 der Kupplung A mit einem Element des zweiten Planetenradsatzes des Hauptradsatzes HS und das Ausgangselement 230 der Kupplung B mit einem Element des ersten Planetenradsatzes des Hauptradsatzes HS verbunden ist, ist der zweite Einzel-Planetenradsatz - umfassend das Hohlrad H2_HS, das Sonnenrad S2_HS, den Steg ST2_HS mit den daran verdrehbar gelagerten kurzen Planetenrädern P2_HS - vorschaltradsatznah angeordnet. Entsprechend ist der aus dem ersten und dritten Einzel-Planetenradsatz des Hauptradsatzes HS gebildete "Planetenradsatz mit geteiltem Sonnenrad" vorschaltradsatzfern angeordnet und umfasst die Sonnenräder S1_HS und S3_HS, das gekoppelte Hohlrad H13_HS, sowie den gekoppelten Steg ST13_HS mit den daran verdrehbar gelagerten langen Planetenrädern P13_HS. Die langen Planetenräder P13_HS kämmen dabei mit dem Hohlrad H13_HS und den beiden Sonnenrädern S1_HS und S3_HS, die kurzen Planetenräder P2_HS mit dem Hohlrad H2_HS und dem Sonnenrad S2_HS. Als weitere Koppelung weist der Hauptradsatz HS eine feste Verbindung zwischen dem gekoppelten Hohlrad H13_HS und dem zweiten Steg ST2_HS sowie eine feste Verbindung zwischen dem ersten und zweiten Sonnenrad S1_HS, S2_HS auf. Die langen Planetenräder P13_HS des Hauptradsatzes HS bilden eine Wirkverbindung zwischen dem erstem und dem dritten Sonnenrad S1_HS, S3_HS. Räumlich gesehen ist das erste Sonnenrad S1_HS des Hauptradsatzes HS also axial zwischen dem zweiten und dritten Sonnenrad S2_HS, S3_HS des Hauptradsatzes HS angeordnet.

Die derart miteinander wirkverbundenen drei Sonnenräder S1_HS, S2_HS, S3_HS bilden das mit dem Ausgangselementen 230, 630 der Kupplungen B, F und dem Ausgangselement 330 der Bremse C verbundene erste Eingangselement des Hauptradsatzes HS. Das zweite Hohlrad H2_HS bildet das mit dem Ausgangselement 130 der Kupplung A verbundene zweite Eingangselement des Hauptradsatzes HS, der gekoppelte Steg ST13_HS das mit dem Ausgangselement 430 der Bremse D und dem Ausgangselement 530 der Kupplung E verbundene dritte Eingangselement des Hauptradsatzes HS, und das fest mit dem zweiten Steg ST2_HS verbundene gekoppelte Hohlrad H13_HS das mit der Abtriebswelle AB verbundene Ausgangselement des Hauptradsatzes HS. Entsprechend der beschriebenen konstruktiven Ausbildung der kinematischen Kopplung der drei Sonnenräder S1_HS, S2_HS und S3_HS des Hauptradsatzes HS und der räumlichen Lage der Bremse C und der Kupplung F auf der dem Vorschaltradsatz VS abgewandten Seite des Hauptradsatzes HS sind das Ausgangselement 330 der Bremse C und das Ausgangselement 630 der Kupplung F verdrehfest mit dem dritten Sonnenrad S3_HS verbunden. Das ebenfalls mit dem ersten Eingangselement des Hauptradsatzes HS verbundene Ausgangselement 230 der Kupplung B ist auf der vorschaltradsatznahen Seite des Hauptradsatzes HS mit dem zweiten Sonnenrad S2_HS des Hauptradsatzes HS verbunden. In dem dargestellten Beispiel ist hierzu eine axial kurze Sonnenwelle 140 vorgesehen, die auch die verdrehfeste Verbindung zwischen dem zweiten Sonnenrad S2_HS und dem (räumlich gesehen mittleren) ersten Sonnenrad S1_HS des Hauptradsatzes HS übernimmt.

Im Prinzip kann das in Fig. 4 dargestellte "reduzierte Dreisteg-Fünfwellen-Planetengetriebes" auch so interpretiert werden, dass insgesamt vier nicht fest miteinander verbundene Eingangselemente und ein Ausgangselement vorgesehen sind. Entsprechend dieser Nomenklatur würden die miteinander verbundenen Sonnenräder S1_HS und S2_HS das erste Eingangselement, das zweite Hohlrad H2_HS das zweite Eingangselement, der gekoppelte Steg ST13_HS das dritte Eingangselement, das dritte Sonnenrad S3_HS das vierte Eingangselement und das mit dem zweiten Steg ST2_HS fest verbundene Hohlrad H13_HS das Ausgangselement des Hauptradsatzes HS bilden, wobei dieses erste und dieses vierte Eingangselement über die langen Planetenräder P13_HS des Hauptradsatzes HS miteinander kinematisch wirkverbunden sind. In einem Drehzahlplan des Fig. 4 dargestellten erfindungsgemäßen Automatgetriebes fallen das genannte vierte Eingangselement und das erste Eingangselement des Hauptradsatzes HS zusammen, da die langen Planetenräder P13_HS des Hauptradsatzes HS nicht als Stufenplaneten ausgebildet sind und das erste und dritte Sonnenrad S1_HS, S3_HS des Hauptradsatzes HS die gleiche Zähnezahl aufweisen.

Die Kupplung E ist räumlich gesehen zwischen Vorschaltradsatz VS und Hauptradsatz HS angeordnet, nunmehr axial unmittelbar angrenzend an den Vorschaltradsatz VS. Konstruktiv ist das mit der Antriebswelle AN verbundene Eingangselement 520 der Kupplung E als Außenlamellenträger ausgebildet, geometrisch in Form einer in Richtung Hauptradsatz HS geöffneten Zylinderförmigen Topfes. Eine Nabe dieses Außenlamellenträgers (520) und die Antriebswelle AN sind hier beispielhaft einstückig ausgeführt. Ein scheibenförmiger Topfboden dieses Außenlamellenträgers (520) ist mit dem Steg ST_VS des Vorschaltradsatzes VS verbunden. Am Innendurchmesser einer zylindrischem Mantelfläche dieses Außenlamellenträgers (520) ist ein Mitnahmeprofil vorgesehen zur Aufnahme von vorzugsweise als außenverzahnte Stahllamellen ausgebildeten Außenlamellen des Lamellenpaketes 500 der Kupplung E. Die Servoeinrichtung 510 zur Betätigung dieses Lamellenpaketes 500 ist innerhalb eines Zylinderraums angeordnet, der durch den genannten Außenlamellenträger (520) der Kupplung E gebildet wird, und an diesem Außenlamellenträger (520) axial verschiebbar gelagert, rotiert stets mit Drehzahl der Antriebswelle AN, und betätigt das ihr zugeordnete Lamellenpaket 500 beim Schließen der Kupplung E axial in Richtung Hauptradsatz HS.

Das Ausgangselement 530 der Kupplung E ist entsprechend als Innenlamellenträger ausgebildet, der sich in Richtung Hauptradsatz HS gesehen axial an die Servoeinrichtung 510 der Kupplung E anschließt und in seinem Nabenbereich mit einer sich in Richtung Hauptradsatz HS erstreckenden Stegwelle 540 verdrehfest verbunden ist. Die zuvor beschriebene konstruktive Ausgestaltung des Hauptradsatzes HS mit einem Einzel-Planetenradsatz und einem "Planetenradsatz mit geteiltem Sonnenrad" ermöglicht eine konstruktiv elegante kinematische Anbindung des Ausgangselementes 530 der Kupplung E an das dritte Eingangselementes des Hauptradsatzes HS. Hierzu weist des gekoppelte Steg ST13_HS des Hauptradsatzes HS ein Stegblech auf, welches in radialer Richtung axial zwischen dem (räumlich gesehen mittleren) ersten Sonnenrad S1_HS und dem (räumlich gesehen vorschaltradsatzfernen) dritten Sonnenrad S3_HS des Hauptradsatzes HS radial nach innen hindurchgreift. In seinem Nabenbereich ist dieses Stegblech mit der genannten Stegwelle 540 verdrehfest verbunden. Diese Stegwelle 540 erstreckt sich somit radial innerhalb der Sonnenwelle 140 axial in Richtung Vorschaltradsatz VS, durchdringt dabei das erste und zweite Sonnenrad S1_HS, S2_HS sowie die Nabe des Ausgangselementes 230 der Kupplung B zentrisch, und ist - wie bereits erwähnt - an ihrem vorschaltradsatznahen Ende mit einer Nabe des Ausgangselementes 530 der Kupplung E verbunden. Radial innerhalb der Stegwelle 540 verläuft die Antriebswelle AN und erstreckt sich bis zur Kupplung F, welche - wie in Fig. 2 - auf der vorschaltadsatzabgewandten Seite des Hauptradsatzes HS angeordnet ist.

Das ebenfalls mit dem dritten Eingangselement des Hauptradsatzes HS verbundene Ausgangselement 430 der Bremse D ist unmittelbar mit dem gekoppelten Steg ST13_HS des Hauptradsatzes HS verbunden. Entsprechend ist das Lamellenpaket 400 der hier wiederum beispielhaft als Lamellenbremse ausgeführten Bremse D axial neben dem Hauptradsatz HS angeordnet, räumlich gesehen zwischen Hauptradsatz HS und dem Lamellenpaket 300 der hier ebenfalls beispielhaft als Lamellenbremse ausgeführten Bremse C. Selbstverständlich könnte das Lamellenpaket 400 räumlich gesehen auch zumindest teilweise in einem Bereich radial über dem gekoppelten Hohlrad H13_HS des Hauptradsatzes HS angeordnet sein. Selbstverständlich können die in Fig. 4 zur Vereinfachung nicht näher dargestellten Servoeinrichtungen der beiden Lamellenbremsen C, D zum Betätigen des ihnen jeweils zugeordneten Lamellenpaketes 300 bzw. 400 räumlich gesehen links oder rechts von dem jeweiligen Lamellenpaket 300 bzw. 400 angeordnet sein. Selbstverständlich können die beiden Bremsen C, D wahlweise auch als Bandbremse ausgeführt sein.

Wie in Fig. 4 weiterhin ersichtlich, ist die konstruktive Ausführung und die räumliche Lage der Kupplung B mit ihrem Lamellenpaket 200 und ihrer Servoeinrichtung 210 relativ zum Vorschaltradsatz VS gegenüber Fig. 2 im Prinzip unverändert. Lediglich das Lamellenpaket 200 ist etwas weiter in Richtung Hauptradsatz HS verschoben. Unverändert schließt sich auch das Lamellenpaket 100 der Kupplung A axial an das Lamellenpaket 200 der Kupplung B axial in Richtung Hauptradsatz HS an. Unverändert weisen diese Lamellenpakete 100 und 200 auch einen zumindest ähnlichen Durchmesser auf. Räumlich gesehen ist nunmehr die Kupplung E radial unterhalb der Lamellenpaketes 200, 100 der Kupplungen B, A angeordnet. Unverändert ist auch das Eingangselement 120 der Kupplung A über das Eingangselement 220 der Kupplung B mit dem Ausgangselement - also dem Hohlrad HO_VS - des Vorschaltradsatzes VS verbunden. Im Unterschied zu Fig. 2 jedoch ist dieses Eingangselement 120 der Kupplung A nunmehr als Außenlamellenträger ausgeführt, zur Aufnahme von vorzugsweise als außenverzahnte Stahllamellen ausgebildeten Außenlamellen des Lamellenpaketes 100 der Kupplung A. Entsprechend ist das Ausgangselement 130 der Kupplung A nunmehr als Innenlamellenträger ausgebildet zur Aufnahme von vorzugsweise als innenverzahnte Belaglamellen ausgebildeten Innenlamellen des Lamellenpaketes 100 der Kupplung A. Im Unterschied zu Fig. 2 rotiert die Servoeinrichtung 110 der Kupplung A nunmehr ständig mit Drehzahl des Ausgangselementes - also mit Drehzahl des Hohlrads HO_VS - des Vorschaltradsatzes VS und betätigt das ihr zugeordnete Lamellenpaket 100 beim Schließen nunmehr "gezogen" in zum Hauptradsatz HS entgegengesetzter Richtung. Hierzu ist die Servoeinrichtung 110 axial verschiebbar an dem Eingangselement 220 der Kupplung B gelagert, wobei ein in Fig. 4 zur Vereinfachung nicht näher dargestellter Druckraum dieser Servoeinrichtung 110 auf der dem Vorschaltradsatz VS abgewandten Seite des Eingangselementes 220 der Kupplung B angeordnet ist und vorzugsweise mehrere am Umfang verteilt angeordnete Betätigungsfinger dieser Servoeinrichtung 110 sowohl die Kupplung B als auch das Lamellenpaket 100 der Kupplung A in axialer Richtung radial umgreifen und von der hauptradsatznahen Seite des Lamellenpaketes 100 auf dieses Lamellenpaket 100 wirken. Vorzugsweise sind die Druckräume der Servoeinrichtungen 110, 210 beider Kupplungen A, B benachbart zueinander angeordnet und nur durch eine Mantelfläche der Eingangselementes (Außenlamellenträgers) 220 der Kupplung B voneinander getrennt

Hinsichtlich der konstruktiven Ausgestaltung und räumlichen Anordnung der übrigen Bauelementes des Getriebes gemäß Fig. 4 wird auf die detaillierte Beschreibung der Fig. 2 verwiesen.

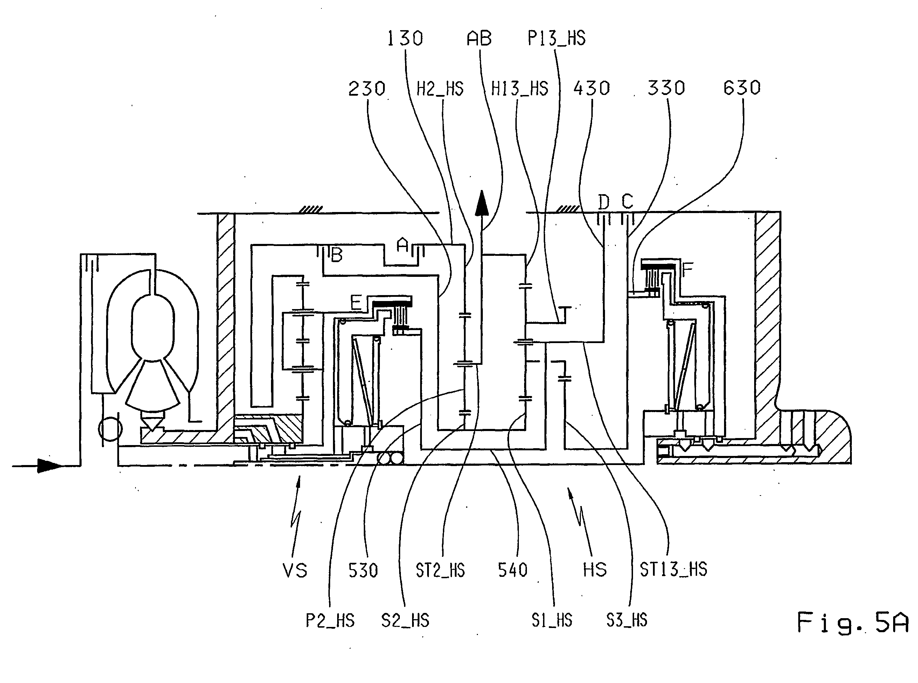

Anhand Fig. 5A wird nachfolgend nun ein viertes beispielhaftes Getriebeschema gemäß der vorliegenden Erfindung erläutert, basierend auf dem zuvor beschriebenen Getriebeschema gemäß Fig. 4, wobei die Änderungen zu diesem lediglich die konstruktive Ausgestaltung des Hauptradsatzes HS betreffen. Anhand dieses Beispiels soll nochmals veranschaulicht werden, dass die erfindungsgemäß vorgeschlagene Bauteilanordnung auch auf andere konstruktive Ausführungen des Hauptradsatzes HS mit "reduzierten gekoppelten Planetenradsätzen" anwendbar sind. Wesentlich ist hierbei nur die Beibehaltung der kinematischen Koppelungen der sechs Schaltelemente A bis F an die Radsatzelemente im Sinne einer Abfolge im Drehzahlplan des Automatgetriebes.

Wie in Fig. 5A ersichtlich, ist der Hauptradsatz HS wie in Fig. 4 als "reduziertes Dreisteg-Fünfwellen-Planetangetriebe" ausgeführt mit drei gekoppelten Planetenradsätzen, von denen zwei derart zusammengefasst sind, dass sie ein gemeinsames Hohlrad und einen gemeinsamen Steg, aber getrennte Sonnenräder aufweise. Der verbleibende Einzel-Planetenradsatz dieses Hauptradsatzes HS umfasst wie in Fig. 4 ein Hohlrad H2_HS, ein Sonnenrad S2_HS sowie einen Steg ST2_HS mit daran verdrehbar gelagerten kurzen Planetenrädern P2_HS. Der als ein "Planetenradsatz mit geteiltem Sonnenrad" zusammengefasste Planetenradsatz des Hauptradsatzes HS umfasst wie in Fig. 4 ein gekoppeltes Hohlrad H13_HS, zwei Sonnenräder S1_HS und S3_HS, sowie einen gekoppelten Steg ST13_HS mit daran verdrehbar gelagerten langen Planetenrädern P13_HS. In der Summe weist der so reduzierte Hauptradsatz HS tatsächlich nur zwei Stege (ST13_HS, ST2_HS) auf. Die langen Planetenräder P13_HS kämmen dabei mit dem Hohlrad H13_HS und den beiden Sonnenrädern S1_HS und S3_HS, die kurzen Planetenräder P2_HS mit dem Hohlrad H2_HS und dem Sonnenrad S2_HS. Als weitere Koppelung weist der Hauptradsatz HS eine feste Verbindung zwischen dem gekoppelten Hohlrad H13_HS und dem zweiten Steg ST2_HS sowie eine feste Verbindung zwischen dem ersten und zweiten Sonnenrad S1_HS, S2_HS auf. Die langen Planetenräder P13_HS des Hauptradsatzes HS bilden eine Wirkverbindung zwischen dem erstem und dem dritten Sonnenrad S1_HS, S3_HS. Räumlich gesehen ist das erste Sonnenrad S1_HS des Hauptradsatzes HS axial zwischen dem zweiten und dritten Sonnenrad S2_HS, S3_HS des Hauptradsatzes HS angeordnet.

Das in Fig. 5A dargestellte Automatgetriebe weist hier also insgesamt vier nicht fest miteinander verbundene Eingangselemente und ein Ausgangselement auf, wobei die miteinander verbundenen Sonnenräder S1_HS und S2_HS das mit dem Ausgangselement 230 der Kupplung B verbundene erste Eingangselement, das zweite Hohlrad H2_HS das mit dem Ausgangselement 130 der Kupplung A verbundene zweite Eingangselement, der gekoppelte Steg ST13_HS das mit den Ausgangselementen 530, 430 der Schaltelemente E, D verbundene dritte Eingangselement, das dritte Sonnenrad S3_HS das mit den Ausgangselementen 630, 330 der Schaltelemente F, C verbundene vierte Eingangselement, und das mit dem zweiten Steg ST2_HS verbundene gekoppelte Hohlrad H13_HS das mit der Abtriebswelle AB verbundene Ausgangselement des Hauptradsatzes HS bilden. Das erste Eingangselement des Hauptradsatzes HS ist über die langen Planetenräder P13_HS des Hauptradsatzes HS mit dem vierten Eingangselement des Hauptradsatzes HS wirkverbunden.

Im Unterschied zu Fig. 4 sind die an dem gekoppelten Steg ST13_HS verdrehbar gelagerten langen Planetenräder P13_HS des Hauptradsatzes HS nunmehr als Sfufenplaneten ausgebildet mit unterschiedlichen Verzahnungen für die beiden Sonnenräder S1_HS und S3_HS des Hauptradsatzes HS. Entsprechend haben das erste und dritte Sonnenrad S1_HS, S3_HS des Hauptradsatzes HS nunmehr eine unterschiedliche Zähnezahl. Beispielhaft kämmt das gekoppelte Hohlrad H13_HS des Hauptradsatzes HS mit der gleichen Verzahnung der langen Planetenräder P13_HS des Hauptradsatzes HS, mit der auch das erste Sonnenrad S1_HS des Hauptradsatzes HS kämmt. Selbstverständlich könnte in einer anderen Ausgestaltung auch vorgesehen sein, dass das gekoppelte Hohlrad (H13_HS) des Hauptradsatzes mit der gleichen Verzahnung der langen Planetenräder (P13_HS) des Hauptradsatzes kämmt, mit der auch das dritte Sonnenrad (S3_HS) des Hauptradsatzes kämmt. Wesentlich ist, dass in einem Drehzahlplan dieses Automatgetriebes gemäß Fig. 5A das genannte vierte Eingangselement und das erste Eingangselement des Hauptradsatzes nunmehr nicht mehr zusammenfallen, sondern in diesem Drehzahlplan benachbart zueinander liegen.

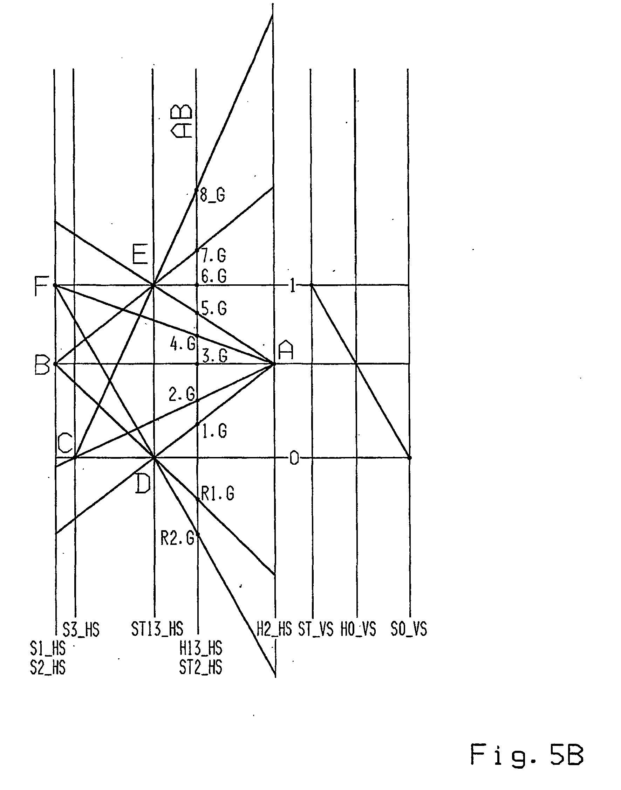

Zur Verdeutlichung dieses Sachverhaltes ist in Fig. 5B ein Drehzahlplan für das in Fig. 5A dargestellte Automatgetriebe dargestellt. Ist beispielsweise die Standgetriebeübersetzung des ersten der drei gekoppelten Planetenradsätze des Hauptradsatzes HS, definiert durch das Verhältnis der Zähnezahlen von Hohlrad H13_HS und Sonnenrad S1_HS, betragsmäßig größer als die Standgetriebeübersetzung des dritten der drei gekoppelten Planetenradsätze des Hauptradsatzes HS, definiert durch das Verhältnis der Zähnezahlen von Hohlrad H13_HS und Sonnenrad S3_HS sowie durch das Verhältnis der Zähnezahlen der beiden Stufen der Stufenplanetenräder P13_HS, so liegt die Linie des vierten Eingangselementes (S3_HS) des Hauptradsatzes HS im Drehzahlplan benachbart zur Linie des ersten Eingangselementes (S1_HS bzw. S2_HS) des Hauptradsatzes HS rechts von dieser, also näher an der Linie des Abtriebselementes (H13_HS bzw. ST2_HS) des Hauptradsatzes HS als die genannte Linie des ersten Eingangselementes (S1_HS bzw. S2_HS) des Hauptradsatzes HS. Die drei Schaltelemente B, C und F haben im Drehzahlplan also auch nicht mehr eine gemeinsame Linie, nur die beiden Kupplungen B und F liegen noch auf einer gemeinsamen Linie. Insofern kann der in Fig. 4 dargestellte Hauptradsatz auch als ein Sonderfall des Hauptradsatzes gemäß Fig. 5A verstanden werden, bei dem - im Unterschied zu Fig. 5A bzw. Fig. 5B - die Linien des ersten und vierten Eingangselementes (S1_HS bzw. S2_HS, S3_HS) des Hauptradsatzes HS zusammenfallen.

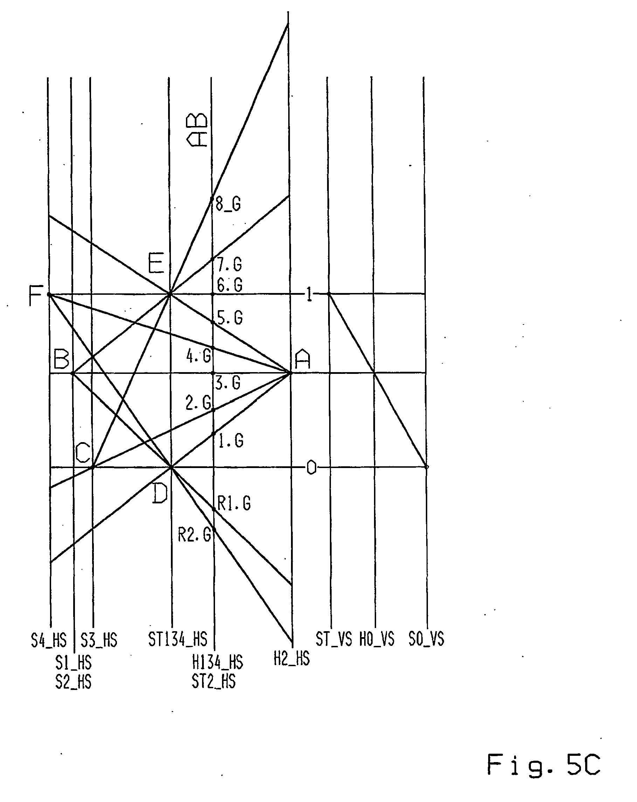

Dem Fachmann ist hieraus klar, dass es auch ohne Probleme möglich ist, alle Zentralräder (Sonnenräder, Hohlräder) des mehrgliedrigen Hauptradsatzes HS ähnlich den in Fig. 4 und Fig. 5A dargestellten Beispielen bauteilseitig in zwei oder mehr Bauteile zu teilen unter Beibehaltung der Anzahl der Hauptradsatz-Stege von zwei, sodass diese geteilten Zentralräder dann jeweils über die ihnen zugeordneten Planetenräder kinematisch miteinander wirkverbunden sind. Selbstverständlich können die zu diesem geteilten Zentralrad korrespondierenden Planetenräder als ungestufte oder gestufte Planetenräder ausgeführt sein. Ein Beispiel für eine derartige weitere Teilung von Zentralrädern des Hauptradsatzes ist in einem in Fig. 5C dargestellten weiteren Drehzahlplan angedeutet bei dem- ausgehend von dem Automatgetriebe gemäß Fig. 5A - im Hauptradsatz das ursprüngliche dritte Sonnenrad nochmals geteilt ist in die Sonnenräder S3_HS und S4_HS, in der Summe also nunmehr vier Sonnenräder S1_HS, S2_HS, S3_HS und S4_HS, ein gekoppeltes Hohlrad H134_HS, ein einfaches Hohlrad H2_HS, ein gekoppelter Steg ST134_HS sowie ein einfacher Steg ST2 vorgesehen sind. Vom Prinzip her ist dieser Hauptradsatz hier also ein Viersteg-Fünfwellen-Planetengetriebe, das auf eine Zweisteg-Einheit mit fünf nicht miteinander verbundenen Eingangselementen und einem Ausgangselement reduziert ist. Dabei kämmen die Planetenräder des einfachen Stegs ST2_HS unverändert mit dem einfachen Hohlrad H2_HS und dem zweiten Sonnenrad S2_HS, die Planetenräder des "neuen" gekoppelten Stegs ST134_HS kämmen jedoch mit dem gekoppelten Hohlrad H134_HS und den anderen drei Sonnenrädern S1_HS, S3_HS, S4_HS des Hauptradsatzes, wobei diese beiden "neuen" Sonnenräder S3_HS, S4_HS eine unterschiedliche Zähnezahl aufweisen. Die beiden miteinander gekoppelten Sonnenräder S1_HS, S2_HS bilden das erste Eingangselement des Hauptradsatzes und sind mit dem Ausgangselement der Kupplung B verbunden. Das Hohlrad H2_HS bildet das zweite Eingangselement des Hauptradsatzes und ist mit dem Ausgangselement der Kupplung A verbunden. Der Steg ST134_HS bildet das dritte Eingangselement des Hauptradsatzes und ist mit den Ausgangselementen der Schaltelemente E und D verbunden. Das "neue" dritte Sonnenrad S3_HS bildet das vierte Eingangselement des Hauptradsatzes, welches nunmehr ausschließlich mit dem Ausgangselement der Bremse C verbunden ist. Das "neue" vierte Sonnenrad S4_HS bildet das fünfte Eingangselement des Hauptradsatzes, welches ausschließlich mit dem Ausgangselement der Kupplung F verbunden ist. Hohlrad H134_HS und Steg ST2_HS schließlich sind miteinander gekoppelt und bilden das mit der Abtriebswelle AB verbundene Ausgangselement des Hauptradsatzes.

In dem in Fig. 5C dargestellten Beispiel ist die Standgetriebeübersetzung des ersten der vier gekoppelten Planetenradsätze des Hauptradsatzes, definiert durch das Verhältnis der Zähnezahlen von Hohlrad H134_HS und Sonnenrad S1_HS, betragsmäßig größer als die Standgetriebeübersetzung des dritten der vier gekoppelten Planetenradsätze des Hauptradsatzes, definiert durch das Verhältnis der Zähnezahlen von Hohlrad H134_HS und Sonnenrad S3_HS sowie durch das Verhältnis der Zähnezahlen der beiden Stufen der Stufenplanetenräder P13_HS, und betragsmäßig kleiner als die Standgetriebeübersetzung des vierten der vier gekoppelten Planetenradsätze des Hauptradsatzes, definiert durch das Verhältnis der Zähnezahlen von Hohlrad H134_HS und Sonnenrad S4_HS sowie durch das Verhältnis der Zähnezahlen der beiden Stufen der Stufenplanetenräder P13_HS. Hieraus ergibt sich einerseits, dass die Linie des vierten Eingangselementes (S3_HS) des Hauptradsatzes im Drehzahlplan benachbart zur Linie des ersten Eingangselementes (S1_HS bzw. S2_HS) des Hauptradsatzes rechts von dieser liegt, also näher an der Linie des Abtriebselementes (H134_HS bzw. ST2_HS) des Hauptradsatzes als die genannte Linie des ersten Eingangselementes (S1_HS bzw. S2_HS) des Hauptradsatzes. Andererseits ergibt sich hieraus auch, dass die Linie des fünften Eingangselementes (S4_HS) des Hauptradsatzes im Drehzahlplan benachbart zur Linie des ersten Eingangselementes (S1_HS bzw. S2_HS) des Hauptradsatzes links von dieser liegt, also weiter von der Linie des Abtriebselementes (H134_HS bzw. ST2_HS) des Hauptradsatzes entfernt als die genannte Linie des ersten Eingangselementes (S1_HS bzw. S2_HS) des Hauptradsatzes. Bezogen auf die Eingangselemente des Hauptradsatzes liegen alle drei Schaltelemente B, C und F im Drehzahlplan also auf unterschiedlichen Linien.

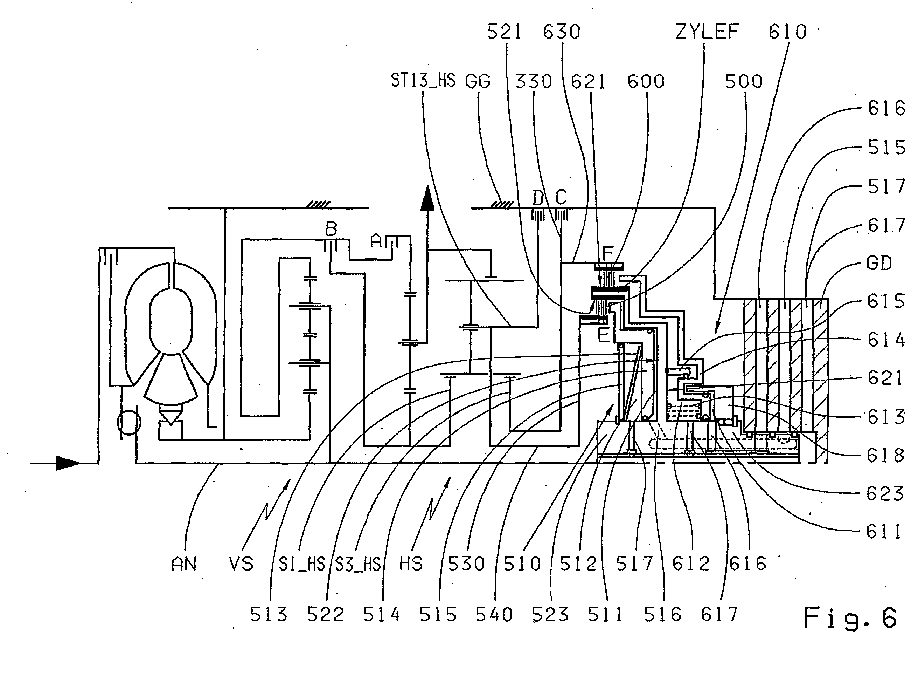

Anhand Fig. 6 wird nachfolgend nun ein fünftes beispielhaftes Getriebeschema gemäß der vorliegenden Erfindung erläutert, basierend auf dem zuvor beschriebenen Getriebeschema gemäß Fig. 4, wobei die Änderungen zu diesem im wesentlichen nur die räumliche Anordnung der Kupplung E betreffen. Wie in Fig. 6 ersichtlich, bilden die beiden Kupplungen E und F nunmehr eine fertigungstechnisch einfach vormontierbare Baugruppe, umfassend einen für beide Kupplungen E und F gemeinsamen Lamellenträger ZYLEF, die Servoeinrichtungen 510, 610 beider Kupplungen E und F, sowie die Lamellenpakete 500, 600 beider Kupplungen E und F. Dieser Lamellenträger ZYLEF bildet für beide Kupplungen E und F deren Eingangselement und ist entsprechend mit der Antriebswelle AN verdrehfest verbunden. Für die Kupplung E ist der Lamellenträger ZYLEF als Außenlamellenträger zur Aufnahme von vorzugsweise als außenverzahnte Stahllamellen ausgebildeten Außenlamellen des Lamellenpaketes 500 der Kupplung E ausgebildet, für die Kupplung F als Innenlamellenträger zur Aufnahme von vorzugsweise als innenverzahnte Belaglamellen ausgebildeten Innenlamellen des Lamellenpaketes 600 der Kupplung F. Räumlich gesehen ist das Lamellenpaket 600 der Kupplung F in einem Bereich radial über dem Lamellenpaket 500 der Kupplung E angeordnet, wobei die gesamte aus Kupplung E und F bestehende Baugruppe auf der dem Vorschaltradsatz VS abgewandten Seite des Hauptradsatzes HS angeordnet ist.

Selbstverständlich können anstelle der wechselseitig angeordneten Stahllamellen (ohne Reibbelag) und Belaglamellen auch einseitig mit einem Reibbelag belegte Stahllamellen verwendet werden, wobei dann jeweils eine außenverzahnte belegte Stahllamelle und eine innenverzahnte belegte Stahllamelle wechselseitig zu einem Lamellenpaket zusammengefügt werden müssen. Selbstverständlich können anstelle der vorgeschlagenen Stahllamellen auch Lamellen aus Carbon oder Kohlefaser oder anderen geeigneten Verbundwerkstoffen verwendet werden.

Geometrisch ist der für die Kupplungen E und F gemeinsame Lamellenträger ZYLEF im wesentlichen in Form eines in Richtung Hauptradsatz HS geöffneten Topfes ausgebildet, mit einem zylindrischen Abschnitt 521, an dessen Innendurchmesser die Außenlamellen des Lamellenpaketes 500 der Kupplung E angeordnet sind, mit einem zumindest weitgehend scheibenförmigen Abschnitt (Topfboden) 522, der sich ausgehend vom hauptradsatzfernen Ende des genannten zylindrischen Abschnitts 521 radial nach innen erstreckt, mit einem der Kupplung E zuzuordnenden ersten Nabenabschnitt 523, der sich ausgehend vom Innendurchmesser des genannten Topfbodens (522) axial in Richtung Hauptradsatz HS erstreckt und an seinem hauptradsatznahen Ende mit der Antriebswelle AN verbunden ist, sowie mit einem der Kupplung F zuzuordnenden zweiten Nabenabschnitt 623, der sich ausgehend vom Innendurchmesser des genannten Topfbodens (522) axial in zum Hauptradsatz HS entgegengesetzter Richtung erstreckt und an seinem hauptradsatzfernen Ende an einem mit dem Getriebegehäuse GG verdrehfest verbundenen Gehäusedeckel GD verdrehbar gelagert ist. Der Außendurchmesser des zylindrischen Abschnitts 521 ist mit 621 bezeichnet, als Hinweis, dass dieser Abschnitt auch der Kupplung F zuzuordnen ist. An diesem Außendurchmesser ist nämlich das Mitnahmeprofil zur Aufnahme der Innenlamellen des Lamellenpaketes 600 der Kupplung F vorgesehen.

Die Servoeinrichtung 510 der Kupplung E, umfassend einen Druckraum 511, einen Druckausgleichsraum 512, einen Kolben 514, ein Rückstellelement 513 und eine Stauscheibe 515, ist radial oberhalb des ersten Nabenanschnitts 523 des Lamellenträgers ZYLEF vollständig innerhalb eines Zylinderraums angeordnet, der durch den Lamellenträger ZYLEF, insbesondere durch dessen zylindrischen Abschnitt 521 gebildet wird. Der Kolben 514 ist an diesem Lamellenträger ZYLEF axial verschiebbar gelagert. Entsprechend rotiert die Servoeinrichtung 510 ständig mit Drehzahl der Antriebswelle AN. Zum Ausgleich des rotatorischen Drucks des rotierenden Druckraums 511 der Servoeinrichtung 510 ist ein dynamischer Druckausgleich mit dem drucklos mit Schmiermittel befüllbaren Druckausgleichsraum 512 vorgesehen, wobei dieser Druckausgleichsraum 512 näher am Hauptradsatz HS angeordnet ist als der genannte Druckraum 511. Dabei wird der Druckraum 511 durch eine Mantelfläche des Lamellenträgers ZYLEF und den Kolben 514 gebildet. Der Druckausgleichsraum 512 wird gebildet durch den Kolben 514 und die Stauscheibe 515, welche axial an dem Nabenabschnitt 523 des Lamellenträgers ZYLEF fixiert ist und gegenüber dem Kolben 515 axial verschiebbar schmiermitteldicht abgedichtet ist. Der Kolben 514 ist über das hier beispielhaft als Tellerfeder ausgebildete Rückstellelement 513 axial gegen den Nabenabschnitt 523 des Lamellenträgers ZYLEF vorgespannt. Bei einer Beaufschlagung des Druckraums 511 mit Druckmittel zum Schließen der Kupplung E bewegt sich der Kolben 514 axial in Richtung Hauptradsatz HS und betätigt das ihm zugeordnete Lamellenpaket 500 gegen die Federkraft des Rückstellelementes 513.

Räumlich gesehen ist die Servoeinrichtung 510 der Kupplung E näher an Haupt- und Vorschaltradsatz HS, VS-angeordnet als die Servoeinrichtung 610 der Kupplung F. Dabei ist diese Servoeinrichtung 610 räumlich gesehen zumindest überwiegend in einem Bereich radial über dem zweiten Nabenabschnitt 623 des Lamellenträgers ZYLEF angeordnet und auch an dem Lamellenträger ZYLEF axial verschiebbar gelagert, Entsprechend rotiert auch die Servoeinrichtung 610 ständig mit Drehzahl der Antriebswelle AN. Die Servoeinrichtung 610 der Kupplung F umfasst einen Druckraum 611, einen Druckausgleichsraum 612, einen abschnittsweise meanderförmig ausgebildeten Kolben 614, ein Rückstellelement 613, eine zylindrische Stauscheibe 615 und eine topfförmige Stützscheibe 618. Zum Ausgleich des rotatorischen Drucks des rotierenden Druckraums 611 der Servoeinrichtung 610 ist ein dynamischer Druckausgleich mit dem Druckausgleichsraum 612 vorgesehen. Hierzu ist die zylindrische Stauscheibe 615 auf einem definierten Durchmesser schmiermitteldicht an den scheibenförmigen Abschnitt 522 des Lamellenträgers ZYLEF befestigt (im dargestellten Beispiel verschweißt), zum axial benachbarten Kolben 614 hin axial verschiebbar schmiermitteldicht abgedichtet und bildet zusammen mit der radial unterhalb der Stauscheibe 615 befindlichen Mantelfläche 621 des Lamellenträgers ZYLEF und dem radial unterhalb der Stauscheibe befindlichen Mantelfläche des Kolbens 614 den genannten Druckausgleichsraum 612. Der Druckausgleichsraum 612 der Servoeinrichtung 610 der Kupplung F und der Druckraum 511 der Servoeinrichtung 510 der Kupplung E sind also unmittelbar benachbart zueinander angeordnet und nur durch eine Mantelfläche des für die Kupplungen E und F gemeinsamen Lamellenträgers ZYLEF voneinander getrennt. Auf der dem Hauptradsatz HS bzw. dem Druckraum 511 abgewandten Seite des Druckausgleichsraums 612 ist der Druckraum 611 der Servoeinrichtung 610 angeordnet. Gebildet wird dieser Druckraum 611 durch den Kolben 615 und die Stützscheibe 618 und einen axialen Abschnitt der Nabe 623. Hierzu ist die Stützscheibe 618 druckmitteldicht an der Nabe 623 befestigt. Radial oberhalb des Abschnitts der Nabe 623, der den Druckraum 612 bildet, erstreckt sich ein zylindrischer Anschnitt dieser topfförmigen Stützscheibe 618 axial in Richtung Hauptradsatz HS (bzw. axial in Richtung Druckraum 511) und ist gegen einen korrespondierenden Abschnitt des Kolbens 614 hin druckmitteldicht axial verschiebbar abgedichtet. In seinem weiteren geometrischen Verlauf erstreckt sich der Kolben 614 zumindest weitgehend entlang der Außenkontur von Stützscheibe 618 und oberem Bereich des Lamellenträgers ZYLEF radial nach außen und axial in Richtung Hauptradsatz HS bis zu der hauptradsatzfernen Seite des ihm zugeordneten Lamellenpaket 600 der Kupplung F. Axial vorgespannt wird der Kolben 614 durch das Rückstellelement 613, dass hier beispielhaft als ein axial zwischen dem scheibenförmigen Lamellenträgerabschnitt 621 und dem Kolben 614 angeordnetes Spiralfederpaket ausgebildet ist. Bei einer Beaufschlagung des Druckraums 611 mit Druckmittel zum Schließen der Kupplung F bewegt sich der Kolben 614 axial in Richtung Hauptradsatz HS und betätigt das ihm zugeordnete Lamellenpaket 600 gegen die Federkraft des Rückstellelementes 613.

Aufgrund der Lagerung des Lamellenträgers ZYLEF an dem getriebegehäusefesten Gehäusedeckel GD ergibt sich eine konstruktiv vergleichsweise einfache Druck- und Schmiermittelzufuhr zu beiden Kupplungen E, F über entsprechende Kanäle bzw. Bohrungen, die abschnittsweise innerhalb dem genannten Gehäusedeckel GD und abschnittsweise innerhalb der Nabe des Lamellenträgers ZYLEF verlaufen. Eine Druckmittelzuführung zum Druckraum 511 der Servoeinrichtung 510 der Kupplung E ist mit 516 bezeichnet, eine Schmiermittelzuführung zum Druckausgleichsraum 512 der Servoeinrichtung 510 der Kupplung E mit 517, eine Druckmittelzuführung zum Druckraum 611 der Servoeinrichtung 610 der Kupplung F mit 616, und eine Schmiermittelzuführung zum Druckausgleichsraum 612 der Servoeinrichtung 610 der Kupplung F mit 617.

Das Ausgangselement 530 der Kupplung E ist als Innenlamellenträger ausgebildet, der sich ausgehend von dem Lamellenpaket 500 der Kupplung E axial angrenzend an die Servoeinrichtung 510 der Kupplung E radial nach innen erstreckt bis knapp oberhalb der Antriebswelle AN und in seinem Nabenbereich mit der Stegwelle 540 verdrehfest verbunden ist. Diese Stegwelle 540 erstreckt sich axial in Richtung Vorschaltradsatz VS bis zu einem Bereich zwischen dem (vorschaltradsatzfernen) dritten Sonnenrad S3_HS und dem (räumlich mittleren) ersten Sonnenrad S1_HS des Hauptradsatzes HS und durchgreift dabei das dritte Sonnenrad S3_HS des Hauptradsatzes HS zentrisch in axialer Richtung. In dem genannten Bereich axial zwischen den Sonnenrädern S3_HS und S1_HS ist die Stegwelle 540 mit dem Stegblech des vorschaltradsatzfernen gekoppelten Stegs ST13_HS des Hauptradsatzes HS verdrehfest verbunden.

Das Ausgangselement 630 der Kupplung F ist als Außenlamellenträger ausgebildet, der sich ausgehend von dem Lamellenpaket 600 der Kupplung F axial angrenzend an das Ausgangselement (bzw. den Innenlamellenträger) 530 der Kupplung E bis knapp oberhalb der Stegwelle 540 radial nach innen erstreckt und in seinem Nabenbereich mit dem (vorschaltradsatzfernen) dritten Sonnenrad S3_HS des Hauptradsatzes HS verdrehfest verbunden. Das ebenfalls kinematisch an das dritte Sonnenrad S3_HS des Hauptradsatzes HS gekoppelte Ausgangselement 330 der Bremse C ist hier beispielhaft im Bereich des Außendurchmessers des Außenlamellenträger (630) der Kupplung F mit diesem Außenlamellenträger (630) verdrehfest verbunden.

Ansonsten entspricht die in Fig. 6 dargestellte Bauteilanordnung im wesentlichen der bereits in Fig. 4 dargestellten Anordnung.

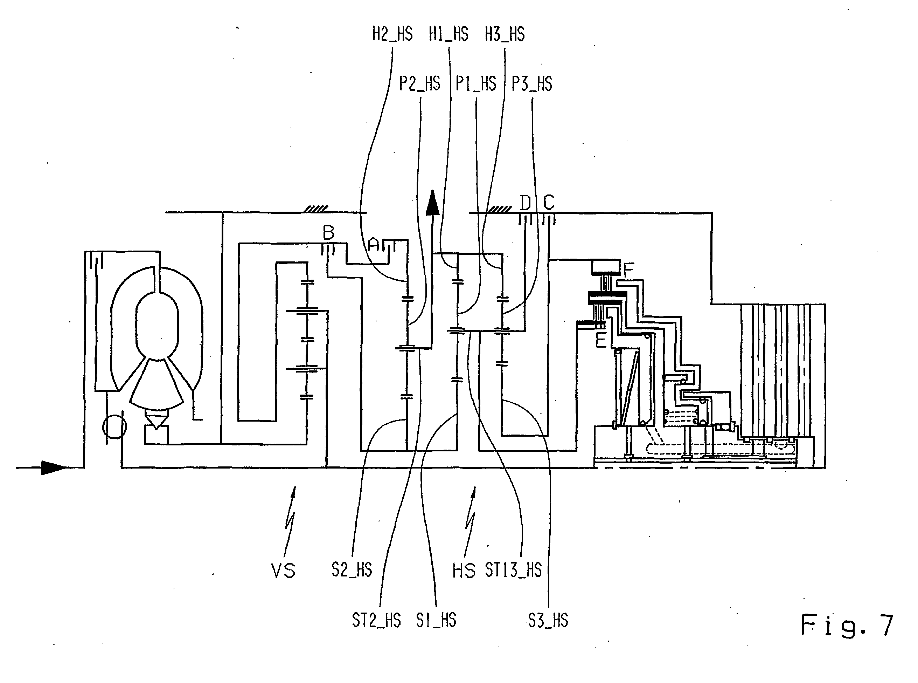

Selbstverständlich kann die anhand Fig. 6 beschriebene Bauteilanordnung auch mit einem anderen Hauptradsatz-Typ kombiniert werden, wie er beispielsweise anhand Fig. 5A, Fig. 5B oder Fig. 5C beschrieben ist. Ein entsprechendes sechstes beispielhaftes Getriebeschema gemäß der vorliegenden Erfindung ist in Fig. 7 dargestellt. Der Hauptradsatz HS ist hierbei ein Dreisteg-Vierwellen-Planetengetriebe, das auf ein Zweisteg-Planetengetriebe reduziert ist, umfassend nunmehr drei Sonnenräder S1_HS, S2_HS und S3_S, drei Hohlräder H1_HS, H2_HS und H3_S, einen gekoppelten Steg ST13_HS mit daran verdrehbar gelagerten Planetenrädern P1_HS und P3_HS, sowie einem einfachen Steg ST2_HS mit daran verdrehbar gelagerten Planetenrädern P2_HS. Dabei sind das Sonnenrad S1_HS, das Hohlrad H1_HS und die mit diesem Sonnenrad S1_HS und diesem Hohlrad H1_HS kämmenden Planetenräder P1_HS dem ersten der drei Einzel-Planetenradsätze des Hauptradsatzes HS zugeordnet. Das Sonnenrad S2_HS, das Hohlrad H2_HS und die mit diesem Sonnenrad S2_HS und diesem Hohlrad H2_HS kämmenden Planetenräder P2_HS sind dem zweiten der drei Einzel-Planetenradsätze des Hauptradsatzes HS zugeordnet. Das Sonnenrad S3_HS, das Hohlrad H3_HS und die mit diesem Sonnenrad S3_HS und diesem Hohlrad H3_HS kämmenden Planetenräder P3_HS schließlich sind dem zweiten der drei Einzel-Planetenradsätze des Hauptradsatzes HS zugeordnet. Räumlich gesehen ist der genannte erste der drei Einzel-Planetenradsätze des Hauptradsatzes HS wieder axial zwischen dem vorschaltradsatznahen zweiten der drei Einzel-Planetenradsätze des Hauptradsatzes HS und dem vorschaltradsatzfemen dritten der drei Einzel-Planetenradsätze des Hauptradsatzes HS angeordnet. Die beiden Sonnenräder S2_HS und S1_HS sind fest miteinander verbunden. Als weitere kinematische Koppelung des Hauptradsatzes HS ist eine feste Verbindung zwischen dem (einfachen) Steg ST2_HS und dem beiden Hohlrädem H1_HS und H3_HS vorgesehen. Der so aufgebaute Hauptradsatz HS des in Fig. 7 dargestellten sechsten erfindungsgemäßen Getriebeschema entspricht in seiner Funktion dem in Fig. 5A dargestellten Hauptradsatz HS, dessen erster und dritter Einzel-Planetenradsatz über einen gemeinsamen Steg (ST13_HS) mit daran verdrehbar gelagerten Stufenplaneten (P13_HS) gekoppelt sind.

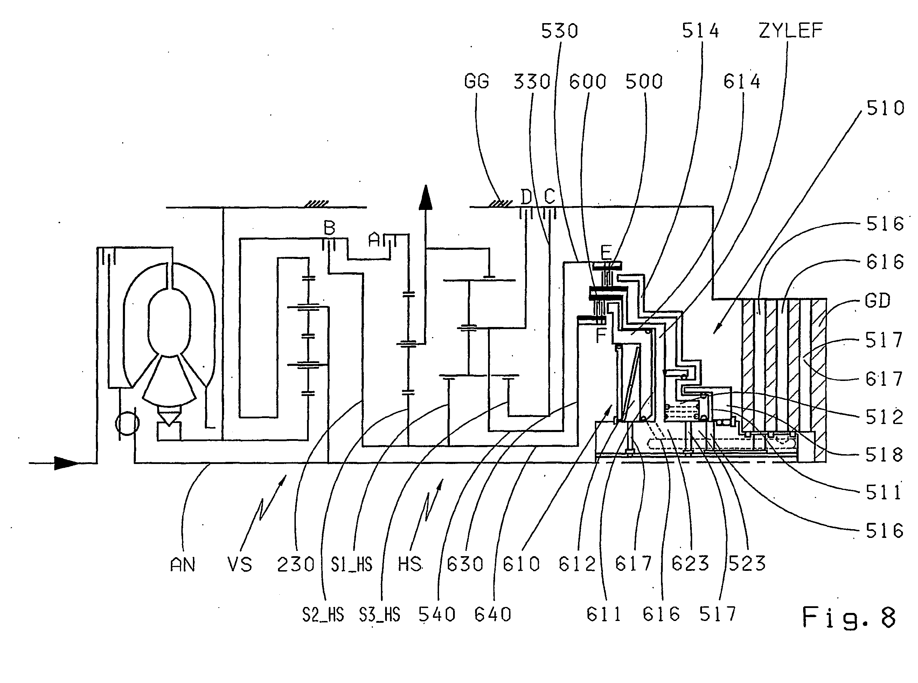

Anhand Fig. 8 wird nachfolgend nun ein siebtes beispielhaftes Getriebeschema gemäß der vorliegenden Erfindung erläutert, basierend auf dem zuvor beschriebenen Getriebeschema gemäß Fig. 6, wobei die Änderungen zu diesem im wesentlichen nur die Ausgestaltung der durch die beiden Kupplungen E und F gebildeten Baugruppe betrifft. Unverändert ist diese Baugruppe auf der dem Vorschaltradsatz VS abgewandten Seite des Hauptradsatzes HS angeordnet und umfasst einen für beide Kupplungen E und F gemeinsamen Lamellenträger ZYLEF, die Servoeinrichtungen 510, 610 beider Kupplungen E und F, sowie die Lamellenpakete 500, 600 beider Kupplungen E und F. Dieser Lamellenträger ZYLEF bildet für beide Kupplungen E und F deren Eingangselement und ist entsprechend mit der Antriebswelle AN verdrehfest verbunden.

Wie in Fig. 8 ersichtlich, ist das Lamellenpaket 600 der Kupplung F nunmehr räumlich gesehen radial unter dem Lamellenpaket 500 der Kupplung E angeordnet. Entsprechend ist der Lamellenträger ZYLEF für die Kupplung F als Außenlamellenträger zur Aufnahme von beispielsweise als außenverzahnte Stahllamellen ausgebildeten Außenlamellen des (nunmehr radial inneren) Lamellenpaketes 600 dieser Kupplung F ausgebildet, und für die Kupplung E als Innenlamellenträger zur Aufnahme von beispielsweise als innenverzahnte Belaglamellen ausgebildeten Innenlamellen des (nunmehr radial äußeren) Lamellenpaketes 500 der Kupplung E. Entsprechend ist auch die räumliche Lage der Servoeinrichtungen 510 und 610 der beiden Kupplungen E, F gegenüber Fig. 6 vertauscht und die Servoeinrichtung 610 der Kupplung F nunmehr näher am Hauptradsatz HS angeordnet als die Servoeinrichtung 510 der Kupplung E. Insofern ist die zuvor anhand Fig. 6 im Detail beschriebene Ausgestaltung dieser Servoeinrichtungen 510, 610 sinngemäß einfach übertragbar, weshalb auf deren nochmalige detaillierte verbale Beschreibung an dieser Stelle verzichtet werden kann. Zur Vermeidung von Missverständnissen seien hier lediglich die abweichenden und neuen Bezugszeichen namentlich vermerkt. So ist Fig. 8 der - nun der Kupplung F zuzuordnende - hauptradsatznahe Nabenabschnitt des Lamellenträgers ZYLEF mit 623 bezeichnet, der - nun der Kupplung E zuzuordnende - hauptradsatzfeme Nabenabschnitt des Lamellenträgers ZYLEF mit 523. Zur Bildung des Druckraums 511 der Servoeinrichtung 510 der Kupplung E ist eine Stützscheibe 518 vorgesehen, die am hauptradsatzfernen Nabenabschnitt 523 druckmitteldicht befestigt und gegenüber einem abschnittsweise meanderförmig ausgebildeten Kolben 514 dieser Servoeinrichtung 510 druckmitteldicht axial verschiebbar ist. Im Unterschied zu Fig. 6 sind nunmehr der Druckraum 611 der Servoeinrichtung 610 der Kupplung F und der Druckausgleichsraum 512 der Servoeinrichtung 510 der Kupplung E unmittelbar benachbart zueinander angeordnet und nur durch eine Mantelfläche der Lamellenträgers ZYLEF voneinander getrennt.

Wie in Fig. 8 weiterhin ersichtlich, ist das Ausgangselement 630 der Kupplung F im Unterschied zu Fig. 6 nunmehr als Innenlamellenträger ausgebildet, der sich ausgehend von dem radial inneren Lamellenpaket 600 der aus den Kupplungen E und F bestehenden Baugruppe axial angrenzend an die Servoeinrichtung 610 der Kupplung F radial nach innen erstreckt bis knapp oberhalb der Antriebswelle AN und in seinem Nabenbereich mit einer dritten Sonnenwelle 640 verdrehfest verbunden ist. Diese dritte Sonnenwelle 640 umgreift die Antriebswelle AN radial und erstreckt sich axial in Richtung Vorschaltradsatz VS und durchgreift dabei den Hauptradsatzes HS zentrisch in axialer Richtung vollständig. Verdrehfest verbunden ist diese dritte Sonnenwelle 640 zum einen auch mit dem (räumlich mittleren) ersten Sonnenrad S1_HS und dem (vorschaltradsatznahen) zweiten Sonnenrad S2_HS des Hauptradsatzes HS, zum anderen auch (räumlich gesehen in einem Bereich axial zwischen Vorschaltradsatz VS und Hauptradsatz HS) mit dem Ausgangselement 230 der Kupplung B. Das Ausgangselement 330 der Bremse C ist unmittelbar mit dem (vorschaltradsatzferne) dritten Sonnenrad S3_HS des Hauptradsatzes HS verdrehfest verbunden, im dargestellten Beispiel abschnittsweise axial unmittelbar an den Hauptradsatz HS angrenzend.

Im Unterschied zu Fig. 6 ist in Fig. 8 das Ausgangselement 530 der Kupplung E nunmehr als Außenlamellenträger ausgebildet. Ausgehend von dem radial äußeren Lamellenpaket 500 der aus den Kupplungen E und F bestehenden Baugruppe erstreckt sich dieser Außenlamellenträger (530) der Kupplung E abschnittsweise zumindest weitgehend parallel axial zwischen dem Ausgangselement (Innenlamellenträger) 630 der Kupplung F und dem Ausgangselement 330 der Bremse C radial nach innen bis zu einem Durchmesser knapp oberhalb der dritten Sonnenwelle 640. In seinem Nabenbereich ist der Innenlamellenträger (530) der Kupplung E wiederum mit der Stegwelle 540 verdrehfest verbunden, welche die dritte Sonnenwelle 640 radial umschließt. Wie in Fig. 6 durchgreift die Stegwelle 540 das (vorschaltradsatzferne) dritte Sonnenrad S3_HS des Hauptradsatzes HS in axialer Richtung und ist im Bereich axial zwischen den Sonnenrädern S3_HS und S1_HS verdrehfest mit dem Stegblech des (vorschaltradsatzfernen) gekoppelten Stegs ST13_HS des Hauptradsatzes HS verbunden.

Ansonsten entspricht die in Fig. 8 dargestellte Bauteilanordnung der bereits in Fig. 6 dargestellten Anordnung.

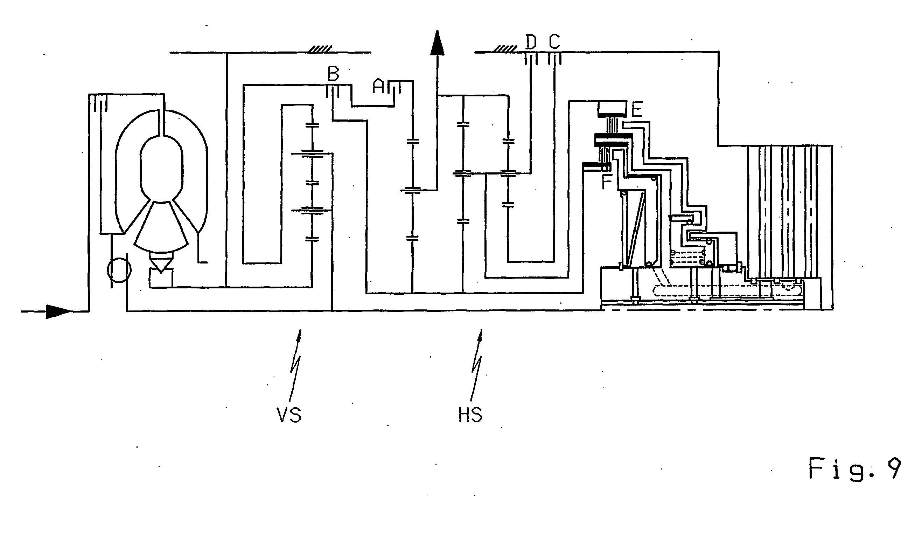

Selbstverständlich kann auch die anhand Fig. 8 beschriebene Bauteilanordnung mit einem anderen Hauptradsatz-Typ kombiniert werden, wie er beispielsweise anhand Fig. 5A, Fig. 5B oder Fig. 5C beschrieben ist. Ein entsprechendes achtes beispielhaftes Getriebeschema gemäß der vorliegenden Erfindung ist in Fig. 9 dargestellt. Der Hauptradsatz HS ist hierbei ein Dreisteg-Vierwellen-Planetengetriebe, das auf ein Zweisteg-Planetengetriebe reduziert ist und dabei identisch wie der in Fig. 7 dargestellte Hauptradsatz HS aufgebaut ist, weshalb an dieser Stelle auf dessen nochmalige detaillierte Beschreibung verzichtet werden kann.

### Bezugszeichen

- A: erstes Schaltelement, Kupplung
- B: zweites Schaltelement, Kupplung
- C: drittes Schaltelement, Bremse
- D: viertes Schaltelement, Bremse
- E: fünftes Schaltelement, Kupplung
- F: sechstes Schaltelement, Kupplung

- AN: Antriebswelle
- AB: Abtriebswelle
- GG: Getriebegehäuse
- GD: stirnseitiger Gehäusedeckel
- GN: Nabe des Gehäusedeckels
- GW: Gehäusewand
- ZYL: Zylinder
- ZYLEF: Lamellenträger des fünften und sechsten Schaltelementes

- VS: Vorschaltradsatz
- HO_VS: Hohlrad des Vorschaltradsatzes
- SO_VS: Sonnenrad des Vorschaltradsatzes
- ST_VS: (gekoppelter) Steg des Vorschaltradsatzes
- P1_VS: inneres Planetenrad des Vorschaltradsatzes
- P2_VS: äußeres Planetenrad des Vorschaltradsatzes

- HS: Hauptradsatz
- HO_HS: (einziges) Hohlrad des Hauptradsatzes
- H1_HS: erstes Hohlrad des Hauptradsatzes
- H13_HS: gekoppeltes (erstes) Hohlrad des Hauptradsatzes
- H134_HS: gekoppeltes (erstes) Hohlrad des Hauptradsatzes
- H2_HS: zweites Hohlrad des Hauptradsatzes
- H3_HS: drittes Hohlrad des Hauptradsatzes
- S1_HS: erstes Sonnenrad des Hauptradsatzes
- S2_HS: zweites Sonnenrad des Hauptradsatzes
- S3_HS: drittes Sonnenrad des Hauptradsatzes
- S4_HS: viertes Sonnenrad des Hauptradsatzes
- ST_HS: gekoppelter (einziger) Steg des Hauptradsatzes
- ST1_HS: erster Steg des Hauptradsatzes
- ST13_HS: gekoppelter (erster) Steg des Hauptradsatzes
- ST134_HS: gekoppelter (erster) Steg des Hauptradsatzes
- ST2_HS: zweiter Steg des Hauptradsatzes
- P1_HS: langes (erstes) Planetenrad des Hauptradsatzes
- P13_HS: gekoppeltes langes Planetenrad des Hauptradsatzes
- P2_HS: kurzes (zweites) Planetenrad des Hauptradsatzes
- P3_HS: drittes Planetenrad des Hauptradsatzes
- PL_HS: erstes Planetenrad des Hauptradsatzes
- PLa_HS: äußeres Planetenrad des Hauptradsatzes
- PLi_HS: inneres Planetenrad des Hauptradsatzes

- 100: Lamellen des ersten Schaltelementes
- 110: Servoeinrichtung des ersten Schaltelementes
- 120: Eingangselement des ersten Schaltelementes
- 130: Ausgangselement des ersten Schaltelementes
- 131: zylindrischer Abschnitt des Ausgangselementes des ersten Schaltelementes
- 132: scheibenförmiger Abschnitt des Ausgangselementes des ersten Schaltelementes
- 133: Nabe des Ausgangselementes des ersten Schaltelementes
- 140: zweite Sonnenwelle

- 200: Lamellen des zweiten Schaltelementes
- 210: Servoeinrichtung des zweiten Schaltelementes
- 220: Eingangselement des zweiten Schaltelementes
- 221: zylindrischer Abschnitt des Eingangselementes des zweiten Schaltelementes
- 222: scheibenförmiger Abschnitt des Eingangselementes des zweiten Schaltelementes
- 223: Nabe des Eingangselementes des zweiten Schaltelementes
- 230: Ausgangselement des zweiten Schaltelementes
- 231: zylindrischer Abschnitt des Ausgangselementes des zweiten Schaltelementes
- 232: scheibenförmiger Abschnitt des Ausgangselementes des zweiten Schaltelementes
- 240: erste Sonnenwelle

- 300: Lamellen des dritten Schaltelementes
- 330: Ausgangselement des dritten Schaltelementes

- 400: Lamellen des vierten Schaltelementes
- 430: Ausgangselement des vierten Schaltelementes

- 500: Lamellen des fünften Schaltelementes
- 510: Servoeinrichtung des fünften Schaltelementes
- 511: Druckraum der Servoeinrichtung des fünften Schaltelementes
- 512: Druckausgleichsraum der Servoeinrichtung des fünften Schaltelementes
- 513: Rückstellelement der Servoeinrichtung des fünften Schaltelementes
- 514: Kolben der Servoeinrichtung des fünften Schaltelementes
- 515: Stauscheibe der Servoeinrichtung des fünften Schaltelementes
- 516: Druckmittelzuführung zum Druckraum der Servoeinrichtung des fünften Schaltelementes
- 517: Schmiermittelzuführung zum Druckausgleichsraum der Servoeinrichtung des fünften Schaltelementes
- 518: Stützscheibe der Servoeinrichtung des fünften Schaltelementes
- 520: Eingangselement des fünften Schaltelementes
- 521: zylindrischer Abschnitt des Eingangselementes des fünften Schaltelementes
- 522: scheibenförmiger Abschnitt des Eingangselementes des fünften Schaltelementes
- 523: Nabe des Eingangselementes des fünften Schaltelementes
- 530: Ausgangselement des fünften Schaltelementes
- 540: Stegwelle

- 600: Lamellen des sechsten Schaltelementes
- 610: Servoeinrichtung des sechsten Schaltelementes
- 611: Druckraum der Servoeinrichtung des sechsten Schaltelementes
- 612: Druckausgleichsraum der Servoeinrichtung des sechsten Schaltelementes
- 613: Rückstellelement der Servoeinrichtung des sechsten Schaltelementes
- 614: Kolben der Servoeinrichtung des sechsten Schaltelementes
- 615: Stauscheibe der Servoeinrichtung des sechsten Schaltelementes
- 616: Druckmittelzuführung zum Druckraum der Servoeinrichtung des sechsten Schaltelementes
- 617: Schmiermittelzuführung zum Druckausgleichsraum der Servoeinrichtung des sechsten Schaltelementes
- 618: Stützscheibe der Servoeinrichtung des sechsten Schaltelementes
- 620: Eingangselement des sechsten Schaltelementes
- 621: zylindrischer Abschnitt des Eingangselementes des sechsten Schaltelementes
- 622: scheibenförmiger Abschnitt des Eingangselementes des sechsten Schaltelementes
- 623: Nabe des Eingangselementes des sechsten Schaltelementes
- 630: Ausgangselement des sechsten Schaltelementes
- 640: dritte Sonnenwelle

## Patentansprüche

1. Mehrstufen-Automatgetriebe, mit einer Antriebswelle (AN), einer Abtriebswelle (AB), einem Vorschaltradsatz (VS), einem Hauptradsatz (HS) und mindestens sechs Schaltelementen (A bis F), mit folgenden Merkmalen:
• der Vorschaltradsatz (VS) ist als Doppel-Planetenradsatz ausgebildet,
• ein Ausgangselement des Vorschaltradsatzes (VS) rotiert mit einer Drehzahl, die kleiner ist als die Eingangsdrehzahl der Antriebswelle (AN),
• ein Eingangselement des Vorschaltradsatzes (VS) ist ständig mit der Antriebswelle (AN) verbunden,
• ein Element des Vorschaltradsatzes (VS) ist mit einem Getriebegehäuse (GG) des Mehrstufen-Automatgetriebes verbunden,
• der Hauptradsatz (HS) ist als gekoppelter Planetenradsatz ausgebildet mit mehreren nicht miteinander gekoppelten Eingangselementen und einem Ausgangselement,
• das Ausgangselement des Hauptradsatzes (HS) ist ständig mit der Abtriebswelle (AB) verbunden,
• ein Eingangselement (120) des ersten Schaltelementes (A) ist mit dem Ausgangselement des Vorschaltradsatzes (VS) verbunden,
• ein Ausgangselement (130) des ersten Schaltelementes (A) ist mit einem zweiten Eingangselement des Hauptradsatzes (HS) verbunden,
• ein Eingangselement (220) des zweiten Schaltelementes (B) ist mit dem Ausgangselement des Vorschattradsatzes (VS) verbunden,
• ein Ausgangselement (230) des zweiten Schaltelementes (B) ist mit einem ersten Eingangselement des Hauptradsatzes (HS) verbunden,
• ein Eingangselement des dritten Schaltelementes (C) ist mit dem Getriebegehäuse (GG) verbunden,
• ein Ausgangselement (330) des dritten Schaltelementes (C) ist mit dem ersten Eingangselement des Hauptradsatzes (HS) oder einem in einem Drehzahlplan zu diesem ersten Eingangselement benachbarten Eingangselement des Hauptradsatzes (HS) verbunden,
• ein Eingangselement des vierten Schaltelementes (D) ist mit dem Getriebegehäuse (GG) verbunden,
• ein Ausgangselement (430) des vierten Schaltelementes (D) ist mit einem dritten Eingangselement des Hauptradsatzes (HS) verbunden,
• ein Eingangselement (520) des fünften Schaltelementes (E) ist mit der Antriebswelle (AN) verbunden,
• ein Ausgangselement (530) des fünften Schaltelementes (E) ist mit dem dritten Eingangselement des Hauptradsatzes (HS) verbunden,
• ein Eingangselement (620) des sechsten Schaltelementes (F) ist mit der Antriebswelle (AN) verbunden,
• ein Ausgangselement (630) des sechsten Schaltelementes (F) ist mit dem ersten Eingangselement des Hauptradsatzes (HS) oder einem in dem Drehzahlplan zu diesem ersten Eingangselement benachbarten Eingangselement des Hauptradsatzes (HS) verbunden,
das sechste Schaltelement (F) räumlich gesehen zumindest überwiegend auf der dem Vorschaltradsatz (VS) abgewandten Seite des Hauptradsatzes (HS) angeordnet ist, **dadurch gekennzeichnet,**
**dass** das dritte Schaltelement (C) räumlich gesehen zumindest teilweise auf der dem Vorschaltradsatz (VS) abgewandten Seite des Hauptradsatzes (HS) oder zumindest teilweise radial über dem Hauptradsatz (HS) angeordnet ist.

2. Mehrstufen-Automatgetriebe nach Anspruch 1, **dadurch gekennzeichnet, dass** das sechste Schaltelement (F) nahe einer Stirnseite des Getriebegehäuses (GG) angeordnet ist.

3. Mehrstufen-Automatgetriebe nach Anspruch 1 oder 2, **dadurch gekennzeichnet,**
**dass** eine Servoeinrichtung (610) zur Betätigung eines Lamellenpaketes (600) des sechsten Schaltelementes (F) nahe an einer Stirnseite des Getriebegehäuses (GG) oder nahe an einem stirnseitigen, mit dem Getriebegehäuse (GG) verdrehfest verbundenen Gehäusedeckel (GD) angeordnet ist,
und **dass** das Lamellenpaket (600) des sechsten Schaltelementes (F) beim Schließen axial in Richtung Vorschaltradsatz (VS) bzw. axial in Richtung Hauptradsatz (HS) betätigt wird.

4. Mehrstufen-Automatgetriebe nach Anspruch 1, 2 oder 3, **dadurch gekennzeichnet, dass** die Servoeinrichtung (610) des sechsten Schaltelementes (F) räumlich gesehen zumindest weitgehend innerhalb eines als Lamellenträger ausgebildeten Eingangselement (620) des sechsten Schaltelementes (F) angeordnet ist und stets mit einer Drehzahl der Antriebswelle (AN) rotiert.

5. Mehrstufen-Automatgetriebe nach einem der Ansprüche 1 bis 4, **dadurch gekennzeichnet, dass** das Eingangselement (620) des sechsten Schaltelementes (F) an einer getriebegehäusefesten Nabe (GN) verdrehbar gelagert ist, die sich ausgehend von der hauptradsatznahen Stirnseite des Getriebegehäuses (GG) bzw. ausgehend von dem hauptradsatznahen stirnseitigen Gehäusedeckel (GD) axial in Richtung des Hauptradsatzes (HS) erstreckt, wobei eine Druckmittel-Zuführung zu einem Druckraum (611) der Servoeinrichtung (610) des sechsten Schaltelementes (F) und/oder eine Schmiermittel-Zuführung zu einem Druckausgleichsraum (612) eines dynamischen Druckausgleichs des rotierenden Druckraums (611) der Servoeinrichtung (610) des sechsten Schaltelementes (F) abschnittsweise innerhalb dieser Nabe (GN) verlaufen.

6. Mehrstufen-Automatgetriebe nach einem der Ansprüche 1 bis 5, **dadurch gekennzeichnet, dass** ein Reibelement des dritten Schaltelementes (C), insbesondere ein Lamellenpaket (300) oder ein Bremsband des dritten Schaltelementes (C), näher am Hauptradsatz (HS) und/oder näher am Vorschaltradsatz (VS) angeordnet ist als das Lamellenpaket (600) des sechsten Schaltelementes (F).

7. Mehrstufen-Automatgetriebe nach einem der Ansprüche 1 bis 6, **dadurch gekennzeichnet, dass** die Lamellenpakete (300, 600) des dritten und sechsten Schaltelementes (C, F) axial nebeneinander angeordnet sind.

8. Mehrstufen-Automatgetriebe nach einem der Ansprüche 1 bis 5, **dadurch gekennzeichnet, dass** ein Reibelement des dritten Schaltelementes (C), insbesondere ein Lamellenpaket (300) oder ein Bremsband des dritten Schaltelementes (C), in axialer Richtung gesehen in einem Bereich radial über dem sechsten Schaltelementes (F) angeordnet ist, insbesondere in einem Bereich radial über dem Lamellenpaket (600) des sechsten Schaltelementes (F).

9. Mehrstufen-Automatgetriebe nach einem der Ansprüche 1 bis 8, **dadurch gekennzeichnet, dass** das vierte Schaltelement (D) zumindest teilweise auf der dem Vorschaltradsatz (VS) abgewandten Seite des Hauptradsatzes (HS) angeordnet ist, insbesondere unmittelbar angrenzend an den Hauptradsatz (HS).

10. Mehrstufen-Automatgetriebe nach einem der Ansprüche 1 bis 8, **dadurch gekennzeichnet, dass** das vierte Schaltelement (D) zumindest teilweise auf der dem Vorschaltradsatz (VS) zugewandten Seite des Hauptradsatzes (HS) angeordnet ist, insbesondere unmittelbar angrenzend an den Hauptradsatz (HS).

11. Mehrstufen-Automatgetriebe nach einem der Ansprüche 1 bis 10, **dadurch gekennzeichnet, dass** das vierte Schaltelement (D) näher am Vorschaltradsatz (VS) angeordnet ist als das dritte Schaltelement (C).

12. Mehrstufen-Automatgetriebe nach einem der Ansprüche 1 bis 11, **dadurch gekennzeichnet, dass** das fünfte Schaltelement (E) auf der Seite des Hauptradsatzes (HS) angeordnet ist, die dem sechsten Schaltelement (F) gegenüberliegt.

13. Mehrstufen-Automatgetriebe nach einem der Ansprüche 1 bis 12, **dadurch gekennzeichnet,**
**dass** das erste Schaltelement (A) näher am Hauptradsatz (HS) angeordnet ist als das zweite Schaltelement (B),
**dass** das erste Schaltelementes (A) räumlich gesehen in einem Bereich axial zwischen Vorschaltradsatz (VS) und Hauptradsatz (HS) angeordnet ist,
und **dass** das Lamellenpaket (500) des fünften Schaltelementes (E) räumlich gesehen in einem Bereich axial zwischen dem ersten Schaltelement (A) und dem Hauptradsatz (HS) angeordnet ist.

14. Mehrstufen-Automatgetriebe nach einem der Ansprüche 1 bis 13, **dadurch gekennzeichnet, dass** ein Lamellenpaket (100) des ersten Schaltelementes (A) und/oder ein Lamellenpaket (200) des zweiten Schaltelementes (B) räumlich gesehen zumindest teilweise in einem Bereich radial über dem fünften Schaltelement (E) angeordnet sind.

15. Mehrstufen-Automatgetriebe nach einem der Ansprüche 1 bis 11, **dadurch gekennzeichnet, dass** das fünfte Schaltelement (E) auf der dem Vorschaltradsatz (VS) abgewandten Seite des Hauptradsatzes (HS) angeordnet ist.

16. Mehrstufen-Automatgetriebe nach Anspruch 15, **dadurch gekennzeichnet, dass** das fünfte und sechste Schaltelement (E, F) eine Baugruppe bilden mit einem gemeinsamen Lamellenträger (ZYLEF), der mit der Antriebswelle (AN) verbunden ist, und an dem die Servoeinrichtungen (510, 610) des fünften und sechsten Schaltelementes (E, F) axial verschiebbar gelagert sind.

17. Mehrstufen-Automatgetriebe nach Anspruch 15 oder 16, **dadurch gekennzeichnet, dass** die Servoeinrichtung (510) des fünften Schaltelementes (E) nur über eine Mantelfläche des für das fünfte und sechste Schaltelement (E, F) gemeinsamen Lamellenträgers (ZYLEF) von der Servoeinrichtung (610) des sechsten Schaltelementes (F) getrennt ist.

18. Mehrstufen-Automatgetriebe nach Anspruch 15, 16 oder 17, **dadurch gekennzeichnet, dass** der für das fünfte und sechste Schaltelement (E, F) gemeinsame Lamellenträgers (ZYLEF) an dem getriebegehäusefesten Gehäusedeckel (GD) oder einer getriebegehäusefesten Wand oder einer getriebegehäusefesten Nabe verdrehbar gelagert ist, wobei eine Druckmittel-Zuführung zu Druckräumen (511, 611) der Servoeinrichtungen (510, 610) des fünften und sechsten Schaltelementes (E, F) und/oder eine Schmiermittel-Zuführung zu Druckausgleichsräumen (512, 612) der Servoeinrichtungen (510, 610) des fünften und sechsten Schaltelementes (E, F) zum dynamischen Druckausgleich dieser rotierenden Druckräume (511, 611) abschnittsweise innerhalb dieses Gehäusedeckels (GD) bzw. dieser getriebegehäusefesten Wand bzw. dieser getriebegehäusefesten Nabe verlaufen.

19. Mehrstufen-Automatgetriebe nach einem der Ansprüche 15 bis 18, **dadurch gekennzeichnet, dass** ein Lamellenpaket (500) des fünften Schaltelementes (E) räumlich gesehen zumindest überwiegend radial über dem Lamellenpaket (600) des sechsten Schaltelementes (F) angeordnet ist.

20. Mehrstufen-Automatgetriebe nach einem der Ansprüche 15 bis 19, **dadurch gekennzeichnet, dass** die Servoeinrichtung (610) des sechsten Schaltelementes (F) näher am Hauptradsatz (HS) angeordnet ist als eine Servoeinrichtung (510) des fünften Schaltelementes (E), insbesondere dass ein Druckraum (611) der Servoeinrichtung (610) des sechsten Schaltelementes (F) näher am Hauptradsatz (HS) angeordnet ist als ein Druckraum (511) der Servoeinrichtung (510) des fünften Schaltelementes (E).

21. Mehrstufen-Automatgetriebe nach einem der Ansprüche 15 bis 18, **dadurch gekennzeichnet, dass** ein Lamellenpaket (600) des sechsten Schaltelementes (F) räumlich gesehen zumindest überwiegend radial über dem Lamellenpaket (500) des fünften Schaltelementes (E) angeordnet ist.

22. Mehrstufen-Automatgetriebe nach einem der Ansprüche 15 bis 18 oder 20 oder 21, **dadurch gekennzeichnet, dass** eine Servoeinrichtung (510) des fünften Schaltelementes (E) näher am Hauptradsatz (HS) angeordnet ist als die Servoeinrichtung (610) des sechsten Schaltelementes (F), insbesondere dass ein Druckraum (511) der Servoeinrichtung (510) des fünften Schaltelementes (E) näher am Hauptradsatz (HS) angeordnet ist als ein Druckraum (611) der Servoeinrichtung (610) des sechsten Schaltelementes (F).

23. Mehrstufen-Automatgetriebe nach einem der Ansprüche 1 bis 22, **dadurch gekennzeichnet, dass** eine Servoeinrichtung (510) zur Betätigung eines Lamellenpaketes (500) des fünften Schaltelementes (E) auf der dem Hauptradsatz (HS) abgewandten Seite dieses Lamellenpaketes (500) angeordnet ist und dieses Lamellenpaket (500) beim Schließen axial in Richtung des Hauptradsatzes (HS) betätigt.

24. Mehrstufen-Automatgetriebe nach einem der Ansprüche 1 bis 23, **dadurch gekennzeichnet, dass** das erste Schaltelement (A) näher am Hauptradsatz (HS) angeordnet ist als das zweite Schaltelement (B), wobei dass das erste Schaltelementes (A) räumlich gesehen in einem Bereich axial zwischen Vorschaltradsatz (VS) und Hauptradsatz (HS) angeordnet ist.

25. Mehrstufen-Automatgetriebe nach einem der Ansprüche 1 bis 24, **dadurch gekennzeichnet, dass** der Vorschaltradsatz (VS) ein Sonnenrad (SO_VS), ein Hohlrad (HO_VS) sowie einen gekoppelten Steg (ST_VS), an dem innere und äußere Planetenräder (P1_VS, P2_VS) verdrehbar gelagert sind, aufweist, wobei
• die inneren Planetenräder (P1_VS) des Vorschaltradsatzes (VS) mit dem Sonnenrad (SO_VS) und den äußeren Planetenrädern (P2_VS) des Vorschattradsatzes (VS) kämmen,
• die äußeren Planetenräder (P2_VS) des Vorschaltradsatzes (VS) mit den inneren Planetenräder (P1_VS) und dem Hohlrad (HO_VS) des Vorschaltradsatzes (HS) kämmen,
• der Steg (ST_VS) des Vorschaltradsatzes (VS) das ständig mit der Antriebswelle (AN) verbundene Eingangselement des Vorschaltradsatzes (VS) bildet,
• das Hohlrad (HO_VS) des Vorschaltradsatzes (VS) das mit Eingangselementen des Hauptradsatzes (HS) verbindbare Ausgangselement des Vorschaltradsatzes (VS) bildet und
• das Sonnenrad (SO_VS) des Vorschaltradsatzes (VS) am Getriebegehäuse (GG) festgesetzt ist,
und dass der Hauptradsatz (HS) als Zweisteg-Vierwellen-Getriebe in Bauart eines Ravigneaux-Radsatzes ausgeführt ist mit zwei Sonnenrädern (S1_HS, S2_HS), einem Hohlrad (HO_HS), sowie einem gekoppelten Steg (ST_HS), an dem lange Planetenräder (P1_HS) und kurze Planetenräder (P2_HS) verdrehbar gelagert sind, wobei
• die langen Planetenräder (P1_HS) des Hauptradsatzes (HS) mit dem Hohlrad (HO_HS) und dem ersten Sonnenrad (S1_HS) des Hauptradsatzes (HS) kämmen,
• die kurzen Planetenräder (P2_HS) des Hauptradsatzes (HS) mit den langen Planetenräder (P1_HS) und dem zweiten Sonnenrad (S2_HS) des Hauptradsatzes (HS) kämmen,
• das erste Sonnenrad (S1_HS) des Hauptradsatzes (HS) das erste Eingangselement des Hauptradsatzes (HS) bildet und mit den Ausgangselementen (230, 330, 630) des zweiten, dritten und sechsten Schaltelementes (B, C, F) verbunden ist,
• das zweite Sonnenrad (S2_HS) des Hauptradsatzes (HS) das zweite Eingangselement des Hauptradsatzes (HS) bildet und mit dem Ausgangselement (130) des ersten Schaltelementes (A) verbunden ist,
• der Steg (ST_HS) des Hauptradsatzes (HS) das dritte Eingangselement des Hauptradsatzes (HS) bildet und mit den Ausgangselementen (430, 530) des vierten und fünften Schaltelementes (D, E) verbunden ist und
• das Hohlrad (HO_HS) des Hauptradsatzes (HS) das Ausgangselement des Hauptradsatzes (HS) bildet und mit der Abtriebswelle (AB) verbunden ist.

26. Mehrstufen-Automatgetriebe nach einem der Ansprüche 1 bis 24, **dadurch gekennzeichnet,**
**dass** der Vorschaltradsatz (VS) ein Sonnenrad (SO_VS), ein Hohlrad (HO_VS) sowie einen gekoppelten Steg (ST_VS), an dem innere und äußere Planetenräder (P1_VS, P2_VS) verdrehbar gelagert sind, aufweist, wobei
• die inneren Planetenräder (P1_VS) des Vorschaltradsatzes (VS) mit dem Sonnenrad (SO_VS) und den äußeren Planetenrädern (P2_VS) des Vorschaltradsatzes (VS) kämmen,
• die äußeren Planetenräder (P2_VS) des Vorschaltradsatzes (VS) mit den inneren Planetenräder (P1_VS) und dem Hohlrad (HO_VS) des Vorschaltradsatzes (HS) kämmen,
• der Steg (ST_VS) des Vorschaltradsatzes (VS) das ständig mit der Antriebswelle (AN) verbundene Eingangselement des Vorschaltradsatzes (VS) bildet,
• das Hohlrad (HO_VS) des Vorschaltradsatzes (VS) das mit Eingangselementen des Hauptradsatzes (HS) verbindbare Ausgangselement des Vorschaltradsatzes (VS) bildet und
• das Sonnenrad (SO_VS) des Vorschaltradsatzes (VS) am Getriebegehäuse (GG) festgesetzt ist,
und **dass** der Hauptradsatz (HS) als Zweisteg-Vierwellen-Getriebe mit zwei gekoppelten Einzel-Planetenradsätzen ausgeführt ist, umfassend zwei Sonnenräder (S1_HS, S2_HS), zwei Hohlräder (H1_HS, H2_HS), einen ersten Steg (ST1_HS), an dem erste Planetenräder (PL_HS) verdrehbar gelagert sind, sowie einen gekoppelten zweiten Steg (ST2_HS), an dem innere und äußere Planetenräder (PLi_HS, PLa_HS) verdrehbar gelagert sind, wobei
• die ersten Planetenräder (PL_HS) des Hauptradsatzes (HS) mit dem ersten Hohlrad (H1_HS) und dem ersten Sonnenrad (S1_HS) des Hauptradsatzes (HS) kämmen,
• die inneren Planetenräder (PLi_HS) des Hauptradsatzes (HS) mit den äußeren Planetenräder (PLa_HS) und dem zweiten Sonnenrad (S2_HS) des Hauptradsatzes (HS) kämmen,
• die äußeren Planetenräder (PLa_HS) des Hauptradsatzes (HS) mit den inneren Planetenräder (PLi_HS) und dem zweiten Hohlrad (H2_HS) des Hauptradsatzes (HS) kämmen,
• das erste Sonnenrad (S1_HS) und der gekoppelte zweite Steg (ST2_HS) des Hauptradsatzes (HS) miteinander verbunden sind und das erste Eingangselement des Hauptradsatzes (HS) bilden und mit den Ausgangselementen (230, 330, 630) des zweiten, dritten und sechsten Schaltelementes (B, C, F) verbunden sind,
• das zweite Sonnenrad (S2_HS) des Hauptradsatzes (HS) das zweite Eingangselement des Hauptradsatzes (HS) bildet und mit dem Ausgangselement (130) des ersten Schaltelementes (A) verbunden ist,
• der erste Steg (ST1_HS) und das zweite Hohlrad (H2_HS) des Hauptradsatzes (HS) miteinander verbunden sind und das dritte Eingangselement des Hauptradsatzes (HS) bilden und mit den Ausgangselementen (430, 530) des vierten und fünften Schaltelementes (D, E) verbunden sind und
• das erste Hohlrad (H1_HS) des Hauptradsatzes (HS) das Ausgangselement des Hauptradsatzes (HS) bildet und mit der Abtriebswelle (AB) verbunden ist.

27. Mehrstufen-Automatgetriebe nach einem der Ansprüche 1 bis 24, **dadurch gekennzeichnet,**
**dass** der Vorschaltradsatz (VS) ein Sonnenrad (SO_VS), ein Hohlrad (HO_VS) sowie einen gekoppelten Steg (ST_VS) aufweist, an dem innere und äußere Planetenräder (P1_VS, P2_VS) verdrehbar gelagert sind, wobei
• die inneren Planetenräder (P1_VS) des Vorschaltradsatzes (VS) mit dem Sonnenrad (SO_VS) und den äußeren Planetenrädern (P2_VS) des Vorschaltradsatzes (VS) kämmen,
• die äußeren Planetenräder (P2_VS) des Vorschaltradsatzes (VS) mit den inneren Planetenräder (P1_VS) und dem Hohlrad (HO_VS) des Vorschaltradsatzes (HS) kämmen,
• der Steg (ST_VS) des Vorschaltradsatzes (VS) das ständig mit der Antriebswelle (AN) verbundene Eingangselement des Vorschaltradsatzes (VS) bildet,
• das Hohlrad (HO_VS) des Vorschaltradsatzes (VS) das mit Eingangselementen des Hauptradsatzes (HS) verbindbare Ausgangselement des Vorschaltradsatzes (VS) bildet und
• das Sonnenrad (SO_VS) des Vorschaltradsatzes (VS) am Getriebegehäuse festgesetzt ist,
und **dass** der Hauptradsatz (HS) als Dreisteg-Fünfwellen-Getriebe ausgeführt ist mit drei Sonnenrädern (S1_HS, S2_HS, S3_HS), einem gekoppelten Hohlrad (H13_HS), einem zweiten Hohlrad (H2_HS), einem gekoppelten Steg (ST13_HS) mit daran verdrehbar gelagerten langen Planetenrädern (P13_HS), sowie mit einem zweiten Steg (ST2_HS) mit daran verdrehbar gelagerten kurzen Planetenrädern (P2_HS), wobei
• das erste Sonnenrad (S1_HS) des Hauptradsatzes (HS) axial zwischen dem zweiten und dritten Sonnenrad (S2_HS, S3_HS) des Hauptradsatzes (HS) angeordnet ist,
• die langen Planetenräder (P13_HS) des Hauptradsatzes (HS) mit dem gekoppelten Hohlrad (H13_HS) und dem ersten und dritten Sonnenrad (S1_HS, S3_HS) des Hauptradsatzes (HS) kämmen,
• die kurzen Planetenräder (P2_HS) des Hauptradsatzes (HS) mit dem zweiten Hohlrad (H2_HS) und dem zweiten Sonnenrad (S2_HS) des Hauptradsatzes (HS) kämmen,
• das erste und zweite Sonnenrad (S1_HS, S2_HS) des Hauptradsatzes (HS) fest miteinander verbunden sind und das erste Eingangselement des Hauptradsatzes (HS) bilden und mit dem Ausgangselement (230) des zweiten Schaltelementes (B) verbunden sind,
• das zweite Hohlrad (H2_HS) des Hauptradsatzes (HS) das zweite Eingangselement des Hauptradsatzes (HS) bildet und mit dem Ausgangselement (130) des ersten Schaltelementes (A) verbunden ist,
• der gekoppelte Steg (ST13_HS) des Hauptradsatzes (HS) das dritte Eingangselement des Hauptradsatzes (HS) bildet und mit den Ausgangselementen (430, 530) des vierten und fünften Schaltelementes (D, E) verbunden ist,
• das dritte Sonnenrad (S3_HS) des Hauptradsatzes (HS) ein viertes Eingangselement des Hauptradsatzes (HS) bildet und mit den Ausgangselement (330, 630) des dritten und sechsten Schaltelementes (C, F) verbunden ist und
• das gekoppelte Hohlrad (H13_HS) und der zweite Steg (ST2_HS) des Hauptradsatzes (HS) fest miteinander verbunden sind und das Ausgangselement des Hauptradsatzes (HS) bilden und mit der Abtriebswelle (AB) verbunden sind.

28. Mehrstufen-Automatgetriebe nach Anspruch 27, **dadurch gekennzeichnet, dass** der gekoppelte Steg (ST13_HS) des Hauptradsatzes (HS) ein Stegblech aufweist, welches in radialer Richtung axial zwischen dem ersten und dritten Sonnenrad (S1_HS, S3_HS) des Hauptradsatzes (HS) nach innen hindurchgreift, wobei eine mit dem Ausgangselement (530) des fünften Schaltelementes (E) verdrehfest verbundene Nabe dieses Stegblechs oder eine mit diesem Stegblech und dem Ausgangselement (530) des fünften Schaltelementes (E) verdrehfest verbundene Stegwelle (540) entweder das erste und zweite Sonnenrad (S1_HS, S2_HS) des Hauptradsatzes (HS) oder aber das dritte Sonnenrad (S3_HS) des Hauptradsatzes (HS) in axialer Richtung zentrisch durchdringt.

29. Mehrstufen-Automatgetriebe nach einem der vorigen Ansprüche, **dadurch gekennzeichnet, dass** durch selektives Schließen der Schaltelemente (A bis F) zumindest acht Vorwärtsgänge derart schaltbar sind, dass die Drehzahl der Antriebswelle (AN) derart auf die Abtriebswelle (AB) übertragbar ist, dass zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird, wobei
• in einem ersten Vorwärtsgang das erste und vierte Schaltelement (A, D),
• in einem zweiten Vorwärtsgang das erste und dritte Schaltelement (A, C),
• in einem dritten Vorwärtsgang das erste und zweite Schaltelement (A, B),
• in einem vierten Vorwärtsgang das erste und sechste Schaltelement (A, F),
• in einem fünften Vorwärtsgang das erste und fünfte Schaltelement (A, E),
• in einem sechsten Vorwärtsgang das fünfte und sechste Schaltelement (E, F),
• in einem siebten Vorwärtsgang das zweite und fünfte Schaltelement (B, E) und
• in einem achten Vorwärtsgang das dritte und fünfte Schaltelement (C, E) geschlossen sind
und wobei in einem Rückwärtsgang das vierte Schaltelement (D) und zusätzlich entweder das zweite Schaltelement (B) oder das sechste Schaltelement (F) geschlossen sind.

## Claims

1. Multistep automatic transmission with a drive shaft (AN), an output shaft (AB), a front-mounted gearset (VS), a main gearset (HS) and a minimum of six shifting components (A through F), with the following features:
• The front-mounted gearset (VS) is designed as a dual planetary gearset.
• One output element of the front-mounted gearset (VS) rotates at a speed lower than the input speed of the drive shaft (AN).
• One input element of the front-mounted gearset (VS) is permanently linked to the drive shaft (AN).
• One element of the front-mounted gearset (VS) is linked to a transmission housing (GG) of the multistep automatic transmission.
• The main gearset (HS) is designed as a coupled planetary gearset with a number of input elements, which are not coupled to each other, and one output element.
• The output element of the main gearset (HS) is permanently linked to the output shaft (AB).
• One input element (120) of the first shifting component (A) is linked to the output element of the front-mounted gearset (VS).
• One output element (130) of the first shifting component (A) is linked to a second input element of the main gearset (HS).
• One input element (220) of the second shifting component (B) is linked to the output element of the front-mounted gearset (VS).
• One output element (230) of the second shifting component (B) is linked to a first input element of the main gearset (HS).
• One input element of the third shifting component (C) is linked to the transmission housing (GG).
• One output element (330) of the third shifting component (C) is linked to the first input element of the main gearset (HS) or to an input element of the main gearset (NS) adjacent to this first input element in a speed diagram.
• One input element of the fourth shifting component (D) is linked to the transmission housing (GG).
• One output element (430) of the fourth shifting component (D) is linked to a third input element of the main gearset (HS).
• One input element (520) of the fifth shifting component (E) is linked to the input shaft (AN).
• One output element (530) of the fifth shifting component (E) is linked to the third input element of the main gearset (HS).
• One input element (620) of the sixth shifting component (F) is linked to the drive shaft (AN).
• One output element (630) of the sixth shifting component (F) is linked to the first input element of the main gearset (HS) or to an input element of the main gearset (HS) adjacent to this first input element in the speed diagram, the sixth shifting component (F), spatially seen, being arranged chiefly on the side of the main gearset (HS) not facing the front-mounted gearset (VS), **characterized in that** the third shifting component (C), spatially seen, is arranged at least partially on the side of the main gearset (HS) not facing the front-mounted gearset (VS) or at least partially radially above the main gearset (HS).

2. Multistep automatic transmission according to claim 1, **characterized in that** the sixth shifting component (F) is arranged near a face of the transmission housing (GG).

3. Multistep automatic transmission according to claim 1 or 2, **characterized in that**
a servo unit (610) for actuation of a disk set (600) of the sixth shifting component (F) is arranged near a face of the transmission housing (GG) or near to a face-side housing cover (GD) which is nonrotationally connected to the transmission housing (GG),
and that the disk set (600) of the sixth shifting component (F) is actuated axially towards the front-mounted gearset (VS) or axially towards the main gearset (HS).

4. Multistep automatic transmission according to claim 1, 2 or 3, **characterized in that** t h e servo unit (610) of the sixth shifting component (F), spatially seen, is arranged at least to a far extent within a disk-carrier-shaped input element (620) of the sixth shifting component and always rotates at a speed of the drive shaft (AN).

5. Multistep automatic transmission according to one of the claims 1 through 4, **characterized in that** the input element (620) of the sixth shifting component (F) is rotatably supported by a transmission-housing-mounted hub (GN), which extends from the main-gearset-proximal face-side of the transmission housing (GG) or from the main-gearset-proximal face-side housing cover (GD) axially towards the main gearset (HS), with a compressed-air line and/or a lubricant line running through sections of this hub (GN) to a pressure chamber (611) of the servo unit (610) of the sixth shifting component (F) and/or to a pressure compensation chamber (612) of a dynamic pressure equalization of the rotating pressure chamber (611) of the servo unit (610) of the sixth shifting component

6. Multistep automatic transmission according to one of the claims 1 through 5, **characterized in that** a friciton element of the third shifting component (C), in particular a disk set (300) or a brake band of the third shifting component (C), is arranged closer to the main gearset (HS) and/orcloser to the front-mounted gearset (VS) than the disk set (600) of the sixth shifting component (F).

7. Multistep automatic transmission according to one of the claims 1 through 6, **characterized in that the disk sets** (300, 600) of the third and sixth shifting components (C, F) are arranged axially next to each other.

8. Multistep automatic transmission according to one of the claims 1 through 5, **characterized in that** a friction element of the third shifting component (C), in particular a disk set (300) or a brake band of the third shifting component (C), seen in axial direction, is arranged in an area radially above the sixth shifting component (F), in particular in an area radially above the disk set (600) of the sixth shifting component(F).

9. Multistage automatic transmission according to one of the claims 1 through 8, **characterized in that** the fourth shifting component (D) is arranged at least partially on the side of the main gearset (HS) not facing the front-mounted gearset (VS), in particular immediately adjacent to the main gearset (HS).

10. Multistep automatic transmission according to one of the claims 1 through 8, **characterized in that** the fourth **shifting component** (D) is arranged at least partially on the side of the main gearset (HS) facing the front-mounted gearset (VS), in particular immediately adjacent to the main gearset (HS).

11. Multistep automatic transmission according to one of the claims 1 through10, **characterized in that** the fourth shifting component (D) is arranged closer to the front-mounted gearset (VS) than the third shifting component (C).

12. Multistep automatic transmission according to one of the claims 1 through 11, **characterized in that** the fifth shifting component (E) is arranged on the side of the main gearset (HS) facing the sixth shifting component (F).

13. Multistep automatic transmission according to one of the claims 1 through 12, **characterized in that**
the first shifting component (A) is arranged closer to the main gearset (HS) than the second shifting component (B),
the first shifting component (A), spatially seen, is arranged in an area axially between the front-mounted gearset (VS) and the main gearset (HS), and that the disk set (500) of the fifth shifting component (E), spatially seen, is arranged in an area axially between the first shifting component (A) and the main gearset (HS).

14. Multistep automatic transmission according to one of the claims 1 through13, **characterized in that** one disk set (100) of the first shifting component (A) and/or one disk set (200) of the second shifting component (B), spatially seen, is/are arranged at least partially in an area radially above the fifth shifting component (E).

15. Multistep automatic transmission according to one of the claims 1 through 11, **characterized in that the fifth shifting component** (E) is arranged on the side of the main gearset (HS) not facing the front-mounted gearset (VS).

16. Multistep automatic transmission according to claim15, **characterized in that** the fifth and sixth shifting components (E, F) form an assembly with a common disk carrier (ZYLEF), which is linked to the drive shaft (AN), and on which the servo units (510, 610) of the fifth and sixth shifting components (E, F) are supported in an axially displacable manner.

17. Multistep automatic transmission according to claim 15 or 16, **characterized in that** the servo unit (510) of the fifth shifting component (E) is separated from the servo unit (610) of the sixth shifting component (F) only by a lateral area of the common disk carrier (ZYLEF) for the fifth and the sixth shifting component (E, F).

18. Multistep automatic transmission according to claim 15, 16 or 17, **characterized in that** the common disk carrier (ZYLEF) for the fifth and sixth shifting component (E, F) is rotationably supported on the transmission-housing-fixed housing cover (GD), or a transmission-housing-fixed wall, or a transmission-housing-fixed hub, with a compressed-air line and/or a lubricant line being routed through sections of this housing cover (GD) or this transmission-housing-fixed wall or this transmission-housing-fixed hub to pressure chambers (511, 611) of the servo units (510, 610) of the fifth and sixth shifting components (E, F) and/or to pressure compensation chambers (512, 612) of the servo units (510, 610) of the fifth and sixth shifting components (E, F) for dynamic pressure compensation of these rotating pressure chambers (511, 611).

19. Multistep automatic transmission according to one of the claims 15 through 18, **characterized in that** a disk set (500) of the fifth shifting component(E), spatially seen, is arranged at least chiefly radially above the disk set (600) of the sixth shifting component (F).

20. Multistep automatic transmission according to one of the claims 15 through 19, **characterized in that the servo** unit (610) of the sixth shifting component (F) is arranged closer to the main gearset (HS) than a servo unit (510) of the fifth shifting component (E), in particular that a pressure chamber (611) of the servo unit (610) of the sixth shifting component (F) is arranged closer to the main gearset (HS) than a pressure chamber (511) of the servo unit (510) of the fifth shifting component (E).

21. Multistep automatic transmission according to one of the claims 15 through 18, **characterized in that** a disk set (600) of the sixth shifting component (F), spatially seen, is arranged at least chiefly radially above the disk set (500) of the fifth shifting component (E).

22. Multistep automatic transmission according to one of the claims 15 through 18 or 20 or 21, **characterized in that** a servo unit (510) of the fifth shifting component (E) is arranged closer to the main gearset (HS) than the servo unit (610) of the sixth shifting component (F), in particular that a pressure chamber (511) of the servo unit (510) of the fifth shifting component (E) is arranged closer to the main gearset (HS) than a pressure chamber (611) of the servo unit (610) of the sixth shifting component (F).

23. Multistep automatic transmission according to one of the claims 1 through 22, **characterized in that** a servo unit (510) controlling a disk set (500) of the fifth shifting component (E) is arranged on the side of this disk set (500) not facing the main gearset (HS), and that it actuates this disk set (500) during closure axially towards the main gearset (HS).

24. Multistep automatic transmission according to one of the claims 1 through 23, **characterized in that** the first shifting component (A) is arranged closer to the main gearset (HS) than the second shifting component (B), with the first shifting component (A), spatially seen, being arranged in an area axially between front-mounted gearset (VS) and main gearset (HS).

25. Multistep automatic transmission according to one of the claims 1 through 24, **characterized in that** the front-mounted gearset (VS) features a sun gear (SO_VS), a ring gear (HO VS) and a coupled spider (ST VS), on which inner and outer planet gears (P1 VS, P2_VS) are rotatably supported, with
• the inner planet gears (P1 VS) of the front-mounted gearset (VS) meshing with the sun gear (SO_VS) and the outer planet gears (P2_VS) of the front-mounted gearset (VS);
• the outer planet gears (P2_VS) of the front-mounted gearset (VS) meshing with the inner planet gears (P1 VS) and the ring gear (HO_VS) of the front-mounted gearset (HS);
• the spider (ST_VS) of the front-mounted gearset (VS) constituting the input element of the front-mounted gearset (VS) and being permanently linked to the drive shaft (AN);
• the ring gear (HO VS) of the front-mounted gearset (VS) constituting the output element of the front-mounted gearset (VS) and being connectable to the input elements of the main gearset (HS);
• the sun gear (SO_VS) of the front-mounted gearset (VS) being fixed to the transmission housing (GG);
and the main gearset (HS) being designed as a dual-spider four-shaft transmission modelled after a Ravigneaux gearset with two sun gears (S1_HS, S2_HS), one ring gear (HO_HS) and a coupled spider (ST HS) on which long planet gears (P1_HS) and short planet gears (P2_HS) are rotatably supported, with
• the long planet gears (P1_HS) of the main gearset (NS) meshing with the ring gear (HO_VS) and the first sun gear (S1_HS) of the main gearset (HS);
• the short planet gears (P2_HS) of the main gearset (HS) meshing with the long planet gears (P1_HS) and the second sun gear (S2_HS) of the main gearset (HS);
• the first sun gear (S1_HS) of the main gearset (HS) constituting the first input element of the main gearset (HS) and being linked to the output elements (230, 330, 630) of the second, third and sixth shifting component (B, C, F);
• the second sun gear (S2_HS) of the main gearset (HS) constituting the second input element of the main gearset (HS) and being linked to the output element (130) of the first shifting component (A);
• the spider (ST_HS) of the main gearset (NS) constituting the third input element of the main gearset (HS) and being linked to the output elements (430, 530) of the fourth and fifth shifting component (D, E), and
• the ring gear (HO_HS) of the main gearset (HS) constituting the output element of the main gearset (HS) and being linked to the output shaft (AB).

26. Multistep automatic transmission according to one of the claims 1 through 24, **characterized in that the front - mounted gearset** (VS) features a sun gear (SO VS), a ring gear (HO_VS) and a coupled spider (ST VS), on which inner and outer planet gears (P1 VS, P2 VS) are rotatably supported, with
■ the inner planet gears (P1 VS) of the front-mounted gearset (VS) meshing with the sun gear (SO_VS) and the outer planet gears (P2_VS) of the front-mounted gearset (VS);
■ the outer planet gears (P2 VS) of the front-mounted gearset (VS) meshing with the inner planet gears (P1 VS) and the ring gear (HO_VS) of the front-mounted gearset (HS);
• the spider (ST VS) of the front-mounted gearset (VS) constituting the input element of the front-mounted gearset (VS) and being permanently linked to the drive shaft (AN);
• the ring gear (HO_VS) of the front-mounted gearset (VS) constituting the output element of the front-mounted gearset (VS) and being connectable to the input elements of the main gearset (HS); and
• the sun gear (SO VS) of the front-mounted gearset (VS) being fixed to the transmission housing (GG);
and the main gearset (HS) being designed as a dual-spider four-shaft transmission with two coupled single planetary gearsets, comprising two sun gears (S1_HS, S2_HS), two ring gears (H1_HS, H2_HS), a first spider (STI_HS), on which first planet gears (PL_HS) are rotatably supported, and a coupled second spider (ST2_HS), on which inner and outer planet gears (PLi_HS, PLa_HS) are rotatably supported, with
• the first planet gears (PL_HS) of the main gearset (HS) meshing with the first ring gear (H1_HS) and the first sun gear (S1_HS) of the main gearset (HS);
• the inner planet gears (PLi_HS) of the main gearset (HS) meshing with the outer planet gears (PLa_HS) and the second sun gear (S2_HS) of the main gearset (HS);
• the outer planet gears (PLa_HS) of the main gearset (HS) meshing with the inner planet gears (PLi_HS) and the second ring gear (H2_HS) of the main gearset (HS);
• the first sun gear (S1_HS) and the coupled second spider (ST2_HS) of the main gearset (HS) being linked to each other and constituting the first input element of the main gearset (HS) and being linked to the output elements (230, 330, 630) of the second, third and sixth shifting component (B, C, F);
• the second sun gear (S2_HS) of the main gearset (HS) constituting the second input element of the main gearset (HS) and being linked to the output element (130) of the first shifting component (A);
• the first spider (ST1_HS) and the second ring gear (H2_HS) of the main gearset (HS) being linked to each other and constituting the third input element of the main gearset (HS) and being linked to the output elements (430, 530) of the fourth and fifth shifting component (D, E); and
• the fist ring gear (H1_HS) of the main gearset (HS) constituting the output element of the main gearset (HS) and being linked to the drive shaft (AB).

27. Multistep automatic transmission according to one of the claims 1 through 24, **characterized in that**
the front-mounted gearset (VS) features a sun gear (SO_VS), a ring gear (HO_VS) and a coupled spider (ST VS), on which inner and outer planet gears (P1 VS, P2 VS) are rotatably supported, with
• the inner planet gears (P1 VS) of the front-mounted gearset (VS) meshing with the sun gear (SO VS) and the outer planet gears (P2 VS) of the front-mounted gearset (VS);
• the outer planet gears (P2_VS) of the front-mounted gearset (VS) meshing with the inner planet gears P1 VS) and the ring gear (HO_VS) of the front-mounted gearset (HS);
• the spider (ST VS) of the front-mounted gearset (VS) constituting the input element of the front-mounted gearset (VS) and being permanently linked to the drive shaft (AN);
• the ring gear (HO VS) of the front-mounted gearset (VS) constituting the output element of the front-mounted gearset (VS) and being connectable to the input elements of the main gearset (HS); and
• the sun gear (SO_VS) of the front-mounted gearset (VS) being fixed to the transmission housing;
and the main gearset (HS) being designed as a triple-spider five-shaft transmission with three sun gears (S1_HS, S2_HS, S3_HS), one coupled ring gear (H13_HS), a second ring gear (H2_HS), a coupled spider (ST13_HS), with long planet gears (P13_HS) being rotatably supported on it, and with a second spider (ST2_HS), with short planet gears (P2_HS) being rotatably supported on it; with
• the first sun gear (S1_HS) of the main gearset (HS) being arranged axially between the second and third sun gear (S2_HS, S3_HS) of the main gearset (HS);
• the long planet gears (P13_HS) of the main gearset (HS) meshing with the coupled ring gear (H13_HS) and the first and third sun gear (S1_HS, S3_HS) of the main gearset (HS);
• the short planet gears (P2_HS) of the main gearset (HS) meshing with the second ring gear (H2_HS) and the second sun gear (S2_HS) of the main gearset (HS);
• the first and second sun gear (S1_HS, S2_HS) of the main gearset (HS) being firmly linked to each other and constituting the first input element of the main gearset (HS) and being linked to the output element (230) of the second shifting component (B);
• the second ring gear (H2_HS) of the main gearset (HS) constituting the second input element of the main gearset (HS) and being linked to the output element (130) of the first shifting component (A);
• the coupled spider (ST13_HS) of the main gearset (HS) constituting the third input element of the main gearset (HS) and being linked to the output elements (430, 530) of the fourth and fifth shifting component (D, E);
• the third sun gear (S3_HS) of the main gearset (HS) constituting a fourth input element of the main gearset (HS) and being linked to the output elements (330, 630) of the third and sixth shifting component (C, F); and
• the coupled ring gear (H13_HS) and the second spider (ST2_HS) of the main gearset (HS) bing firmly linked to each other and constituting the output element of the main gearset (HS) and being linked to the drive shaft (AB).

28. Multistep automatic transmission according to claim 27, **characterized in that** the coupled **spider** (ST13_HS) of the main gearset (HS) features a web plate which in radial direction extends axially inward between the first and third sun gear (S1_HS, S3_HS) of the main gearset (HS), with a hub of this web plate - the hub being nonrotationally linked to the output element (530) of the fifth shifting component (E) -, or a web shaft (540), which is nonrotationally linked to this web plate and the output element (530) of the fifth shifting component(E), in axial direction centrally penetrating either the first and second sun gear (S1_HS, S2_HS) of the main gearset (HS) or the third sun gear (S3_HS) of the main gearset (HS).

29. Multistep automatic transmission according to one of the preceding claims, **characterized in that** through selective locking of the shifting components (A - F) at least eight forward gears can be shifted in such a way that the speed of the drive shaft (AN) can be transferred to the output shat (AB) in such a way that for shifting up or down to the next gear in each case only one of the shifting components being actuated is unlocked and another shifting component is locked, with
• in a first foward gear, the first and fourth shifting component (A, D),
• in a second forward gear, the first and third shifting component (A, C),
• in a third forward gear, the first and second shifting component (A, B),
• in a fourth forward gear, the first and sixth shifting component (A, F),
• a fifth forward gear, the first and fifth shifting component (A, E),
• in a sixth forward gear, the fifth and sixth shifting component (E, F),
• in a seventh forward gear, the second and fifth shifting component (B, E), and
• in an eighth forward gear, the third and fifth shifting component(C, E) being locked,
and with a reverse gear being engaged, the fourth shifting component (D) and in addition either the second shifting component (B) or the sixth shifting component (F) being locked.

## Revendications

1. Boite de vitesses automatique à étages multiples, comprenant un arbre d'entrée (AN), un arbre de sortie (AB), un train de roues amont (VS), un train de roues principal (HS) et au moins six éléments de commande (A à F), et présentant les caractéristiques suivantes :
• le train de roues amont (VS) est constitué par un train épicycloïdal double,
• un élément de sortie du train de roues amont (VS) tourne avec une vitesse de rotation qui est plus petite que la vitesse de rotation d'entrée de l'arbre d'entrée (AN),
• un élément d'entrée du train de roues amont (VS) est relié en permanence à l'arbre d'entrée (AN),
• un élément du train de roues amont (VS) est relié à un carter de boite de vitesses (GG) de la boite de vitesses automatique à étages multiples,
• le train de roues principal (HS) est constitué par un train épicycloïdal couplé possédant plusieurs éléments d'entrée qui ne sont pas accouplés entre eux et un élément de sortie,
• l'élément de sortie du train de roues principal (HS) est relié en permanence à l'arbre de sortie (AB),
• un élément d'entrée (120) du premier élément de commande (A) est relié à l'élément de sortie du train de roues amont (VS),
• un élément de sortie (130) du premier élément de commande (A) est relié à un deuxième élément d'entrée du train de roues principal (HS),
• un élément d'entrée (220) du deuxième élément de commande (B) est relié à l'élément de sortie du train de roues amont (VS),
• un élément de sortie (230) du deuxième élément de commande (B) est relié à un premier élément d'entrée du train de roues principal (HS),
• un élément d'entrée du troisième élément de commande (C) est relié au carter de boite de vitesses (GG),
• un élément de sortie (330) du troisième élément de commande (C) est relié au premier élément d'entrée du train de roues principal (HS) ou à un élément d'entrée du train de roues principal (HS) voisin de ce premier élément d'entrée dans un plan de vitesse de rotation,
• un élément d'entrée du quatrième élément de commande (D) est relié au carter de boite de vitesses (GG),
• un élément de sortie (430) du quatrième élément de commande (D) est relié à un troisième élément d'entrée du train de roues principal (HS),
• un élément d'entrée (520) du cinquième élément de commande (E) est relié à l'arbre d'entrée (AN),
• un élément de sortie (530) du cinquième élément de commande (E) est relié au troisième élément d'entrée du train de roues principal (HS),
• • un élément d'entrée (620) du sixième élément de commande (F) est relié à l'arbre d'entrée (AN),
• un élément de sortie (630) du sixième élément de commande (F) est relié au premier élément d'entrée du train de roues principal (HS) ou à un élément d'entrée du train de roues principal (HS) qui est voisin de ce premier élément d'entrée dans le plan de vitesse de rotation,
• le sixième élément de commande (F) est disposé, vu dans l'espace, du moins en majeure partie, sur le côté du train de roues principal (HS) qui est éloigné du train de roues amont (VS)
**caractérisée**
**en ce que** le troisième élément de commande (C) est disposé, vu dans l'espace, du moins en majeure partie, sur le côté du train de roues principal (HS) qui est éloigné du train de roues amont (VS) ou, du moins en majeure partie, radialement au-delà du train de roues principal (HS).

2. Boite de vitesses automatique à étages multiples selon la revendication 1, **caractérisée en ce que** le cinquième élément de commande (F) est disposé près d'un côté frontal du carter de boîte de vitesses (GG).

3. Boîte de vitesses automatique à étages multiples selon la revendication 1 ou 2,
**caractérisée**
**en ce qu'**un servodispositif (610) destiné à l'actionnement d'un paquet de disques (600) du sixième élément de commande (F) est disposé près d'un côté frontal du carter de boîte de vitesses (GG) ou près d'un couvercle côté frontal (GD) du carter relié solidairement en rotation au carter de boîte de vitesses (GG),
et **en ce que** le paquet de disques (600) du sixième élément de commande (F) est actionné, lors de la fermeture axialement en direction du train de roues amont (VS) ou axialement en direction du train de roues principal (HS).

4. Boîte de vitesses automatique à étages multiples selon la revendication 1, 2 ou 3, **caractérisée en ce que** le servodispositif (610) du sixième élément de commande (F) est disposé, vu dans l'espace, du moins en grande partie à l'intérieur d'un élément d'entrée (620) du sixième élément de commande (F) constitué par un paquet de disques, et tourne en permanence avec la vitesse de rotation de l'arbre d'entrée (AN).

5. Boîte de vitesses automatique à étages multiples selon l'une des revendications 1 à 4, **caractérisée en ce que** l'élément d'entrée (620) du sixième élément de commande (F) est monté rotatif sur un moyeu (GN) solidaire du carter de boîte de vitesses qui s'étend axialement en direction du train de roues principal (HS) en partant du côté frontal du carter de boîte de vitesses (GG) qui est proche du train de roues principal ou en partant du couvercle côté frontal (GD) du carter qui est proche du train de roues principal (HS), une arrivée de milieu sous pression aboutissant à une chambre de pression (611) du servodispositif (610) du sixième élément de commande (F), et/ou une arrivée de milieu lubrifiant aboutissant à une chambre de compensation de pression (612) d'une compensation de pression dynamique de la chambre de pression rotative (611) du servodispositif (610) du sixième élément de commande (F) s'étendant par endroits à l'intérieur de ce moyeu (GN).

6. Boîte de vitesses automatique à étages multiples selon l'une des revendications 1 à 5, **caractérisée en ce qu'**un élément de friction du troisième élément de commande (C), en particulier un paquet de disques (300) ou un frein à bande du troisième élément de commande (C) est disposé plus près du train de roues principal (HS) et/ou plus près du train de roues amont (VS) que le paquet de disques (600) du sixième (F).

7. Boîte de vitesses automatique à étages multiples selon l'une des revendications 1 à 6, **caractérisée en ce que** les paquets de disques (300, 600) des troisième et sixième éléments de commande (C, F) sont disposés axialement l'un à côté de l'autre.

8. boîte de vitesses automatique à étages multiples selon l'une des revendications 1 à 5, **caractérisée en ce qu'**un élément de friction du troisième élément de commande (C), en particulier un paquet de disques (600) (300) ou un frein à bande du troisième élément de commande (C) est disposé, vu dans l'espace, dans une région située radialement au-delà du sixième élément de commande (F), en particulier dans une région située radialement au-delà du paquet de disques (600) du sixième élément de commande (F).

9. Boîte de vitesses automatique à étages multiples selon l'une des revendications 1 à 8, **caractérisée en ce que** le quatrième élément de commande (D) est disposé, du moins en partie, sur le côté du train de roues principal (HS) qui est éloigné du train de roues amont (VS), en particulier immédiatement adjacent au train de roues principal (HS).

10. Boîte de vitesses automatique à étages multiples selon l'une des revendications 1 à 8, **caractérisée en ce que** le quatrième élément de commande (D) est disposé, du moins en partie, sur le côté du train de roues principal (HS) qui est dirigé vers le train de roues amont (VS), en particulier immédiatement adjacent au train de roues principal (HS).

11. Boîte de vitesses automatique à étages multiples selon l'une des revendications 1 à 10, **caractérisée en ce que** le quatrième élément de commande (D) est disposé plus près train de roues amont (VS) que le troisième élément de commande (C).

12. Boîte de vitesses automatique à étages multiples selon l'une des revendications 1 à 11, **caractérisée en ce que** le cinquième élément de commande (E) est disposé sur le côté du train de roues principal (HS) qui fait face au sixième élément de commande (F).

13. Boîte de vitesses automatique à étages multiples selon l'une des revendications 1 à 12, **caractérisée**
**en ce que** le premier élément de commande (A) est disposé plus près du train de roues principal (HS) que le deuxième élément de commande (B),
**en ce que** le premier élément de commande (A) est disposé, vu dans l'espace, dans une région située axialement entre le train de roues amont (VS) et le train de roues principal (HS),
et **en ce que** le paquet de disques (500) du cinquième élément de commande (E) est disposé, vu dans l'espace, dans une région située axialement entre le premier élément de commande (A) et le train de roues principal (HS).

14. Boîte de vitesses automatique à étages multiples selon l'une des revendications 1 à 13, **caractérisée en ce qu'**un paquet de disques (100) du premier élément de commande (A) et/ou un paquet de disques (200) du deuxième élément de commande (B) est ou sont disposés, vu(s) dans l'espace, du moins en partie, dans une région située radialement au-delà du cinquième élément de commande (E).

15. Boîte de vitesses automatique à étages multiples selon l'une des revendications 1 à 11, **caractérisée en ce que** le cinquième élément de commande (E) est disposé sur le côté du train de roues principal (HS) qui est éloigné du train de roues amont (VS).

16. Boîte de vitesses automatique à étages multiples selon la revendication 15, **caractérisée en ce que** les cinquième et sixième éléments de commande (E, F) forment un groupe comprenant un support de disques commun (ZYLEF) qui est relié à l'arbre d'entrée (AN) et sur lequel les servodispositifs (510, 610) des cinquième et sixième éléments de commande (E, F) sont montés mobiles en translation axiale.

17. Boîte de vitesses automatique à étages multiples selon la revendication 15 ou 16, **caractérisée en ce que** le servodispositif (510) du cinquième élément de commande (E) n'est séparé du servodispositif (610) du sixième élément de commande (F) que par une surface latérale du support de disques (ZYLF_F) commun aux cinquième et sixième éléments de commande (E, F).

18. Boîte de vitesses automatique à étages multiples selon la revendication 15, 16 ou 17, **caractérisée en ce que** le support de disques (ZYLEF) commun aux cinquième et sixième éléments de commande (E, F) est monté rotatif sur le couvercle de carter (GD) solidaire du carter de boîte de vitesses ou sur une paroi solidaire du carter de boîte de vitesses ou sur un moyeu solidaire du carter de boîte de vitesses, une arrivée de milieu sous pression aboutissant aux chambres de pression (511, 611) des servodispositifs (510, 610) des cinquième et sixième éléments de commande (E, F) et/ou une arrivée de milieu lubrifiant aboutissant aux chambres de compensation de pression (512, 612) des servodispositifs (510, 610) des cinquième et sixième éléments de commande (E, F) pour la compensation de pression dynamique de ces chambres de pression rotatives (511, 611) s'étendent par endroits à l'intérieur de ce couvercle de carter (GD) ou de cette paroi solidaire du carter de boîte de vitesses ou de ce moyeu solidaire du carter de boîte de vitesses.

19. Boîte de vitesses automatique à étages multiples selon l'une des revendications 15 à 18, **caractérisée en ce qu'**un paquet de disques (500) du cinquième élément de commande (E) est disposé, vu dans l'espace, du moins en majeur partie, radialement au-delà du paquet de disques (600) du sixième élément de commande (F).

20. Boîte de vitesses automatique à étages multiples selon l'une des revendications 15 à 19, **caractérisée en ce que** le servodispositif (610) du sixième élément de commande (F) est disposé plus près du train de roues principal (HS) qu'un servodispositif (510) du cinquième élément de commande (E), en particulier **en ce qu'**une chambre de pression (611) du servodispositif (610) du sixième élément de commande (F) est disposée plus près du train de roues principal (HS) qu'une chambre de pression (511) du servodispositif (510) du cinquième élément de commande (E).

21. Boîte de vitesses automatique à étages multiples selon l'une des revendications 15 à 18, **caractérisée en ce qu'**un paquet de disques (600) du sixième élément de commande (F) est disposé, vu dans l'espace, du moins en majeure partie, radialement au-delà du paquet de disques (500) du cinquième élément de commande (E).

22. Boîte de vitesses automatique à étages multiples selon l'une des revendications 15 à 18 ou 20 ou 21, **caractérisée en ce qu'**un servodispositif (510) du cinquième élément de commande (E) est disposé plus près du train de roues principal (HS) que le servodispositif (610) du sixième élément de commande (F), en particulier **en ce qu'**une chambre de pression (511) du servodispositif (510) du cinquième élément de commande (E) est disposée plus près du train de roues principal (HS) qu'une chambre de pression (611) du servodispositif (610) du sixième élément de commande (F).

23. Boîte de vitesses automatique à étages multiples selon l'une des revendications 1 à 22, **caractérisée en ce qu'**un servodispositif (510) destiné à l'actionnement d'un paquet de disques (500) du cinquième élément de commande (E) est disposé sur le côté de ce paquet de disques (500) qui est éloigné du train de roues principal (HS) et actionne ce paquet de disques (500) axialement en direction du train de roues principal (HS) lors de la fermeture.

24. Boîte de vitesses automatique à étages multiples selon l'une des revendications 1 à 23, **caractérisée en ce que** le premier élément de commande (A) est disposé plus près du train de roues principal (HS) que le deuxième élément de commande (B), le premier élément de commande (A) étant disposé, vu dans l'espace, dans une région située entre le train de roues amont (VS) et le train de roues principal (HS).

25. Boîte de vitesses automatique à étages multiples selon l'une des revendications 1 à 24, **caractérisée en ce que** le train de roues amont (VS) comporte une roue planétaire (SO_VS), une couronne à denture intérieure (HO_VS), ainsi qu'un porte-satellites couplé (ST_VS) sur lequel sont montées rotatives des roues satellites intérieures et extérieures (P1_VS, P2_VS),
• les roues satellites intérieures (P1_VS) du train de roues amont (VS) engrenant avec la roue planétaire (SO_VS) et avec les roues satellites extérieures (P2_VS) du train de roues amont (VS),
• les roues satellites extérieures (P2_VS) du train de roues amont (VS) engrenant avec les roues satellites intérieures (P1_VS) et avec la couronne à denture intérieure (HO_VS) du train de roues amont (HS),
• le porte-satellites (ST_VS) du train de roues amont (VS) formant l'élément d'entrée du train de roues amont (VS) qui est relié en permanence à l'arbre d'entrée (AN),
• la couronne à denture intérieure (HO_VS) du train de roues amont (VS) formant l'élément de sortie du train de roues amont (VS) qui peut être relié à des éléments d'entrée du train de roues principal (HS), et
• la roue planétaire (SO_VS) du train de roues amont (VS) étant bloquée sur le carter de boite de vitesses (GG),
et **en ce que** le train de roues principal (HS) est réalisé sous la forme d'un mécanisme à deux porte-satellites-quatre arbres du type d'un train de Ravigneaux comprenant deux roues planétaires (S1_HS, S2_HS), une couronne à denture intérieure (HO_HS), ainsi qu'un porte-satellites couplé (ST_HS) sur lequel des roues satellites longues (P1_HS) et des roues satellites courtes (P2_HS) sont montées rotatives,
• les roues satellites longues (P1_HS) du train de roues principal (HS) engrenant avec la couronne à denture intérieure (HO_HS) et avec la première roue planétaire (S1_HS) du train de roues principal (HS),
• les roues satellites courtes (P2_HS) du train de roues principal (HS) engrenant avec les roues satellites longues (P1_HS) et avec la deuxième roue planétaire (S2_HS) du train de roues principal (HS),
• la première roue planétaire (S1_HS) du train de roues principal (HS) formant le premier élément d'entrée du train de roues principal (HS) et étant reliée aux éléments de sortie (230, 330, 630) des deuxième, troisième et sixième éléments de commande (B, C, F),
• la deuxième roue planétaire (S2_VS) du train de roues principal (HS) formant le deuxième élément d'entrée du train de roues principal (HS) et étant reliée à l'élément de sortie (130) du premier élément de commande (A),
• le porte-satellites (ST_VS) du train de roues principal (HS) formant le troisième élément d'entrée du train de roues principal (HS) et étant relié aux éléments de sortie (430, 530) des quatrième et cinquième éléments de commande (D,E), et
• la couronne à denture intérieure (HO_HS) du train de roues principal (HS) formant l'élément de sortie du train de roues principal (HS) et étant reliée à l'arbre de sortie (AB).

26. Boîte de vitesses automatique à étages multiples selon l'une des revendications 1 à 24, **caractérisée**
**en ce que** le train de roues amont (VS) comporte une roue planétaire (SO_VS), une couronne à denture intérieure (HO_VS), ainsi qu'un porte-satellites couplé (ST_VS) sur lequel sont montées rotatives des roues satellites intérieures et extérieures (P1_VS, P2_VS),
• les roues satellites intérieures (P1_VS) du train de roues amont (VS) engrenant avec la roue planétaire (SO_VS) et avec les roues satellites extérieures (P2_VS) du train de roues amont (VS),
• les roues satellites extérieures (P2_VS) du train de roues amont (VS) engrenant avec les roues satellites intérieures (P1_VS) et avec la couronne à denture intérieure (HO_VS) du train de roues amont (HS),
• le porte-satellites (ST_VS) du train de roues amont (VS) formant l'élément d'entrée du train de roues amont (VS) qui est relié en permanence à l'arbre d'entrée (AN),
• la couronne à denture intérieure (HO_VS) du train de roues amont (VS) formant l'élément de sortie du train de roues amont (VS) qui peut être relié à des éléments d'entrée du train de roues principal (HS), et
• la roue planétaire (SO_VS) du train de roues amont (VS) étant bloquée sur le carter de boite de vitesses (GG),
et **en ce que** le train de roues principal (HS) est réalisé sous la forme d'un mécanisme à deux porte-satellites-quatre arbres possédant deux trains épicycloïdaux individuels couplés, comprenant deux roues planétaires (S1_HS, S2_HS), deux couronnes à denture intérieure (H1_HS, H2_HS), un premier porte-satellites (ST1_HS) sur lequel des première roues satellites (PL_HS) sont montées rotatives, ainsi qu'un deuxième porte-satellites couplé (ST2_VS) sur lequel des roues satellites intérieures et extérieures (PLi_HS, PLa_HS) sont montées rotatives,
• les premières roues satellites (PL_HS) du train de roues principal (HS) engrenant avec la première couronne à denture intérieure (H1_HS) et avec la première roue planétaire (S1_HS) du train de roues principal (HS),
• les roues satellites intérieures (PLi_HS) du train de roues principal (HS) engrenant avec les roues satellites extérieures (PLa_HS) et avec la deuxième roue planétaire (S2_HS) du train de roues principal (HS),
• les roues satellites extérieures (PLa_HS) du train de roues principal (HS) engrenant avec les roues satellites intérieures (PLi_HS) et avec la deuxième couronne à denture intérieure (H2_HS) du train de roues principal (HS),
• la première roue planétaire (S1_HS) et le deuxième porte-satellites couplé (ST2_HS) du train de roues principal (HS) étant reliés l'un à l'autre, formant le premier élément d'entré du train de roues principal (HS) et étant reliés aux éléments de sortie (230, 330, 630) des deuxième, troisième et sixième éléments de commande (B, C, F),
• la deuxième roue planétaire (S2_HS) du train de roues principal (HS) formant le deuxième élément d'entrée du train de roues principal (HS) et étant reliée à l'élément de sortie (130) du premier élément de commande (A),
• le premier porte-satellites (ST1_HS) et la deuxième couronne à denture intérieure (H2_HS) du train de roues principal (HS) étant reliés l'un à l'autre, formant le troisième élément d'entrée du train de roues principal (HS) et étant reliés aux éléments de sortie (430, 530) des quatrième et cinquième éléments de commande (D, E), et
• la première couronne à denture intérieure (H1_HS) du train de roues principal (HS) formant l'élément de sortie du train de roues principal (HS) et étant reliée à l'arbre de sortie (AB).

27. Boîte de vitesses automatique à étages multiples selon l'une des revendications 1 à 24, **caractérisée**
**en ce que** le train de roues amont (VS) comporte une roue planétaire (SO_VS), une couronne à denture intérieure (HO_VS) ainsi qu'un porte-satellites couplé (ST_VS) sur lequel sont montées rotatives des roues satellites intérieures et extérieures (P1_VS, P2_VS),
• les roues satellites intérieures (P1_VS) du train de roues amont (VS) engrenant avec la roue planétaire (SO_VS) et avec les roues satellites extérieures (P2_VS) du train de roues amont (VS),
• les roues satellites extérieures (P2_VS) du train de roues amont (VS) engrenant avec les roues satellites intérieures (P1_VS) et avec la couronne à denture intérieure (HO_VS) du train de roues amont (HS),
• le porte-satellites (ST_VS) du train de roues amont (VS) formant l'élément d'entrée du train de roues amont (VS) qui est relié en permanence à l'arbre d'entrée (AN),
• la couronne à denture intérieure (HO_VS) du train de roues amont (VS) formant l'élément de sortie du train de roues amont (VS) qui peut être relié à des éléments d'entrée du train de roues principal (HS), et
• la roue planétaire (SO_VS) du train de roues amont (VS) étant bloquée sur le carter de boite de vitesses,
et **en ce que** le train de roues principal (HS) est réalisé sous la forme d'un mécanisme à trois porte-satellites-cinq arbres, qui comprend trois roues planétaires (S1_HS, S2_HS, S3_HS), une couronne à denture intérieure couplée (H13_HS), une deuxième couronne à denture intérieure (H2_HS), un porte-satellites couplé (ST13_HS) portant des roues satellites longues (P13_HS) montées rotatives sur lui, ainsi qu'un deuxième porte-satellites (ST2_HS) portant des roues satellites courtes (P2_HS) montées rotatives sur lui,
• la première roue planétaire (S1_HS) du train de roues principal (HS) étant disposée axialement entre les deuxième et troisième roues planétaires (S2_HS, S3_HS) du train de roues principal (HS),
• les roues satellites longues (P13_HS) du train de roues principal (HS) engrenant avec la couronne à denture intérieure couplée (H13_HS) et avec les première et troisième roues planétaires (S1_HS, S3_HS) du train de roues principal (HS),
• les roues satellites courtes (P2_HS) du train de roues principal (HS) engrenant avec la deuxième couronne à denture intérieure (H2_HS) et avec la deuxième roue planétaire (S2_HS) du train de roues principal (HS),
• les première et deuxième roues planétaires (S1_HS, S2_HS) du train de roues principal (HS) étant reliées rigidement l'une à l'autre, formant le premier élément d'entrée du train de roues principal (HS) et étant reliées à l'élément de sortie (230, 630) du deuxième élément de commande (B),
• la deuxième couronne à denture intérieure (H2_HS) du train de roues principal (HS) formant le deuxième élément d'entrée du train de roues principal (HS) et étant reliée à l'élément de sortie (130) du premier élément de commande (A),
• le porte-satellites couplé (ST13_HS) du train de roues principal (HS) formant le troisième élément d'entrée du train de roues principal (HS) et étant relié aux éléments de sortie (430, 530) des quatrième et cinquième éléments de commande (D, E),
• la troisième roue planétaire (S3_HS) du train de roues principal (HS) formant un quatrième élément d'entrée du train de roues principal (HS) et étant reliée aux éléments de sortie (330, 630) des troisième et sixième éléments de commande (C, F), et
• la couronne à denture intérieure couplée (H13_HS) et le deuxième porte-satellites (ST2_HS) du train de roues principal (HS) étant reliés rigidement l'un à l'autre, formant l'élément de sortie du train de roues principal (HS) et étant reliés à l'arbre de sortie (AB).

28. Boite de vitesses automatique à étages multiples selon la revendication 27, **caractérisée en ce que** le porte-satellites couplé (ST13_HS) du train de roues principal (HS) comporte un disque de porte-satellites qui est engagé vers l'intérieur dans la direction radiale, en s'intercalant axialement entre les première et troisième roues planétaires (S1_HS, S3_HS) du train de roues principal (HS), un moyeu de ce disque de porte-satellites relié solidairement en rotation à l'élément de sortie (530) du cinquième élément de commande (E) ou un arbre de porte-satellites relié solidairement en rotation à ce disque de porte-satellites (540) et à l'élément de sortie (530) du cinquième élément de commande (E) traversant au centre, dans la direction axiale, soit les première et deuxième roues planétaires (S1_HS, S2_HS) du train de roues principal (HS), soit encore la troisième roue planétaire (S3_HS) du train de roues principal (HS).

29. Boite de vitesses automatique à étages multiples selon l'une des revendications précédentes, **caractérisée en ce que**, par fermeture sélective des éléments de commande (A à F), on peut enclencher au moins huit vitesses de marche avant, **en ce que** la vitesse de rotation d'entrée de l'arbre d'entrée (AN) peut être transmise à l'arbre de sortie (AB) de telle manière que, pour passer d'une vitesse à la vitesse immédiatement supérieure ou à la vitesse immédiatement inférieure, parmi les éléments de commande qui sont actionnés au moment considéré, il ne se produit que l'ouverture d'un élément de commande et la fermeture d'un autre élément de commande,
• dans une première vitesse de marche avant, les premier et quatrième éléments de commande (A, D) étant fermés,
• dans une deuxième vitesse de marche avant, les premier et troisième éléments de commande (A, C) étant fermés,
• dans une troisième vitesse de marche avant, les premier et deuxième éléments de commande (A, B) étant fermés,
• dans une quatrième vitesse de marche avant, les premier et sixième éléments de commande (A, F) étant fermés,
• dans une cinquième vitesse de marche avant, les premier et cinquième éléments de commande (A, E) étant fermés,
• dans une sixième vitesse de marche avant, les cinquième et sixième éléments de commande (E, F) étant fermés,
• dans une septième vitesse de marche avant, les deuxième et cinquième éléments de commande (B, E) étant fermés,
• dans une huitième vitesse de marche avant, les troisième et cinquième éléments de commande (C, E) étant fermés,
et, dans une vitesse de marche arrière, le quatrième élément de commande (D) et, en supplément, soit le deuxième élément de commande (B), soit le sixième élément de commande (F) étant fermés.
